# NEUE EUROPÄISCHE PATENTSCHRIFT

(11) **EP 0 309 406 B2**
(45) Veröffentlichungstag und Bekanntmachung des Hinweises auf die Entscheidung über den Einspruch: **12.07.2000**
(45) Hinweis auf die Patenterteilung: 24.06.1992
(21) Anmeldenummer: 88810630.9
(22) Anmeldetag: 15.09.1988
(51) Int. Cl.: C09B 62/503, C09B 62/04, D06P 1/38

(54) **Reaktivfarbstoffe, deren Herstellung und Verwendung**
Reactive dyes, their preparation and their use
Colorants réactifs, leur préparation et leur emploi

(30) Priorität: 24.09.1987 CH 369987
(43) Veröffentlichungstag der Anmeldung: 29.03.1989
(73) Patentinhaber: Ciba Specialty Chemicals Holding Inc., 4057 Basel (CH)
(72) Erfinder: Tzikas, Athanassios, Dr., CH-4133 Pratteln (CH); Herzig, Paul, CH-4057 Basel (CH)

(56) Entgegenhaltungen:
- EP-A- 0 074 928
- EP-A- 0 210 951
- EP-A- 0 221 013
- EP-A- 0 233 139
- FR-A- 214 093

## Beschreibung

Die vorliegende Anmeldung betrifft die Verwendung neuer verbesserter Reaktivfarbstoffe, die sich für das Färben oder Bedrucken von cellulosehaltigen Fasermaterialien nach den für Reaktivfarbstoffe gebräuchlichen Verfahren eignen, und die nass- und lichtechte Färbungen ergeben; die noch neuen Reaktivfarbstoffe und Verfahren zur Herstellung dieser Farbstoffe. Die EP-A-0 233 139 beschreibt bisreaktive Farbstoffe vom Bisvinylsulfonyltyp, weiche ausserdem eine an den Triazinring gebundene Hydroxygruppe aufweisen. Entsprechende Fluor- oder Chlortriazin-Zwischenprodukte werden in der EP-A nicht zum Färben oder Bedrucken eingesetzt oder empfohlen. Weiterhin werden in der obigen EP-A auch Zwischenprodukte der Formel 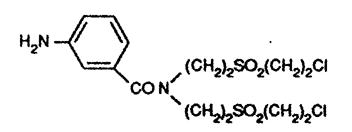 offenbart, die eine symmetrisch-substituierte reaktive Aminogruppe enthalten.

Gegenstand der Erfindung ist die Verwendung der Reaktivfarbstoffe der Formel

D(̵U-A)₁₋₂ (1),

worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes; -U-A einen Rest der Formel

-CO-A (2a),

-B-CO-A (2b),

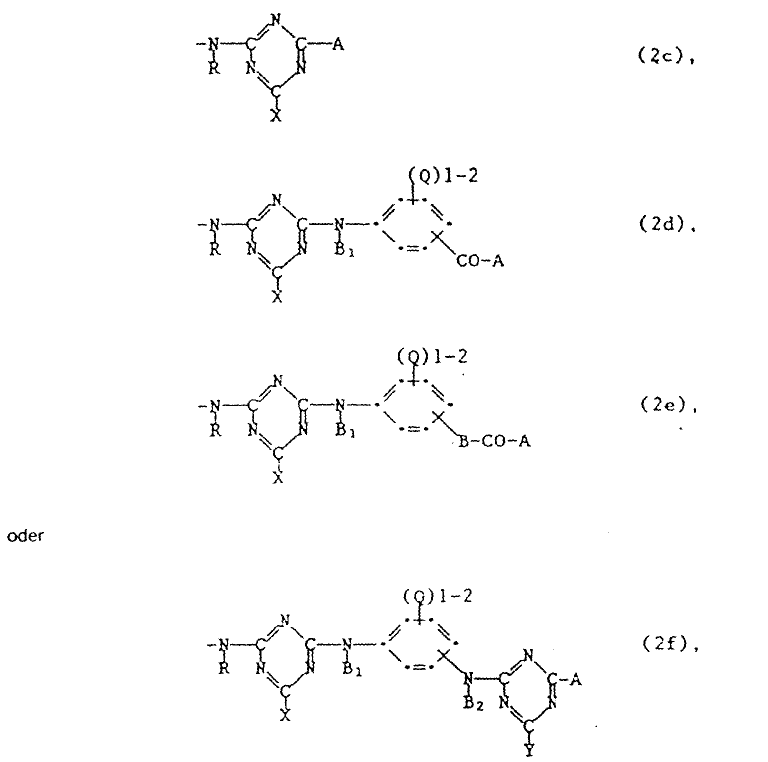

bedeutet, worin B ein Rest

(̵CH₂)̵ₙ

oder

-O(̵CH₂*)̵*ₙ,

n = 1 bis 6; B₁ und B₂ unabhängig voneinander Wasserstoff oder Alkyl mit 1 bis 4 Kohlenstoffatomen, das durch Halogen, Hydroxy, Cyan, C₁-C₄-Alkoxy, C₁-C₄-Alkoxycarbonyl, carboxy, Sulfamoyl, Sulfo oder Sulfato substituiert sein kann; und X und Y unabhängig voneinander Fluor oder Chlor ist; Q für 1 bis 2 Substituenten aus der Gruppe Wasserstoff, C₁-C₄-Alkyl, C₁-₄-Alkoxy, Halogen, carboxy oder Sulfo steht; A ein Aminosubstituent der Formel 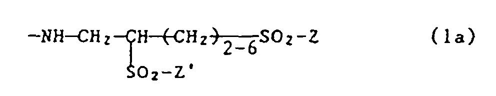 und Z und Z' unabhängig voneinander β-Sulfatoäthyl, β-Thiosulfatoäthyl, β-Phosphatoäthyl, β-Acyloxyäthyl, β-Halogenäthyl oder Vinyl ist, zum Färben oder Bedrucken von cellulosehaltigen Fasermaterialien.

Der Rest D in Formel (1) kann an seinem Grundgerüst die bei organischen Farbstoffen üblichen Substituenten gebunden enthalten.

Als Beispiele für weitere Substituenten im Rest D seien genannt: Alkylgruppen mit, 1 bis 4 Kohlenstoffatomen, wie Methyl, Aethyl, Propyl. Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino; Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Reaktivfarbstoffe der Formel (1). worin D der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Als β-Acyloxyäthyl kommt für Z bzw. Z' insbesondere der β-Acetoxyäthylrest und als β-Halogenäthyl insbesondere der β-Chloräthylrest in Betracht.

Der Rest B enthält 1 bis 6, vorzugsweise 1 bis 4 Kohlenstoffatome; Beispiele für B sind: Methylen, Aethylen, Propylen, Butylen, Methylenoxy, Aethylenoxy, Propylenoxy und Butylenoxy. Falls B einen Rest

-O(̵CH₂*)̵*ₙ

darstellt, ist B durch das Sauerstoffatom an D bzw. in der Formel (2e) an den Phenylkern gebunden.

Die Reste R, B₁ bzw. B₂ sind, falls es sich um Alkylreste handelt, geradkettig oder verzweigt; sie können weitersubstituiert sein, z.B. durch Halogen, Hydroxy, Cyan, C₁-C₄-Alkoxy, C₁-C₄-Alkoxycarbonyl, Carboxy, Sulfamoyl, Sulfo oder Sulfato. Als Beispiele für R, B₁ und B₂ seien die folgenden Reste genannt Methyl, Aethyl, Propyl, Isopropyl, Butyl, Isobutyl. sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl, Vorzugsweise ist R, B₁ bzw. B₂ Wasserstoff, Methyl oder Aethyl,

Die als Anionen abspaltbaren Substituenten X und Y sind Fluor oder Chlor.

Der Substituent Q ist z.B. Wasserstoff, Methyl, Aethyl, Propyl, Isopropyl, Butyl, Isobutyl, sek.-Butyl, tert-Butyl, Methoxy, Aethoxy, Propyloxy, Isopropyloxy, Butyloxy, Isobutyloxy, sek.-Butyloxy, tert.Butyloxy, Fluor, Chlor, Brom, Carboxy oder Sulfo. Vorzugsweise ist Q eine Sulfogruppe und sein Index = 1.

Der Rest-U-A kann ein- oder zweimal im Molekül vorhanden sein; beide Formelvarianten sind gleich wichtig. Falls ein Farbstoff der Formel (1) zwei derartige Formelteile enthält, können diese gleich oder verschieden sein; vorzugsweise sind sie gleich. Der Aminosubstituent A weist zwei Reaktivreste auf, und zwar die Gruppen -SO₂-Z und -SO₂-Z; diese Reaktivreste enthalten eine Abgangsgruppe, z.B. wenn Z bzw. Z' β-Chloräthyl ist, oder sie können nach Art von faserreaktiven Gruppen wirksam werden, z.B. wenn Z bzw. Z' Vinyl ist (Grundlegendes über Reaktivfarbstoffe siehe Venkataraman, K.: The Chemistry of Synthetic Dyes. New York: Academic Press 1972; Vol. VI. Reactive Dyes).

Ferner sind in Betracht zu ziehen, Reaktivfarbstoffe der Formel (1), worin der Rest D nach einen weiteren Reaktivrest einschliesst. Die zusätzlichen, in D eingeschlossenen Reaktivreste können über Aminogruppen, oder in anderer Weise z.B. durch eine direkte Bindung an D gebunden sein.

Bevorzugte Verwendungen der Reaktivfarbstoffe der Formel (1) sind:
a) Reaktivfarbstoffe der Formel (1), worin A ein Rest der Formel 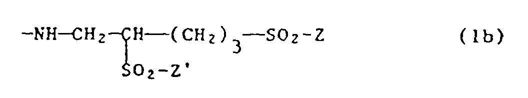 und Z = Z' ist, wobei Z bzw. Z' die unter Formel (1) angegebene Bedeutung hat.
   Entsprechende Aminosubstituenten A sind beispielsweise:
   2,5-Bis-β-chloräthylsulfonylpentylamino,
   2,5-Bis-β-sulfatoäthylsulfonylpentylamino,
   2,5-Bis-vinylsulfonylpentylamino,
   2,4-Bis-β-chloräthylsulfonylbutylamino und
   2,3-Bis-β-chloräthylsulfonylpropylamino. Vorzugsweise ist A einer der drei zuerst genannten Reste.
b) Reaktivfarbstoffe der Formel (1), worin -U-A einer der Reste der Formeln (2c) bis (2f), R Wasserstoff, Methyl oder Aethyl; B₁ und B₂ Wasserstoff; Q Sulfo; und X und Y Fluor- oder Chloratome sind.
   Die Triazinsubstituenten in den Formeln (2d) und (2e) haben vorzugsweise die Form 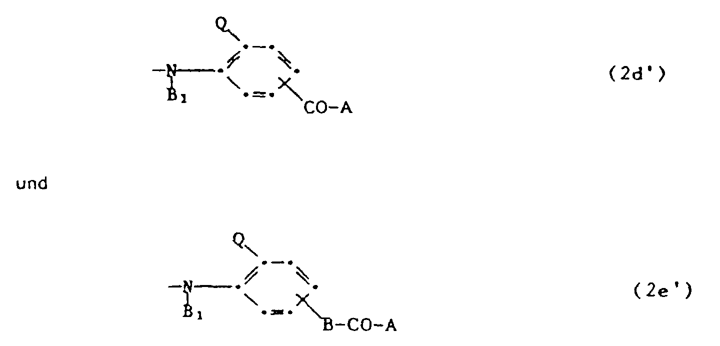 worin A, B, B₁ und Q die bei der Erläuterung der Formeln (2a) bis (2f) angegebenen Bedeutungen haben. Der Substituent Q ist z.B. Wasserstoff, Methyl, Aethyl, Propyl, Isopropyl, Butyl, Isobutyl, sek.-Butyl, tert-Butyl, Methoxy, Aethoxy, Propyloxy, Isopropyloxy, Butyloxy, Isobutytoxy, sek.-Butyloxy, tert.-Butyloxy, Fluor, Chlor, Brom, Carboxy oder Sulfo.
   Bevorzugt sind weiterhin:
c) Reaktivfarbstoffe der Formel (1), worin D der Rest eines Mono- oder Disazofarbstoffes ist.
d) Reaktivfarbstoffe der Formel (1), worin D der Rest eines Metallkomplexazo-oder Formazanfarbstoffes ist.
e) Reaktivfarbstoffe der Formel (1), worin D der Rest eines Anthrachinonfarbstoffes ist.
f) Reaktivfarbstoffe der Formel (1), worin D der Rest eines Phthalocyaninfarbstoffes ist.
g) Reaktivfarbstoffe der Formel (1), worin D der Rest eines Dioxazinfarbstoffes ist.
h) Reaktivfarbstoffe gemäss c), worin D ein Mono- oder Disazofarbstoffrest der Formel 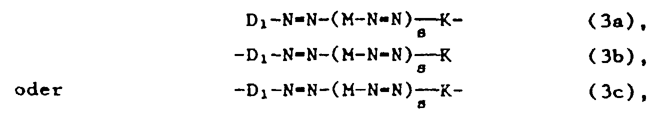 oder eines davon abgeleiteten Metallkomplexes; D₁ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxy-pyridon-(2)- oder Acetessigsäurearylamid-Reihe ist, wobei D₁, M und K Alkylgruppen mit 1 bis 4 Kohlenstoffatomen, Alkoxygruppen mit 1 bis 4 Kohlenstoffatomen, Acylaminogruppen mit 1 bis 8 Kohlenstoffatomen, Amino, Alkylamino mit 1 bis 4 Kohlenstoffatomen, Phenylamino, N,N-Di-β-hydroxyäthylamino, N,N-Di-β-sulfatoäthylamino, Sulfobenzylamino, N,N-Di-sulfobenzylamino, Alkoxycarbonyl mit 1 bis 4 Kohlenstoffatomen im Alkoxyrest, Alkylsulfonyl mit 1 bis 4 Kohlenstoffatomen, Trifluormethyl, Nitro, Cyano, Halogen, Carbamoyl, N-Alkylcarbamoyl mit 1 bis 4 Kohlenstoffatomen im Alkylrest, Sulfamoyl, N-Alkylsulfamoyl mit 1 bis 4 Kohlenstoffatomen, N-(β-Hydroxyäthyl)-sulfamoyl, N,N-Di-(β-hydroxyäthyl)-sulfamoyl, N-Phenylsulfamoyl, Ureido, Hydroxy, carboxy, Sulfomethyl oder Sulfo, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; s = 0 oder 1 ist; und D₁, M und K zusammen mindestens zwei Sulfogruppen, vorzugsweise drei oder vier Sulfogruppen, enthalten.
i) Reaktivfarbstoffe gemäss c), worin D ein Disazofarbstoffrest der Formel

   D₁-N = N-K-N = N-D₂- (4a),

   oder

   -D₁-N = N-K-N = N-D₂- (4b),

   D₁ und D₂ unabhängig voneinander der Rest einer Diazokomponente der Benzol- oder Naphthalinreihe, und K der Rest einer Kupplungskomponente der Napthalinreihe ist; wobei D₁, D₂ und K Alkylgruppen mit 1 bis 4 Kohlenstoffatomen, Alkoxygruppen mit 1 bis 4 Kohlenstoffatomen, Acylaminogruppen mit 1 bis 8 Kohlenstoffatomen, Amino, Alkylamino mit 1 bis 4 Kohlenstoffatomen, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, Alkylsulfonyl mit 1 bis 4 Kohlenstoffatomen, Trifluormethyl, Nitro, cyano, Halogen, Carbamoyl, N-Alkylcarbamoyl mit 1 bis 4 Kohlenstoffatomen im Alkylrest, Sulfamöyl, N-Alkylsulfamoyl mit 1 bis 4 Kohlenstoffatomen, N-(β-Hydroxyäthyl)-sulfamoyl, N,N-Di-(β-hydroxyäthyl-sulfamoyl, N-Phenylsulfamoyl, Ureido, Hydroxy, carboxy, Sulfomethyl oder Sulfo, insbesondere Hydroxy-, Amino-, Methyl-, Aethyl-, Methoxy-oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; und D₁, D₂ und K zusammen mindestens zwei Sulfogruppen, vorzugsweise drei oder vier Sulfogruppen enthalten.
j) Reaktivfarbstoffe gemäss d), worin D der Rest eines 1:1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.
k) Reaktivfarbstoffe gemäss d), worin D der Rest eines Formazanfarbstoffes der Formel 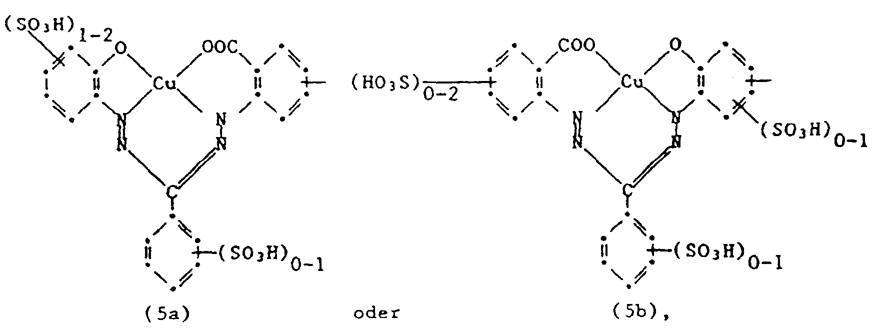 ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.
l) Reaktivfarbstoffe gemäss e), worin D der Rest eines Anthrachinonfarbstoffes der Formel 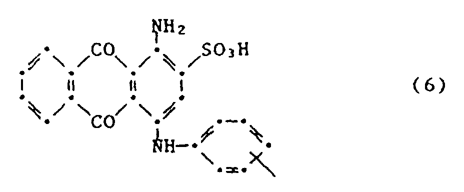 ist: wobei der Anthrachinonkern durch eine weitere Sulfogruppe, und der Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 stark wasserlöslichmachende Gruppen enthält.
m) Reaktivfarbstoffe gemäss f), worin D der Rest eines Phthalocyaninfarbstoffes der Formel 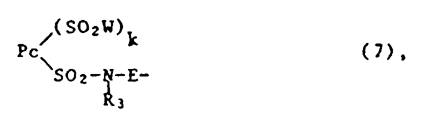 Pc der Rest eines Kupfer- oder Nickelphthalocyanins: W -OH und/oder -NR₁R₂; R₁ und R₂ unabhängig voneinander Wasserstoff oder Alkyl mit 1 bis 4 Kohlenstoffatomen, das durch Hydroxy oder Sulfo substituiert sein kann; R₃ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Aethylenrest; und k = 1 bis 3 ist.
n) Reaktivfarbstoffe gemäss g), worin D der Rest eines Dioxazinfarbstoffes der Formel 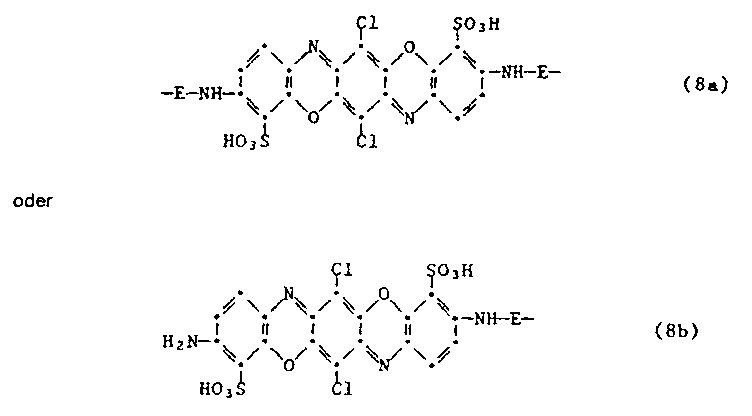 ist, worin E ein Phenylenrest, der durch Alkyl mit 1 bis 4 C-Atomen, Halogen, Carboxy oder Sulfo substituiert sein kann; oder ein Alkylenrest mit 2 bis 6 C-Atomen ist; und die äusseren Benzolringe in den Formeln (8a) und (8b) durch Alkyl mit 1 bis 4 C-Atomen, Alkoxy mit 1 bis 4 C-Atomen, Acetylamino, Nitro, Halogen, Carboxy oder Sulfo weitersubstituiert sein können.
   Bevorzugt sind insbesondere Reaktivfarbstoffe gemäss h) oder i), der nachfolgenden Formeln (9) bis (25): 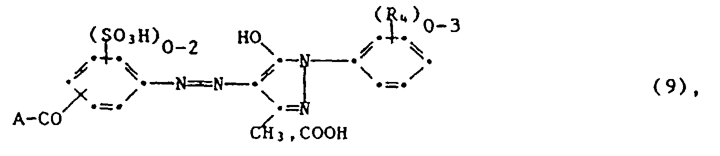 worin R₄ für 0 bis 3 Substituenten aus der Gruppe C₁-₄-Alkyl, C₁-₄-Alkoxy, Halogen, Carboxy und Sulfo, unabhängig voneinander, steht; und A ein Rest der Formel (1a) ist. 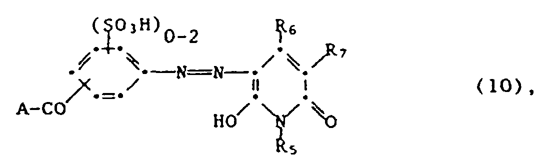 worin R₅ und R₆ unabhängig voneinander Wasserstoff, C₁-₄-Alkyl oder Phenyl, und R₇ Wasserstoff, Cyano, Carbamoyl oder Sulfomethyl ist; und A ein Rest der Formel (1a) ist. 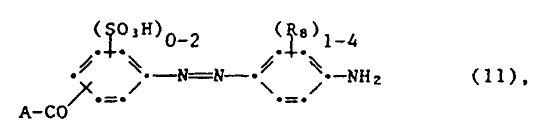 worin R₈ für 1 bis 4 Substituenten aus der Gruppe Wasserstoff, Halogen, Nitro, Cyan, Trifluormethyl, Sulfamoyl, Carbamoyl, C₁-₄-Alkyl, C₁-₄-Alkoxy, Amino, Acetylamino, Ureido, Hydroxy, Carboxy, Sulfomethyl und Sulfo, unabhängig voneinander, steht und A ein Rest der Formel (1a) ist. 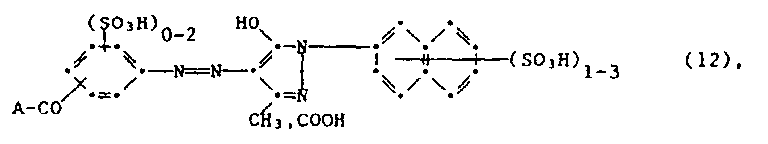 worin A ein Rest der Formel (1a) ist. 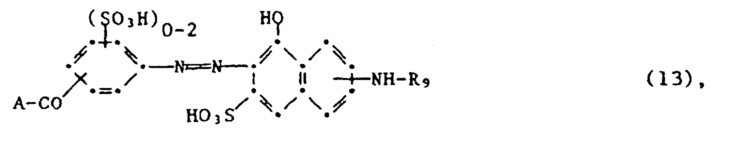 worin R₉ C₁-₄-Alkanoyl, Carboxy-C₁-C₄-alkanoyl, Benzoyl, Carboxybenzoyl oder Sulfobenzoyl ist; und A ein Rest der Formel (1a) ist. 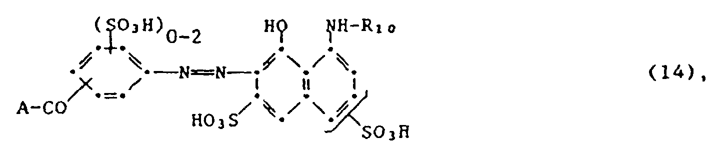 worin R₁₀ C₁-₄-Alkanoyl oder Benzoyl ist; und A ein Rest der Formel (1a) ist. 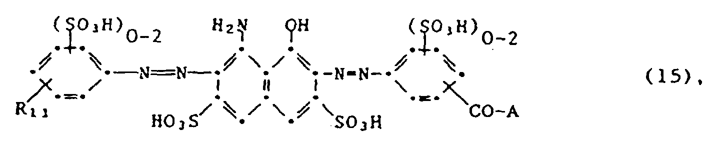 worin R₁₁ Wasserstoff, β-Sulfatoäthylsulfonyl oder Vinylsulfonyl ist; und A ein Rest der Formel (1a) ist. 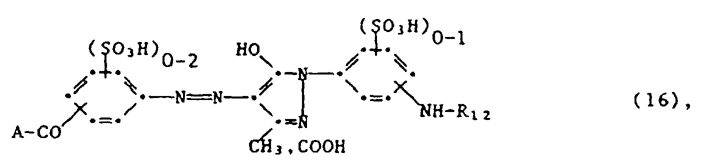 worin R₁₂ ein Halogentriazin- oder Halogenpyrimidin-Rest ist; und A ein Rest der Formel (1a) ist. 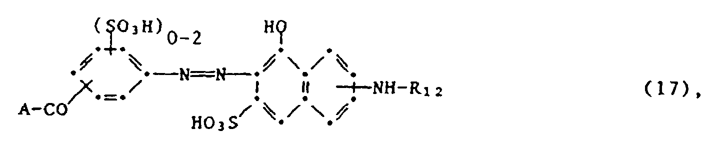 worin R₁₂ ein Halogentriazin- oder Halogenpyrimidin-Rest ist; und A ein Rest der Formel (1a) ist. 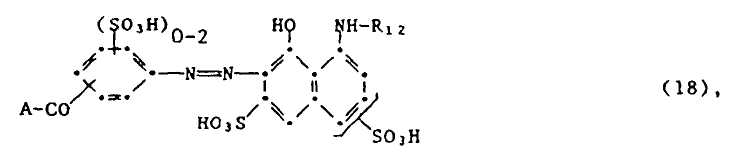 worin R₁₂ ein Halogentriazin- oder Halogenpyrimidin-Rest ist und A ein Rest der Formel (1a) ist. 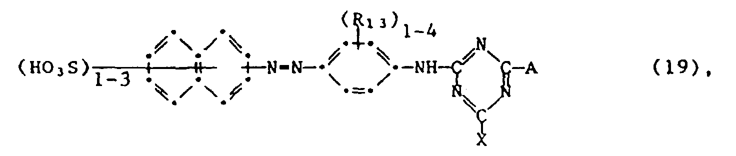 worin R₁₃ für 1 bis 4 Substituenten aus der Gruppe Wasserstoff, Halogen, Nitro, Cyan, Trifluormethyl, Sulfamoyl, Carbamoyl, C₁-₄-Alkyl, C₁-₄-Alkoxy, Amino, Acetylamino, Ureido, Hydroxy, Carboxy, Sulfomethyl und Sulfo, unabhängig voneinander, steht; X Fluor oder Chlor, und A ein Rest der Formel (1a) ist. 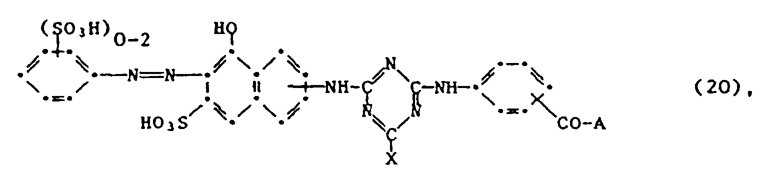 worin X Fluor oder Chlor, und A ein Rest der Formel (1a) ist. 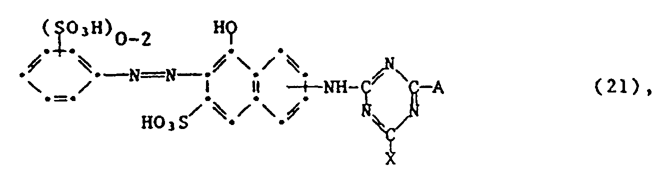 worin X Fluor oder Chlor, und A ein Rest der Formel (1a) ist. 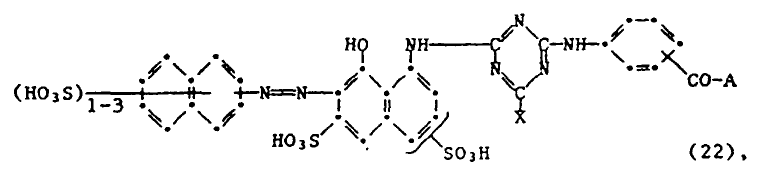 worin X Fluor oder Chlor, und A ein Rest der Formel (1a) ist. 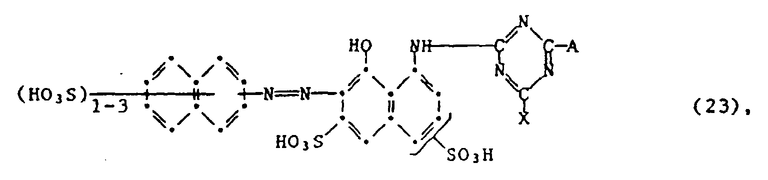 worin X Fluor oder Chlor, und A ein Rest der Formel (1a) ist. 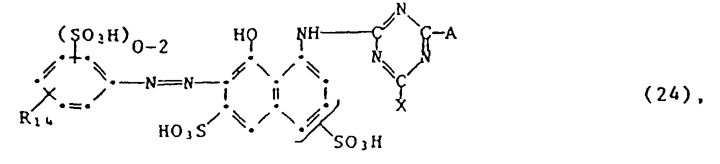 worin R₁₄ Wasserstoff, β-Sulfatoäthylsulfonyl oder Vinylsulfonyl ist, X Fluor oder Chlor, und A ein Rest der Formel (1a) ist. 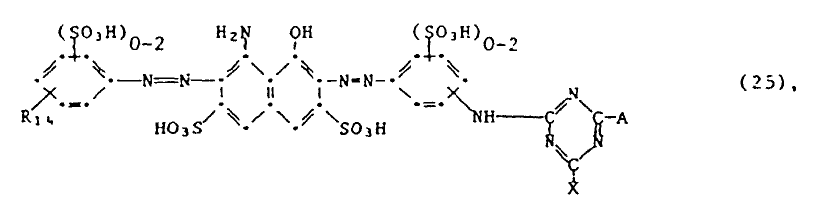 worin R₁₄ Wasserstoff, β-Sulfatoäthylsulfonyl oder Vinylsulfonyl ist; X Fluor oder Chlor und A ein Rest der Formel (1a) ist. Bevorzugt ist ausserdem die Verwendung von Schwermetallkomplexen von Reaktivfarbstoffen der Formel (1); als komplexbildende Schwermetalle kommen vor allem Kupfer, Nickel, Kobalt oder Chrom in Betracht.

Bevorzugt sind insbesondere Reaktivfarbstoffe der Formel (1), worin Z und Z' die β-Sulfatoäthyl-, β-Chloräthyl- oder Vinylgruppe ist, und worin X bzw. Y in den Formeln bis (2c) bis (2f) Fluor oder Chlor ist. In Betracht zu ziehen sind insbesondere auch Kombinationen von Merkmalen gemäss der vorhergehenden Beschreibung, sofern anwendbar.

Falls R₁₂ in den Formeln (16) bis (18) ein Halogentriazinrest ist, handelt es sich vorzugsweise um einen Monochlor- oder Monofluortriazinrest, der einen nichtfaserreaktiven Substituenten enthält z.B. -NH₂, β-Sulfoäthylamino, β-Hydroxyäthylamino, N,N-Di-β-hydroxyäthylamino, Anilino, Toluidino, Sulfoanilino, Morpholino, Methoxy, Isopropoxy oder dergleichen. Als nichtfaserreaktiver Substituent kommt insbesondere der Rest eines aliphatischen, aromatischen oder heterocyclischen Amins oder auch der Rest eines gemischt aliphatisch-aromatischen, aliphatisch-heterocyclischen oder aromatisch-heterocyclischen Amins in Betracht. Beispiele sind: Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält. Falls es der Rest eines aliphatischen Amins ist, handelt es sich vorzugsweise um Alkylamino- oder N,N-Dialkylaminogruppen, worin die Alkylketten auch durch andersartige Atome oder Gruppen, wie -O-, -NH-oder -CO-, unterbrochen sein können. Die Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl- und Naphthylreste in Frage; heterocyclische Reste sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechsgliedrigen N-heterocyclischen Verbindungen in Betracht, die als weitere heteroatome Stickstoff, Sauerstoff oder Schwefel enthalten können. Die oben genannten Alkyl-, Cycloalkyl-, Aralkyl- und Arylreste, die heterocyclischen Reste, sowie die N-heterocyclischen Ringe können ausserdem weitersubstituiert sein, z.B. durch: Halogen, wie Fluor, Chlor und Brom, Nitro, Cyan, Trifluormethyl, Sulfamoyl, Carbamoyl, C₁-C₄-Alkyl, C₁-C₄-Alkoxy, Acylaminogruppen, wie Acetylamino oder Benzoylamino, Ureido, Hydroxy, Carboxy, Sulfomethyl oder Sulfo.

Gegenstand der Erfindung sind ferner Reaktivfarbstoffe der Formel

D(̵U-A)₁₋₂ (1),

worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes; -U-A einen Rest der Formel

-CO-A (2a),

-B-CO-A (2b),

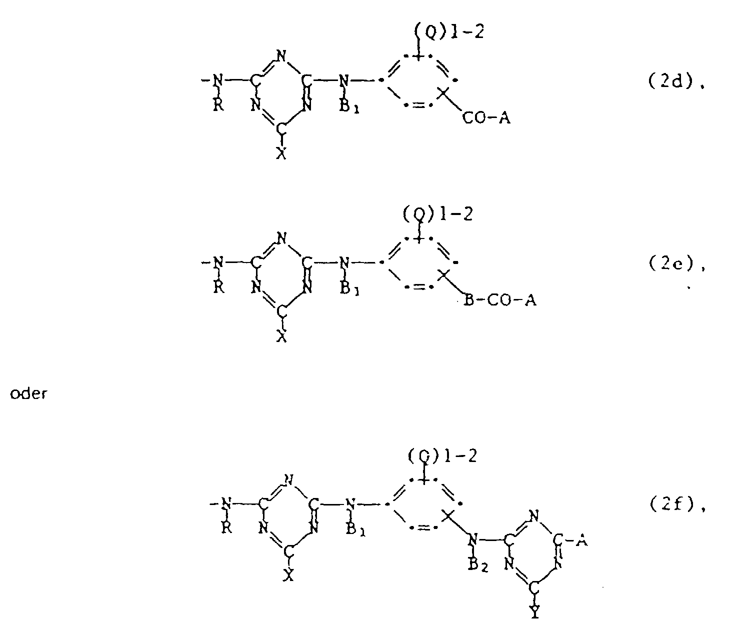

bedeutet, worin B ein Rest

(̵CH₂*)̵*ₙ

oder

-O(̵CH₂*)̵*ₙ,

n = 1 bis 6; B₁ und B₂ unabhängig voneinander Wasserstoff oder Alkyl mit 1 bis 4 Kohlenstoffatomen, das durch Halogen, Hydroxy, Cyan, C₁-C₄-Alkoxy, C₁-C₄-Alkoxycarbonyl, carboxy, Sulfamoyl, Sulfo oder Sulfato substituiert sein kann; und X und Y unabhängig voneinander Fluor oder Chlor ist; Q für 1 bis 2 Substituenten aus der Gruppe Wasserstoff, C₁-C₄-Alkyl, C₁-₄-Alkoxy, Halogen, carboxy oder Sulfo steht; A ein Aminosubstituent der Formel 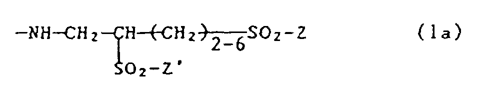 und Z und Z' unabhängig voneinander β-Sulfatoäthyl, β-Thiosulfatoäthyl, β-Phosphatoäthyl, β-Acyloxyäthyl, β-Halogenäthyl oder Vinyl ist.
Bevorzugte Ausführungsformen der Reaktivfarbstoffe der Formel (1) sind:
a) Reaktivfarbstoffe der Formel (1), worin A ein Rest der Formel 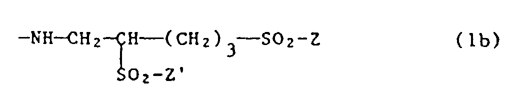 und Z = Z' ist, wobei Z bzw. Z' die unter Formel (1) angegebene Bedeutung hat.
   Entsprechende Aminosubstituenten A sind beispielsweise:
   2,5-Bis-β-chloräthylsulfonylpentylamino,
   2,5-Bis-β-sulfatoäthylsulfonylpentylamino,
   2,5-Bis-vinylsulfonylpentylamino,
   2,4-Bis-β-chloräthylsulfonylbutylamino und
   2,3-Bis-β-chloräthylsulfonylpropylamino, Vorzugsweise ist A einer der drei zuerst genannten Reste,
b) Reaktivfarbstoffe der Formel (1), worin -U-A einer der Reste der Formeln (2d) bis (2f), R Wasserstoff, Methyl oder Aethyl; B₁ und B₂ Wasserstoff; Q Sulfo; und X und Y Fluor- oder Chloratome sind. Die Triazinsubstituenten in den Formeln (2d) und (2e) haben vorzugsweise die Form 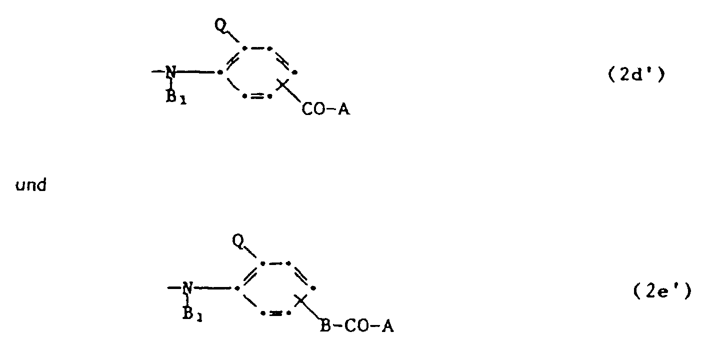 worin A, B, B¹ und Q die bei der Erläuterung der Formeln (2a) bis (2f) angegebenen Bedeutungen haben. Der Substituent Q ist z.B. Wasserstoff, Methyl, Aethyl, Propyl, Isopropyl, Butyl, Isobutyl, sek.-Butyl, tert.-Butyl, Methoxy, Aethoxy, Propyloxy, Isopropyloxy, Butyloxy, Isobutyloxy, sek.-Butyloxy, tert.-Butyloxy, Fluor, Chlor, Brom, Carboxy oder Sulfo.
   Bevorzugt sind weiterhin:
c) Reaktivfarbstoffe der Formel (1), worin D der Rest eines Mono- oder Disazofarbstoffes ist.
d) Reaktivfarbstoffe der Formel (1), worin D der Rest eines Metallkomplexazo-oder Formazanfarbstoffes ist.
e) Reaktivfarbstoffe der Formel (1), worin D der Rest eines Anthrachinonfarbstoffes ist.
f) Reaktivfartstoffe der Formel (1), worin D der Rest eines Phthalocyaninfarbstoffes ist.
g) Reaktivfarbstoffe der Formel (1), worin D der Rest eines Dioxazinfarbstoffes ist.
h) Reaktivfarbstoffe gemäss c), worin D ein Mono- oder Disazofarbstoffrest der Formel 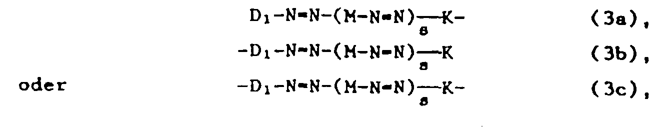 oder eines davon abgeleiteten Metallkomplexes; D₁ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxy-pyridon-(2)- oder Acetessigsäurearylamid-Reihe ist, wobei D₁, M und K Alkylgruppen mit 1 bis 4 Kohlenstoffatomen, Alkoxygruppen mit 1 bis 4 Kohlenstoffatomen, Acylaminogruppen mit 1 bis 8 Kohlenstoffatomen, Amino, Alkylamino mit 1 bis 4 Kohlenstoffatomen, Phenylamino, N,N-Di-β-hydroxyäthylamino, N,N-Di-β-sulfatoäthylamino, Sulfobenzylamino, N,N-Di-sulfobenzylamino, Alkoxycarbonyl mit 1 bis 4 Kohlenstoffatomen im Alkoxyrest, Alkylsulfonyl mit 1 bis 4 Kohlenstoffatomen, Trifluormethyl, Nitro, Cyano, Halogen, Carbamoyl, N-Alkylcarbamoyl mit 1 bis 4 Kohlenstoffatomen im Alkylrest, Sulfamoyl, N-Alkylsulfamoyl mit 1 bis 4 Kohlenstoffatomen, N-(β-Hydroxyäthyl)-sulfamoyl, N,N-Di-(β-hydroxyäthyl)-sulfamoyl, N-Phenylsulfamoyl, Ureido, Hydroxy, carboxy, Sulfomethyl oder Sulfo, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; s = 0 oder 1 ist; und D₁, M und K zusammen mindestens zwei Sulfogruppen, vorzugsweise drei oder vier Sulfogruppen, enthalten.
i) Reaktivfarbstoffe gemäss c), worin D ein Disazofarbstoffrest der Formel

   D₁-N = N-K-N = N-D₂- (4a),

   oder

   -D₁-N = N-K-N = N-D₂- (4b),

   D₁ und D₂ unabhängig voneinander der Rest einer Diazokomponente der Benzol- oder Naphthalinreihe, und K der Rest einer Kupplungskomponente der Napthalinreihe ist; wobei D₁, D₂ und K Alkylgruppen mit 1 bis 4 Kohlenstoffatomen, Alkoxygruppen mit 1 bis 4 Kohlenstoffatomen, Acylaminogruppen mit 1 bis 8 Kohlenstoffatomen, Amino, Alkylamino mit 1 bis 4 Kohlenstoffatomen, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, Alkylsulfonyl mit 1 bis 4 Kohlenstoffatomen, Trifluormethyl, Nitro, cyano, Halogen, Carbamoyl, N-Alkylcarbamoyl mit 1 bis 4 Kohlenstoffatomen im Alkylrest, Sulfamöyl, N-Alkylsulfamoyl mit 1 bis 4 Kohlenstoffatomen, N-(β-Hydroxyäthyl)-sulfamoyl, N,N-Di-(β-hydroxyäthyl)-sulfamoyl, N-Phenylsulfamoyl, Ureido, Hydroxy, carboxy, Sulfomethyl oder Sulfo, insbesondere Hydroxy-, Amino-, Methyl-, Aethyl-, Methoxy-oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; und D₁, D₂ und K zusammen mindestens zwei Sulfogruppen, vorzugsweise drei oder vier Sulfogruppen enthalten.
j) Reaktivfarbstoffe gemäss d), worin D der Rest eines 1:1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.
k) Reaktivfarbstoffe gemäss d), worin D der Rest eines Formazanfarbstoffes der Formel 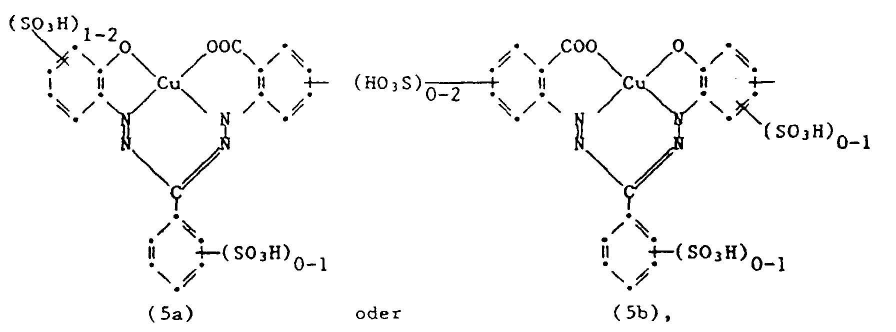 ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.
l) Reaktivfarbstoffe gemäss e), worin D der Rest eines Anthrachinonfarbstoffes der Formel 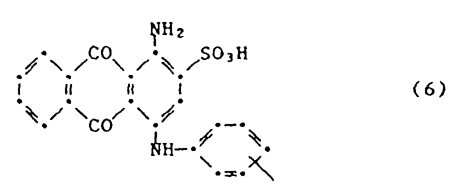 ist; wobei der Anthrachinonkern durch eine weitere Sulfogruppe, und der Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 stark wasserlöslichmachende Gruppen enthält.
m) Reaktivfarbstoffe gemäss f), worin D der Rest eines Phthalocyaninfarbstoffes der Formel 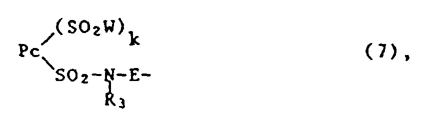 Pc der Rest eines Kupfer- oder Nickelphthalocyanins; W -OH und/oder -NR₁R₂; R₁ und R₂ unabhängig voneinander Wasserstoff oder Alkyl mit 1 bis 4 Kohlenstoffatomen, das durch Hydroxy oder Sulfo substituiert sein kann; R₃ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Aethylenrest; und k = 1 bis 3 ist.
n) Reaktivfarbstoffe gemäss g), worin D der Rest eines Dioxazinfarbstoffes der Formel 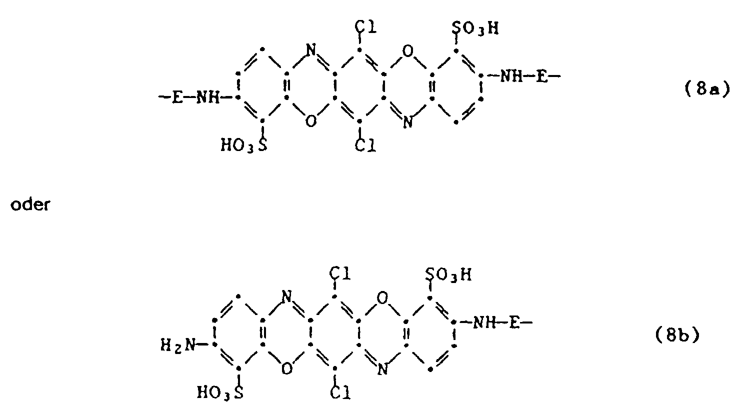 ist, worin E ein Phenylenrest, der durch Alkyl mit 1 bis 4 C-Atomen, Halogen, Carboxy oder Sulfo substituiert sein kann; oder ein Alkylenrest mit 2 bis 6 C-Atomen ist; und die äusseren Benzolringe in den Formeln (8a) und (8b) durch Alkyl mit 1 bis 4 C-Atomen, Alkoxy mit 1 bis 4 C-Atomen, Acetylamino, Nitro, Halogen, Carboxy oder Sulfo weitersubstituiert sein können.
   Bevorzugt sind insbesondere Reaktivfarbstoffe gemäss h) oder i), der nachfolgenden Formeln (9) bis (25): 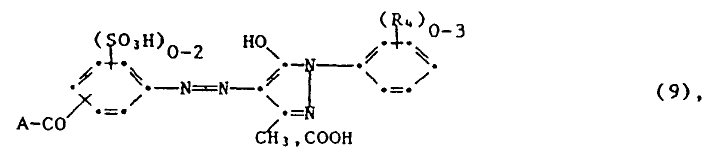 worin R₄ für 0 bis 3 Substituenten aus der Gruppe C₁-₄-Alkyl, C₁-₄-Alkoxy, Halogen, Carboxy und Sulfo, unabhängig voneinander, steht; und A ein Rest der Formel (1a) ist. 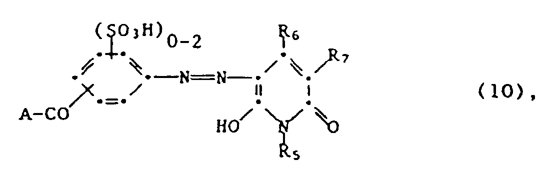 worin R₅ und R₆ unabhängig voneinander Wasserstoff, C₁-₄-Alkyl oder Phenyl, und R₇ Wasserstoff, Cyano, Carbamoyl oder Sulfomethyl ist; und A ein Rest der Formel (1a) ist. 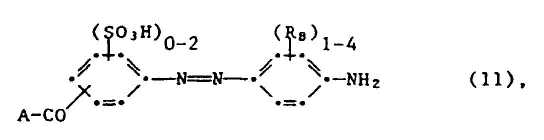 worin R₈ für 1 bis 4 Substituenten aus der Gruppe Wasserstoff, Halogen, Nitro, Cyan, Trifluormethyl, Sulfamoyl, Carbamoyl, C₁-₄-Alkyl, C₁-C₄-Alkoxy, Amino, Acetylamino, Ureido, Hydroxy, Carboxy, Sulfomethyl und Sulfo, unabhängig voneinander, steht; und A ein Rest der Formel (1a) ist. 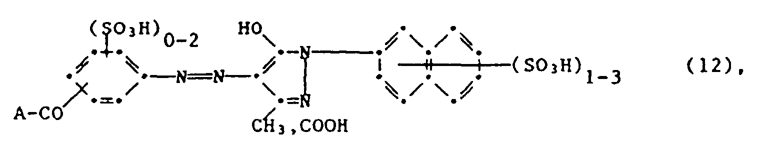 worin A ein Rest der Formel (1a) ist. 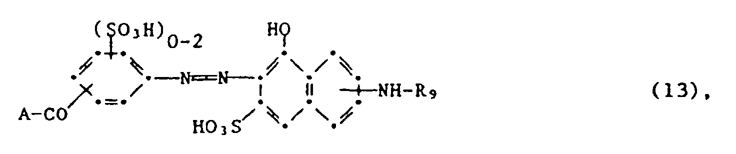 worin R₉ C₁-₄-Alkanoyl, Carboxy-C₁-C₄-alkanoyl, Benzoyl, Carboxybenzoyl oder Sulfobenzoyl ist; und A ein Rest der Formel (1a) ist. 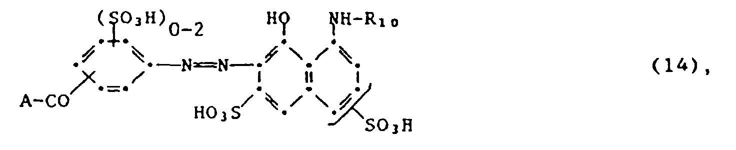 worin R₁₀ C₁-₄-Alkanoyl oder Benzoyl ist; und A ein Rest der Formel (1a) ist. 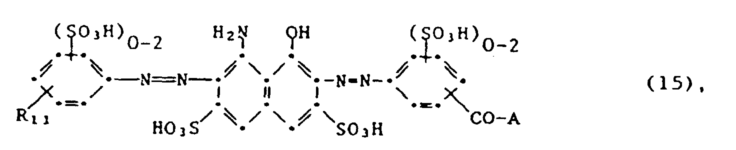 worin R₁₁ Wasserstoff, β-Sulfatoäthylsulfonyl oder Vinylsulfonyl ist; und A ein Rest der Formel (1a) ist. 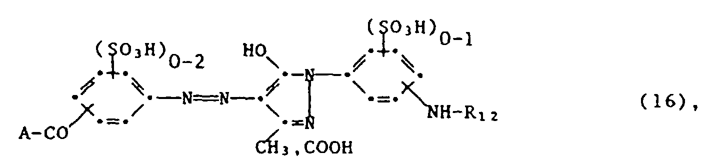 worin R₁₂ ein Halogentriazin- oder Halogenpyrimidin-Rest ist; und A ein Rest der Formel (1a) ist. 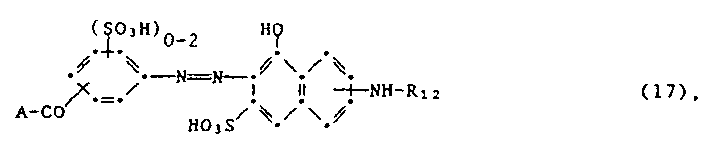 worin R₁₂ ein Halogentriazin- oder Halogenpyrimidin-Rest ist; und A ein Rest der Formel (1a) ist. 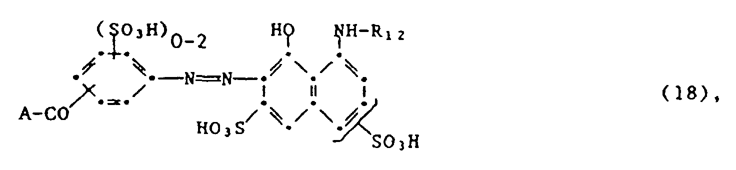 worin R₁₂ ein Halogentriazin- oder Halogenpyrimidin-Rest ist; und A ein Rest der Formel (1a) ist. 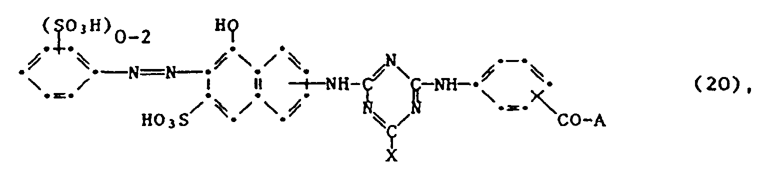 worin X Fluor oder Chlor, und A ein Rest der Formel (1a) ist. 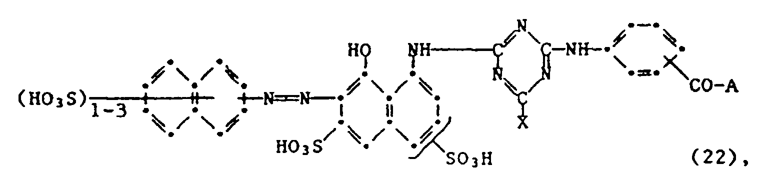 worin X Fluor oder Chlor, und A ein Rest der Formel (1a) ist.

Man erhält die Reaktivfarbstoffe der Formel (1), indem man in einen organischen Farbstoff mit dem Rest D oder in ein Farbstoffvorprodukt einen Rest oder zwei Reste der Formel

-U―A (1b)

einführt, wobei D, U und A die unter Formel (1) angegebenen Bedeutungen haben, oder dass man, im Falle der Verwendung von Farbstoffvorprodukten, die erhaltenen Zwischenprodukte in die gewünschten Endfarbstoffe überführt, und gegebenenfalls eine weitere Umwandlungsreaktion anschliesst.

Das molare Verhältnis der Ausgangsstoffe muss der Zusammensetzung des Endprodukts entsprechend gewählt werden, je nachdem ob nur ein Rest oder zwei Reste der Formel (1b) in dem Reaktivfarbstoff der Formel (1) vorhanden sein sollen.

Gegebenenfalls wird an das erfindungsgemässe Verfahren eine weitere Umwandlungsreaktion angeschlossen. Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse eines Halogentriazinrestes eintritt, muss ein Zwischenprodukt welches Acetytaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus einer Verbindung der Formel H-A, dem Triazin und dem organischen Farbstoff oder einem Vorprodukt zweckmässigerweise zuerst ausgeführt wird, die des Triazins mit der Verbindung der Formel H-A oder mit dem organischen Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Eine abgewandelte Ausführungsform des Verfahrens besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff, worin Z ein Rest HO-CH₂CH₂-ist, herstellen und das Zwischenprodukt vor oder nach der Acylierung mit Schwefelsäure umsetzen, so dass die Hydroxygruppe in die Sulfatogruppe übergeführt wird; oder man verwendet einen analogen Farbstoff, worin Z die Gruppe H₂C=CH- ist, und lagert an das Zwischenprodukt Thioschwefelsäure an, wobei ein Rest HO₃SS-CH₂CH₂-entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen Restes für Z in eine Verbindung der Formel (1) oder ein Zwischenprodukt anstelle eines Halogenatoms oder der Sulfatogruppe, beispielsweise einer Thiosulfato- oder Phosphatogruppe, erfolgt in an sich bekannter Weise. Der Weg der Herstellung über eine Zwischenstufe des Reaktivrestes geht in vielen Fällen einheitlich und vollständig.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen.

Gegebenenfalls ist eine Verfahrensvariante anwendbar, bei welcher man von Farbstoffvorprodukten ausgeht. Diese Variante ist geeignet zur Herstellung von Reaktivfarbstoffen der Formel (1), worin D der Rest eines aus zwei oder mehr als zwei Komponenten zusammengesetzten Farbstoffes ist, beispielsweise eines Monoazo-, Disazo-, Trisazo-, Metallkomplexazo-, Formazan- oder Azomethinfarbstoffes.

Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Reste in hierfür geeignete Zwischenprodukte mit Farbstoffcharakter einführt.

Bevorzugt sind Reaktivfarbstoffe der Formel (1), worin D der Rest eines Mono- oder Disazofarbstoffes oder eines Metallkomplexazofarbstoffes ist. In diesem Falle sind die Reste der Formel (1b) an die Diazo- und/oder

Kupplungskomponenten gebunden. Falls in einem Reaktivfarbstoff der Formel (1) zwei Reste der Formel (1b) enthalten sind, ist vorzugsweise je ein Rest der Formel (1b) an eine Komponente, d.h. an eine Diazokomponente oder Kupplungskomponente, gebunden. Die Reaktivfarbstoffe haben somit z.B. die Formeln

A-U-D₁-N = N-K (26)

D₁-N = N-K-U-A (27)

und

A-U-D₁-N = N-K-U-A (28)

worin D₁ der Rest einer Diazokomponente, und K der Rest einer Kupplungskomponente ist.

Falls man von Farbstoffvorprodukten ausgeht, gelangt man zu Reaktivfarbstoffen der Formel (1), indem man z.B. eine Komponente des Farbstoffes der Formel (1), die eine Gruppe -N(R)H enthält, und ein Triazin kondensiert, vorher oder nachher mit einer Verbindung der Formel H-A kondensiert, und mit der anderen Komponente des Farbstoffes der Formel (1) umsetzt. Bei der Herstellung der bevorzugten Azofarbstoffe müssen die Diazokomponenten und die Kupplungskomponenten zusammen mindestens eine Aminogruppe -N(R)H, und können weitere Aminogruppen enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure, Gegebenenfalls verwendet man entsprechende Acetylamino- oder Nitroverbindungen, worin die Acetylamino- bzw. Nitrogruppe vor der Kondensation mit dem Triazin durch Verseifen bzw. Reduzieren in die H₂N-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho-ortho'-Stellung zur Azobrücke komplexbildende Gruppen, z.B. Hydroxy-oder Carboxygruppen, enthalten, vor oder gegebenenfalls auch nach der Kondensation mit dem Triazin mit schwermetallabgebenden Mitteln behandelt. Von besonderem Interesse sind Kupferkomplexe von Reaktivfarbstoffen der Formel (1). Als Methode der Metallisierung kommt ausser der oben genannten auch die entalkylierende Metallisierung und, für die Herstellung von Kupferkomplexen, die oxydative Kupferung in Betracht.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

### Organische Farbstoffe zur Herstellung von Reaktivfarbstoffen der Formeln (16) bis (25) etc.

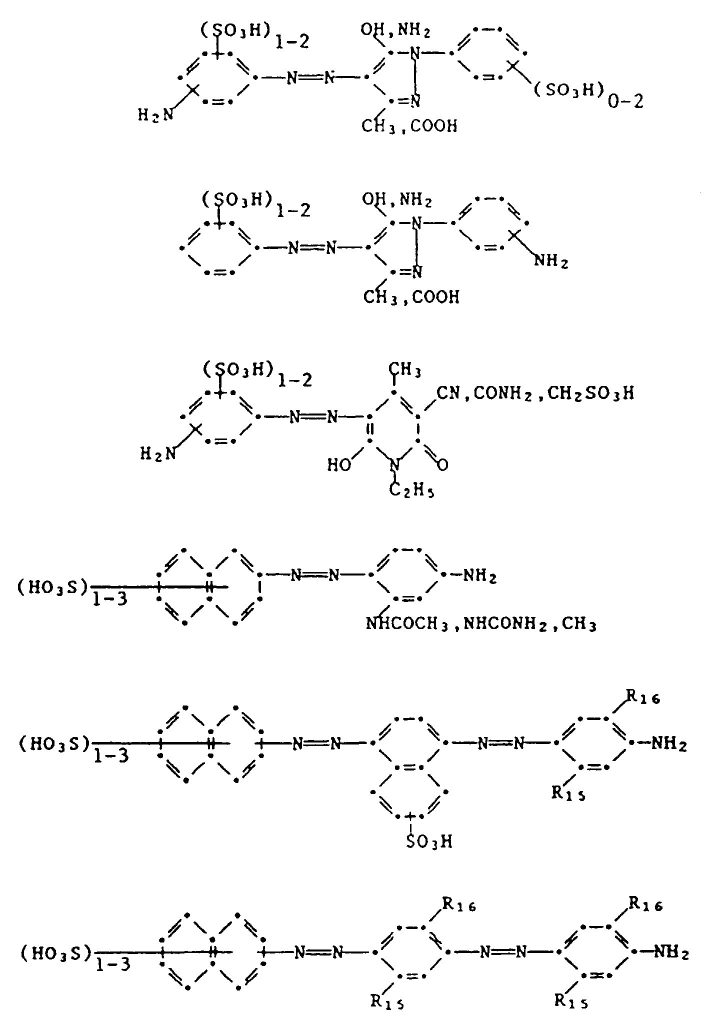

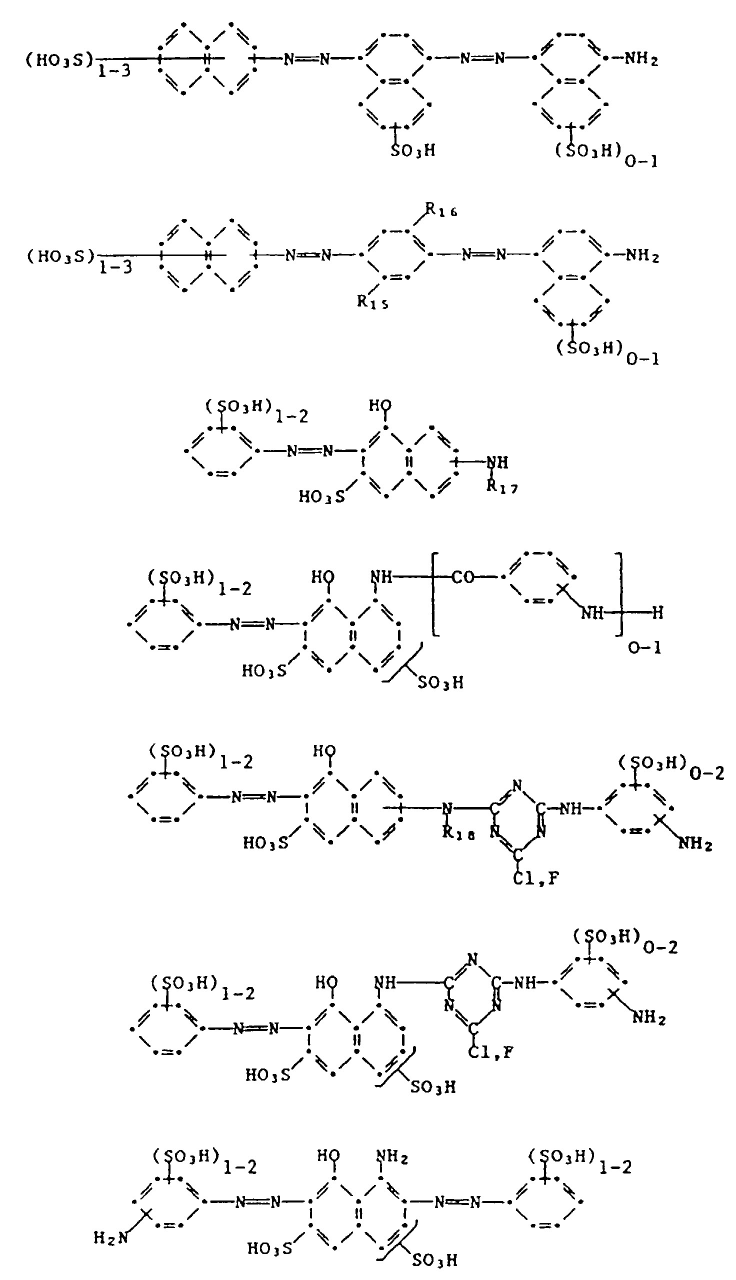

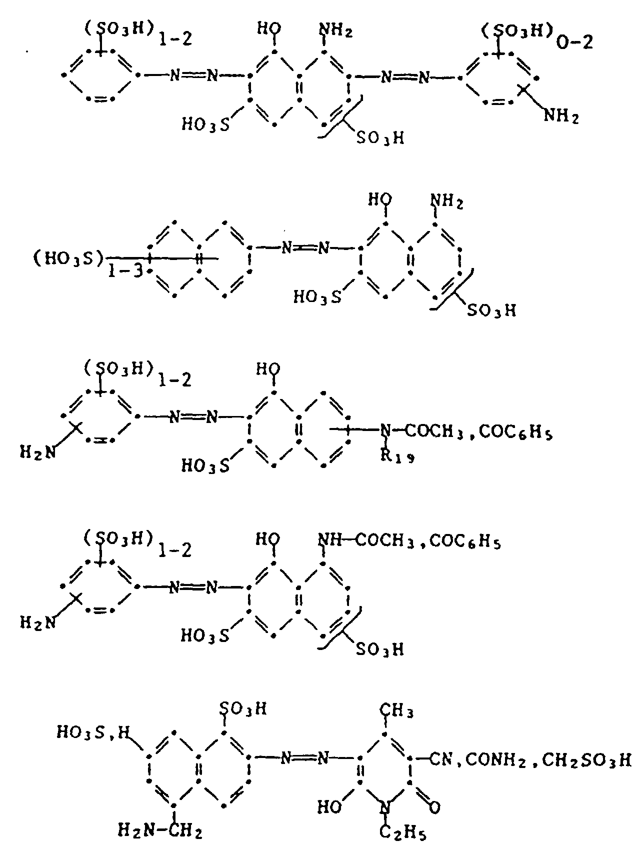

Metallkomplexe von Farbstoffen der Formeln:

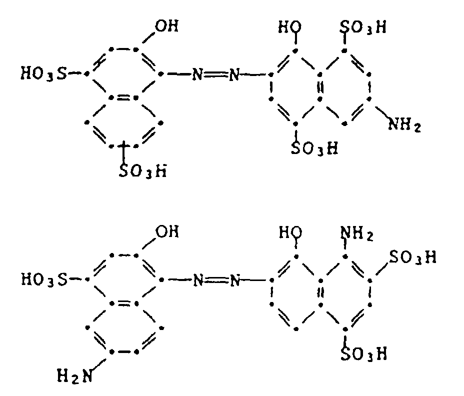

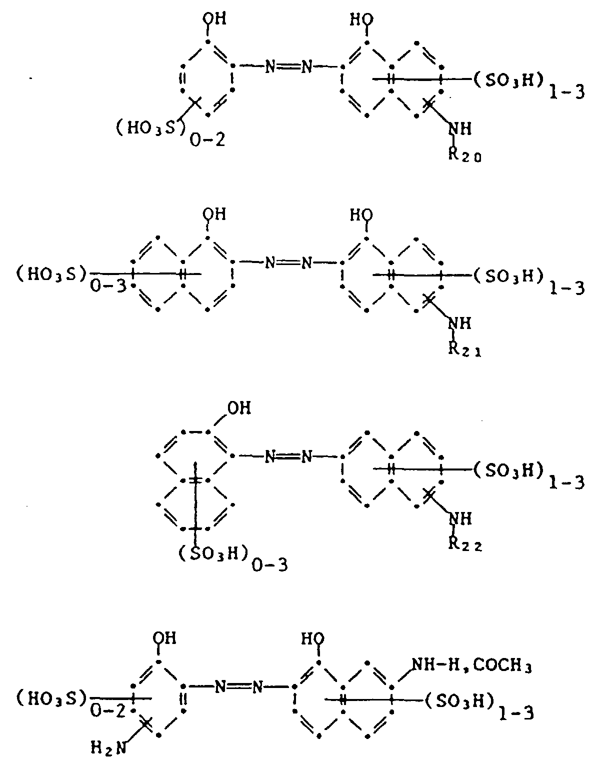

Als Metallatome sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

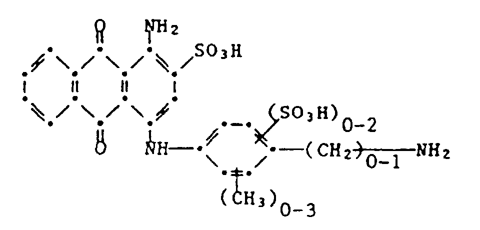

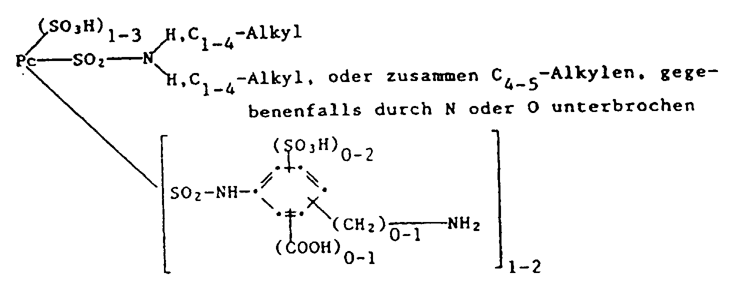

In dieser Formel steht Pc für den Cu- oder Ni-Phthalocyaninrest, die Gesamtzahl der Substituenten am Pc-Gerüst ist 4.

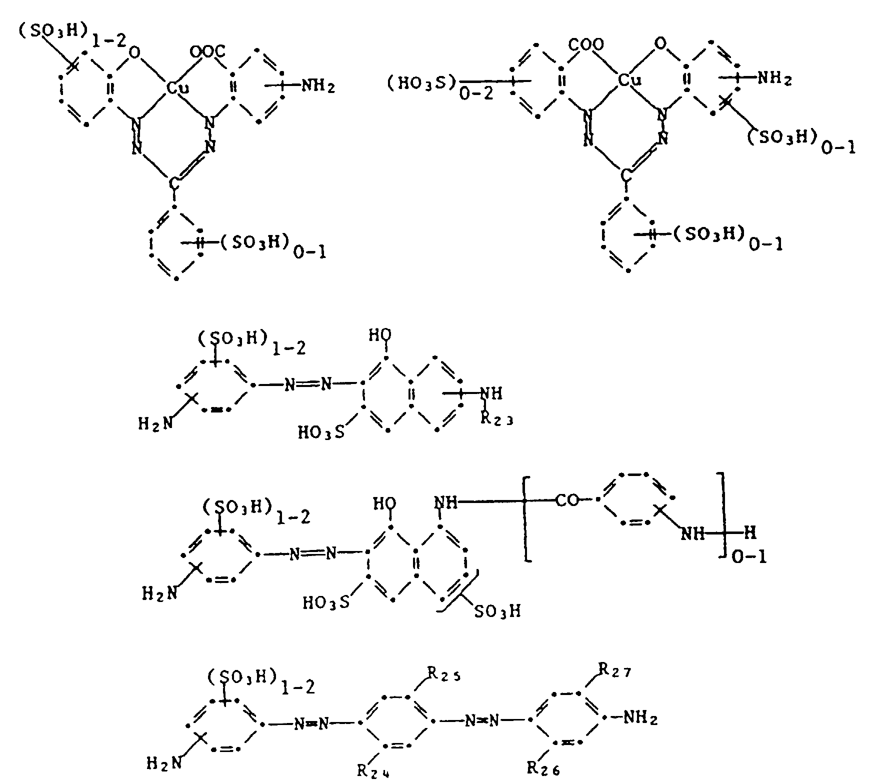

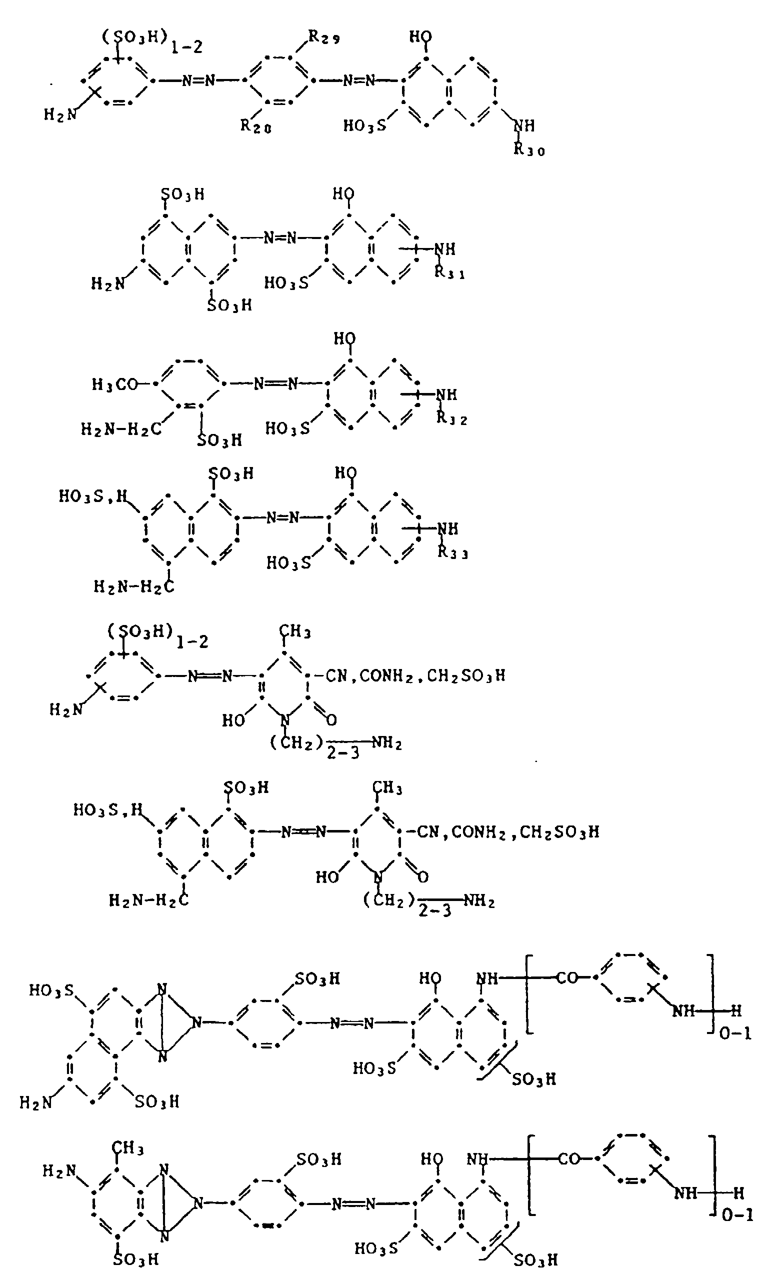

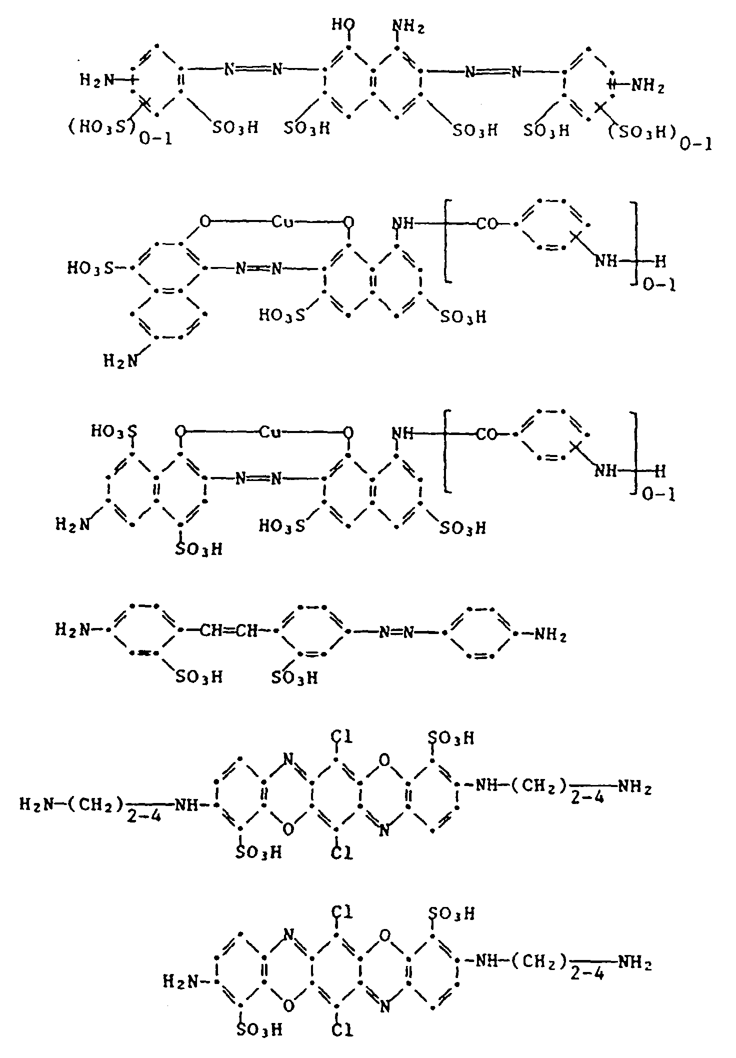

In den oben aufgeführten Formeln bedeuten die Reste R₁₇ bis R₂₃ und R₃₀ bis R₃₃ Wasserstoff oder C₁-C₄-Alkyl, und die Reste R₁₅, R₁₆ und R₂₄ bis R₂₉ Wasserstoff, C₁-C₄-Alkyl, C₁-C₄-Alkoxy, C₁-C₄-Alkanoylamino, Ureido oder Halogen, wobei die Reste R₁₅, R₁₆ ... etc., die zu ein und derselben Formel gehören, voneinander unabhängig sind. Vorzugsweise bedeuten die Reste R₁₇ bis R₂₃ und R₃₀ bis R₃₃ Wasserstoff, Methyl oder Aethyl, und die Reste R₁₅, R₁₆ und R₂₄ bis R₂₉ Wasserstoff, Methyl, Aethyl, Methoxy, Aethoxy, Acetylamino, Ureido oder Chlor. Die aromatischen Ringe in den obigen Farbstoffen können weitersubstituiert sein, die Benzolringe vor allem durch Methyl, Aethyl, Methoxy, Aethoxy, Methylsulfonyl, Aethylsulfonyl, Carboxy, Acetylamino oder Chlor, und die Naphthalinringe insbesondere durch Methoxy, Carboxy, Acetylamino, Nitro oder Chlor, gleiches gilt für die Anthrachinone, Dioxazine usw. Vorzugsweise sind die Benzolringe nicht weitersubstituiert.

Als Diazo- und Kupplungskomponenten seien einzeln genannt:

### Diazokompanenten:

Aminobenzol, 1-Amino-2-, -3- oder -4-methylbenzol, 1-Amino-2-, -3-oder -4-methoxybenzol, 1-Amino-2-, - 3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothio-p-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3-oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3-oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-60-sulfonsäure, 1-Amino-4-acetylaminobenzol-2-sulfonsäure, 1-Amino-3-acetylamino-4-methylbenzo-6- sulfonsäure, 2-Amino-1-methylbenzol-3,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder 8-sulfonsäure, 1-Aminonaphthalin-3,6-oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxynaphthalin-4,8-disulfonsäure, 4-Aminoazabenzol-3,4'-disulfonsäure, 3-Methoxy-4-amino-6-methylazabenzol-2',4'-disulfonsäure, 3-Methoxy-4-amino-6-methylazobenzol-2',5'-disulfonsäure, 1,3-Diaminabenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin 3,3'-Dimethoxybenzidin, 3,3'-Dichlor-benzidin, 3,3'-Dicarboxybenzidin, 3,3'-Dicarboxymethoxy-benzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 4,4'-Diaminodiphenyloxid, 4,4'-Diaminodiphenytharnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyläthan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

### Kupplungskomponenten

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6-oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminabenzol-4-sulfonsäure, 1-Amino-naphthalin-6- oder -8-sulfonsäure, 1-Amino-2-methoxynaphthaiin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthatin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6-bzw. -4,6-disulfonsäure, 1-Acetytamino-8-hydroxynaphthalin-3,6-bzw. -4,6-disulfonsäure, 1-(4'-Aminobenzoylamino)-8-hydroxynaphthalin-3,6-bzw. -4,6-disulfonsäure, 1-(4-Nitrobenzoylamino)-8-hydroxynaphthalin-3,6-bzw. -4,6-disulfonsäure, 1-(3'-Aminobenzoylamino)-8-hydroxynaphthalin-3,6-bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methytpyrazolon-(5), 1-Phenyl-3-methyl-5-pyrazolon, 1-(4'-Sulfophenyl)-3-methyl-5-pyrazolon, 1-(4'Sulfopheny)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolan-3-carbonsäure, 1-(4',8'-Disulfonaphthyl-[2'])-3-methyl-5-pyrazolon, 1-(5',7'-Disulfonaphthyl-[2']-3-methyl-5-pyrazolon, 1-(2',5'-Dichlor-4'-sulfophenyl)-3-methyl-5-pyrazolon, 3-Aminocarbonyl-4-methyl-6-hydroxypyridion-(2), 1-Aethyl-3-cyan- oder -3-chlor-4-methyl-6-hydroxypyridan-(2), 1-Aethyl-3-sulfomethyl-4-methyl-6-hydroxypyridon-(2), 2,4,6-Triamino-3-cyanpyridin, 2-(3'-Sulfophenylamino)-4,6-diamino-3-cyanpyridin, 2-(2'-Hydroxyäthyl- amino)-3-cyan-4-methyl-6-aminopyridin, 2,6-Bis-(2'-hydroxyäthylamino)-3-cyan-4-methylpyridin, 1-Aethyl-3-Carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure, 1-β-Aminoäthyl-3-cyan-4-methyl-6-hydroxypyridon-(2), 1-γ-Aminopropyl-3-sulfomethyl-4-methyl-6-hydroxypyridon-(2), 1,3-Diaminabenzol, 1-Amino-3-N,N-di-β-hydroxyäthylaminobenzol, 1-Amino-3-N,N-di-β-sulfatoäthylaminobenzol, 1-Amino-3-N,N-di-β-hydroxyäthylamino-4-methoxybenzol, 1-Amino-3-N,N-di-β-sulfatoäthylamino-4-methoxybenzol, 1-Amino-3- sulfobenzylaminobenzol, 1-Amino-3-sulfo-benzylamino-4-chlorbenzol, 1-Amino-3-N,N-disulfobenzylaminobenzol.

### Triazine

2,4,6-Trifluor-s-triazin (Cyanurfluorid), 2,4,6-Trichlor-s-triazin (Cyanurchlorid), 2,4,6-Tribrom-s-triazin (Cyanurbromid), 2,4,6-Trisulfo-s-triazin, 2,4,6-Tris-methylsulfonyl-s-triazin, 2,4,6-Trisphenyl-sulfonyl-s-triazin.

### Amine der Formel H-A

Amine H-A, welche der Formel 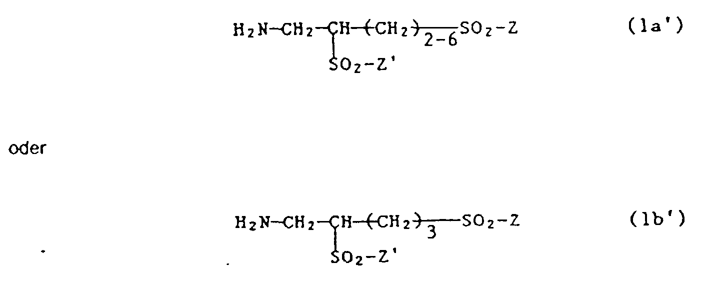 entsprechen, worin Z und Z' die unter Formel (1a) angegebenen Bedeutungen haben.

Einen weiteren Gegenstand der Erfindung bilden deren Vorprodukte, die entsprechenden Bis-β-hydroxyäthylthioäther-Verbindungen.

Bevorzugt sind die Amine der Formel

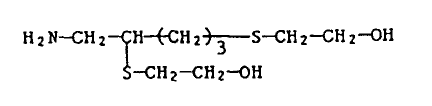

Die Verbindungen der Formeln (1a') und (1b') werden hergestellt, indem man ein geeignetes Dihalogenaminoalkan mit Mercaptoäthanol umsetzt und das erhaltene Bis-β-hydroxyäthylthio-aminoalkan mit elementarem Chlor zu dem entsprechenden Bis-β-chloräthylsulfonylaminoalkan oxydiert, und gegebenenfalls die β-chloräthylgruppen in andere Reste Z bzw. Z' überführt. Die Herstellung der Verbindung der Formel (Ib'), worin Z und Z' Chlor ist, ist in Beispiel 1 beschrieben.

Die Verbindungen der Formeln 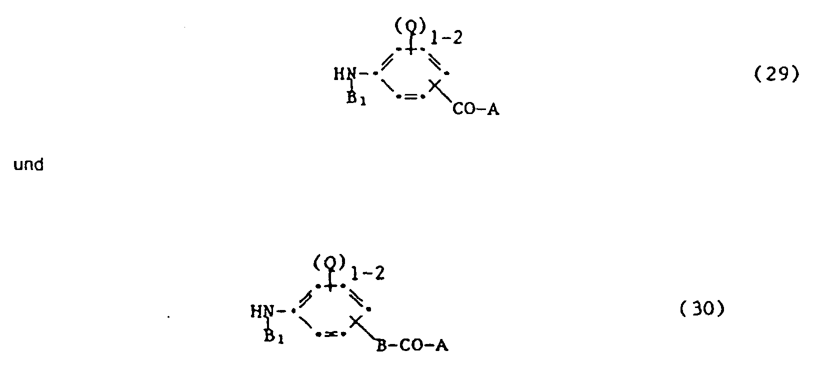 worin B, B₁, Q und A die unter den Formeln (2a) bis (2f) angegebenen Bedeutungen haben, können hergestellt werden, indem man entsprechende Nitrophenylcarbonsäurechloride bzw. Nitrophenyl- oder Nitrophenoxyalkansäurechloride mit Aminen der Formel H-A kondensiert, und die Nitrogruppe zur Aminogruppe reduziert.

Die Umsetzung wird vorzugsweise in einem hochsiedenden organischen Lösungsmittel, z.B. Nitrobenzol, durchgeführt. Die Reduktion der Nitrogruppe zur Aminogruppe erfolgt in an sich bekannter Weise durch katalytische Hydrierung mit Pd/Kohlenstoff in Aethanol, Essigester oder Tetrahydrofuran bei Raumtemperatur bis etwa 40°C. Die Reduktion kann auch mit Fe/Salzsäure oder Fe/Essigsäure in wässriger Lösung durchgeführt werden.

Die entsprechenden Hydroxyäthylthioäther-Verbindungen, welche ebenfalls als Zwischenprodukte verwendbar sind, können hergestellt werden, indem man das Säurechlorid mit einem Dihalogenalkylamin kondensiert, und das Kondensationsprodukt mit 2-Mercaptoäthanol und Natriumalkoholat in Alkohol erwärmt. Die Thioätherverbindungen werden dann noch zu den entsprechenden Sulfonen oxydiert.

Die Oxydation der Thioätherverbindungen zu den Sulfonen kann nach verschiedenen Methoden erfolgen, beispielsweise mit Wasserstoffperoxid mit oder ohne Zusatz von Wolfram- oder Vanadinverbindungen als Katalysatoren, ferner mit Peressigsäure, Kaliumpermanganat, Kaliumpersulfat oder Chromsäure, oder mit Chlor/Salzsäure je in wässrigem, wässrig-organischem oder organischem Medium.

Die so erhältlichen Amine bzw. Carbonsäureamide, in denen die Gruppierung -SO₂-Z bzw. -SO₂-Z' eine β-Hydroxyäthylsulfonylgruppe darstellt, können durch Behandeln mit Sulfatierungsmitteln, Phosphorylierungsmitteln, Halogenierungsmitteln, Alkyl- oder Arylsulfonsäurehalogeniden Alkyl- oder Arylcarbonsäurehalogeniden oder Alkyl- oder Arylcarbonsäureanhydriden in die entsprechenden Farbstoffvorprodukte übergeführt werden, in denen die Gruppierung -SO₂-Z z.B. die Gruppierung -SO₂-CH₂-CH₂-O-SO₃H, -SO₂-CH₂-CH₂-O-PO₃H₂, -SO₂-CH₂-CH₂-Halogen, -SO₂-CH₂-CH₂-O-CO-CH₃ oder -SO₂-CH₂-CH₂-O-CO-C₆H₅ bedeutet Die so erhaltenen Produkte können ihrerseits durch Behandeln mit alkalisch wirkenden Mitteln, wie beispielsweise Alkalihydroxid oder Alkalicarbonat, wie Natriumhydroxyd oder Natriumcarbonat, in entsprechende Verbindungen übergeführt werden, in denen die Gruppierung -SO₂-Z die Gruppierung -SO₂-CH=CH₂ bedeutet. Die so erhaltenen Produkte können wiederum durch Umsetzung (Addition) mit Salzen der Thioschwefelsäure, wie Natriumthiosulfat, in Verbindungen übergeführt werden, in denen die Gruppierung - SO₂-Z die Gruppierung -SO₂-CH₂-CH₂-S-SO₃H bedeutet.

Geeignete Sulfatierungsmittel sind hierbei beispielsweise konzentrierte Schwefelsäure sowie Chlorsulfonsäure und Amidosulfonsäure oder andere Schwefeltrioxid abgebende Verbindungen. Geeignete Phosphorylierungsmittel sind hierbei beispielsweise konzentrierte Phosphorsäure, Pyro-, Meta-oder Polyphosphorsäure, Polyphosphorsäurealkylester, Phosphoroxichlorid oder Gemische aus Phosphorsäure und Phosphor-(V)-oxid. Als Halogenierungsmittel können beispielsweise Thionylchlorid oder Thionylbromid verwendet werden.

Bevorzugt sind Verbindungen der Formel 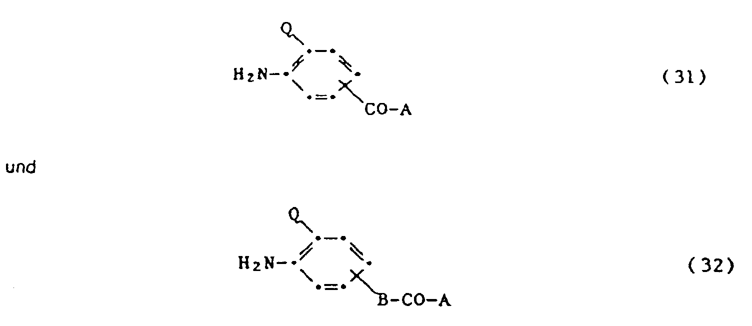 worin B, Q und A die bei der Erläuterung der Formeln (2a) bis (2f) angegebenen Bedeutungen haben.

Nach einer Abänderung des oben beschriebenen Verfahrens können Verbindungen der Formeln (29) bis (32) auch in der Weise hergestellt werden, dass man ein Nitrophenylcarbonsäurechlorid bzw. Nitrophenyl-oder Nitrophenoxyalkansäurechlorid mit einem bei der Synthese des Amins der Formel H-A auftretenden Zwischenprodukt, der entsprechenden Dihydroxydithioätherverbindung kondensiert. Anschliessend wird das Kondensationsprodukt mit elementarem Chlor zu der entsprechenden β-Chloräthylsulfonyl-Verbindung oxydiert, und die Nitrogruppe zur Aminogruppe reduziert.

Ferner ist noch eine andere Verfahrensvariante anwendbar, wonach man zuerst das erhaltene Zwischenprodukt mit einem Peroxid zum Sulfon oxydiert, dann die Nitrogruppe zur Aminogruppe reduziert, und zuletzt die Hydroxygruppen in dem Rest des Amins sulfatiert.

Die Kondensation der Säurechloride mit den Aminen der Formel H-A bzw. deren Zwischenprodukten wird z.B. in Chloroform oder Toluol bei Raumtemperatur und in Gegenwart von alkalischen, säurebindenden Mitteln, z.B. Alkalihydroxiden, -carbonaten oder -bicarbonaten, durchgeführt. Anschliessend wird das Kondensationsprodukt in an sich bekannter Weise mit einer Chlor/Salzsäure-Mischung oxydiert. Die Reduktion der Nitrogruppe zur Aminogruppe erfolgt wie oben beschrieben.

Die bevorzugten Reaktivfarbstoffe der Formeln (19) bis (25) werden durch schrittweise Kondensation und Kupplung hergestellt.

Die Kondensation eines s-Triazins, insbesondere eines 2,4,6-Trihalogen-s-triazins mit den organischen Farbstoffen bzw. den eine Gruppe -N(R)H enthaltenden diazotierbaren und/oder kupplungsfähigen Komponenten erfolgt vorzugsweise in wässriger Lösung oder Suspension, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogen-s-triazins mit den Aminen der Formel H-A bzw. den Verbindungen der Formeln (29) bis (32) setzt man die freien Amine oder deren Salze, bevorzugt in Form des Hydrochlorids, ein.

Die Umsetzung wird bei Temperaturen etwa zwischen 0 und 40°, bevorzugt zwischen 5 und 25°C, unter Zusatz säurebindender Mittel, bevorzugt Natriumcarbonat, in einem pH-Bereich von 2 bis 8 bevorzugt 5 bis 6,5, durchgeführt.

Die Kondensation des Halogentriazins mit den genannten Aminen kann vor oder nach der Kondensation des Halogentriazins mit einem Farbstoff geschehen. Die Kondensation des Halogentriazins mit einem der genannten Amine erfolgt vorzugsweise in wässriger Lösung oder Suspension, bei niedriger Temperatur und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Falls in den ebenfalls bevorzugten Reaktivfarbstoffen der Formeln (16) bis (18) oder ähnlichen der Rest R₁₂ ein Monochlor- oder Monofluortriazinrest ist, der einen nichtfaserreaktiven Substituenten enthält, so kann dieser in an sich bekannter Weise in den Triazinring eingeführt werden, indem durch vorhergehende oder nachträgliche Kondensation mit einer Amino-, Hydroxy- oder Mercaptoverbindung ein Halogenatom am Triazinring gegen einen Amino-, Alkoxy-, Aryloxy-, Alkylthio oder Arylthiorest ausgetauscht wird. Als Beispiele für derartige Amino-, Hydroxy- und Mercaptoverbindungen seien die folgenden genannt: Ammoniak, Methylamin, Dimethylamin, Aethylamin, Diäthylamin, Propylamin, Isopropylamin, Butylamin, Dibutylamin, Isobutylamin, sek.-Butylamin, tert.-Butylamin, Hexylamin, Methoxyäthylamin, Aethoxyäthylamin, Methoxypropylamin, Chloräthylamin, Hydroxyäthylamin, Dihydroxyäthylamin, Hydroxypropylamin, Aminoäthansulfonsäure, β-Sulfatoäthylamin, Benzylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Aethylanilin, 3- oder 4-Acetylaminoanilin, 2,5-Dimethoxyanilin, o-, m- und p-Anisidin, o-, m- und p-Phenetidin, Naphthylamin-(1), Naphthylamin-(2), Orthanil-säure, Metanilsäure, Sulfanilsäure, Anilin-2,4-disulfonsäure, Anilin-2,5-disulfonsäure, Anthranilsäure, m- und p-Aminobenzoesäure, 2-Amino-toluol-4-sulfonsäure, 2-Aminotoluol-5-sulfonsäure, p-Aminosalicylsäure, 1-Amino-4-carboxybenzol-3-sulfonsäure, 1-Amino-2-carboxybenzol-5-sulfonsäure, 1-Amino-5-carboxybenzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5-7-, -3,6,8- und -4,6,8-trisulfonsäure, 2-Naphthylamin-1,3,7-, -1,5,7-, -3,5,7-, -3,6,7-, -3,6,8- und 4,6,8-trisulfonsäure, 2-, 3-und 4-Aminopyridin, 2-Aminobenzthiazol, 5-, 6- und 8-Aminochinolin, 2-Aminopyrimidin, Morpholin, Piperidin, Piperazin, Wasser, Methanol, Aethanol, Propanol, Isopropanol, n-Butanol, Isobutanol, sek.-Butanol, tert-Butanol, Hexanol, Cyclohexanol. β-Methoxyäthanol, β-Aethoxyäthanol, γ-Methoxypropanol, γ-Aethaxypropanol, β-Aethoxy-β-äthoxyäthanol, Glycolsäure, Phenol, o-, m- und p-Chlorphenol, Methanthiol, Aethanthiol, Propanthiol, Isopropanthiol, n-Butanthiol, Thioglycolsäure, Thioharnstoff, Thiophenol, α-Thionaphthol, β-Thionaphthol.

Ferner kommen hier auch viele als Diazokomponenten geeignete Verbindungen in Betracht, insbesondere jene, die einen Vinylsulfonylrest oder einen gleichwertigen oder ähnlichen Reaktivrest enthalten, sowie auch die Verbindungen:
3-N-Aethylaminobenzoesäure-N'-β-(β'-chloräthylsulfonyl)-äthylamid,
3-N-Isopropylaminobenzoesäure-N'-β-(β'-chloräthylsulfonyl)-äthylamid,
3-N-Isopropylaminobenzoesäure-N'-γ-(β'-chloräthylsulfonyl)-propylamid,
4-N-Aethylaminobenzoesäure-N'-β-(β'-chloräthylsulfonyl)-äthylamid,
4-N-Isopropylaminobenzoesäure-N'-γ-(β'-chloräthylsulfonyl)-propylamid.

Die Kondensation der Halogentriazine mit den genannten Amino-, Hydroxy-oder Mercaptoverbindungen erfolgt in an sich bekannter Weise, vorzugsweise in Gegenwart von alkalischen Mitteln.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose z.B. Viscose, ferner Modalfasern und deren Mischungen mit Baumwolle. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die Reaktivfarbstoffe der Formel (1) können auch in Mischungen untereinander oder in Mischungen mit anderen Reaktivfarbstoffen oder nicht reaktiven Farbstoffen, z.B. Säurefarbstoffen oder Dispersionsfarbstoffen, zum Färben oder Bedrucken der genannten Fasermaterialien verwendet werden.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Falls die Reaktivfarbstoffe der Formel (1), worin D der Rest eines Anthrachinonfarbstoffes ist, eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen z.B. ein Naphthalinsulfonsäure-Formaldehyd-Kondensat oder insbesondere Anthrachinon-2-sulfonsäure, behoben werden.

Die Reaktivfarbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern. z.B. von Wolle oder Seide oder von Mischgeweben, die Wolle oder Seide enthalten.

Die mit den erfindungsgemässen Farbstoffen hergestellten Färbungen und Drucke auf Cellulosefasersmaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

### Beispiel 1:

### A: Synthese von 2,5-Dichloraminapentan-hydrochlorid aus Tetrahydrofurfurylamin-hydrochlorid

137,5 Teile Tetrahydrofurfurylaminhydrochlorid werden mit 1500 Teilen Salzsäure (chem. rein) bei Raumtemperatur versetzt Anschliessend wird die Reaktionslösung in einer Druckapparatur auf 130°C erwärmt. Dabei steigt der Druck bis auf 8 bar. Nach 24 Stunden Reaktionsdauer wird die Temperatur auf 25°C abgekühlt. Die dunkelbraune Lösung wird mit Aktivkohle behandelt und klärfiltriert, und die Mutterlauge wird im Rotationsvacuum-Apparat eingeengt. Nach der Umkristallisation aus 1200 Teilen Aethanol erhält man 130 Teile eines analysenreinen Produktes, 2,5-Dichloraminopentan-hydrochlorid, mit folgender Formel

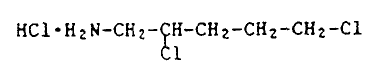

| Analyse: Formel C₅H₁₂Cl₃N (MG = 192,52) | |
|---|---|
| Berechnet | Gefunden |
| 31,20 % C | 30,8 % C |
| 6,29 % H | 6,4 % H |
| 7,28 % N | 6,9 % N |
| 55,25 % Cl | 54,85 % Cl |

### B: Umsetzung von 2,5-Dichloraminopentanhydrochlorid mit 2 Mol 2-Mercaptoäthanol und anschliessende Chloroxydation zu 2,5-Bis-β-chloräthylsulfonylaminopentan-hydrochlorid

25,2 Teile Natriumhydroxidplätzchen werden in 250 Teilen Aethanol (94%ig) bei Raumtemperatur gelöst. Zu dieser Lösung gibt man 32 Teile 2-Mercaptoäthanol so zu, dass die Temperatur nicht über 35°C steigt. Nun wird die Lösung auf 70°C erwärmt, und bei dieser Temperatur werden innerhalb einer Stunde 38,5 Teile 2,5-Dichloraminopentanhydrochlorid gelöst in 240 Teilen Aethanol (94%ig) zugetropft. Anschliessend wird die Reaktionsmasse 3 Stunden unter Rückfluss verrührt. Nun wird Aktivkohle zugesetzt und auf Raumtemperatur abgekühlt. Als ausgefallene Salz wird nun durch Filtration entfernt und das Filtrat unter reduziertem Druck abdestilliert. Als Rückstand verbleibt ein Oel, das sich ab ca. 160°C zersetzt. Die Verbindung hat die Formel

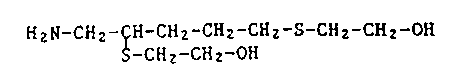

| Analyse: Formel C₉H₂₁N₁O₂S₂ (MG = 239,40) | |
|---|---|
| Berechnet | Gefunden |
| 45,2 % C | 45,0 % C |
| 8,8 % H | 8,6 % H |
| 5,9 % N | 5,9 % N |
| 26,7 % S | 25,9 % S |

Der Rückstand wird in 200 Teilen Wasser gelöst und bei max. 33°C mit 70 Teilen Salzsäure (37%ig) versetzt. Dann werden unter Eiskühlung bei 15-20°C innerhalb einer Stunde 60 Teile Chlorgas über Niveau eingeleitet, bis keine Chloraufnahme mehr beobachtet wird. Nun wird unter Wasserstrahlvacuum die Salzsäure abdestilliert; Rohausbeute: 55 Teile.

Nach der Umkristallisation aus Methanol und Aktivkohle erhält man das analysenreine Produkt 2,5-Bis-β-chloräthylsulfonylaminopentanhydrochlorid mit einem Schmelzpunkt von 99°-101°C und folgender Formel

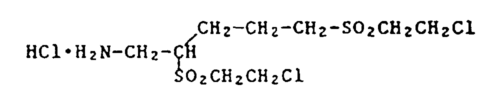

| Analyse: Formel C₉H₁₉Cl₂NO₄S₂·HCl (MG = 376,74) | |
|---|---|
| Berechnet | Gefunden |
| 28,69 % C | 28,5 % C |
| 5,35 % H | 5,8 % H |
| 3,72 % N | 3,7 % N |
| 17,02 % S | 16,7 % S |
| 28,23 % Cl | 27,95 % Cl |

Das 20,1 MHz-¹³C-Spektrum in DMSO sieht wie folgt aus:

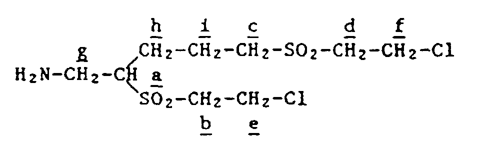

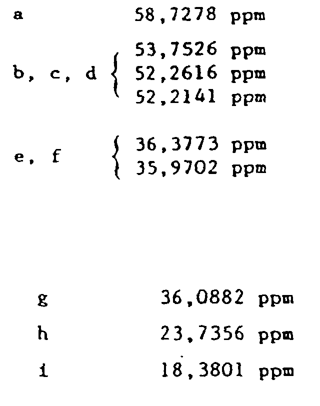

### Beispiel 2:

Zu 23,9 g 1-Aminopentan-2,5-bis-(β-hydroxyäthyl-thioäther) gibt man eine Lösung von 4 g Natriumhydroxid in 12 ml Wasser und lässt dann im Laufe von 45 Minuten bei 20 bis 30°C eine Lösung von 20,5 g m-Nitrobenzoylchlosid in 40 ml Toluol zutropfen. Man rührt das Reaktionsgemisch noch 2 Stunden bei 30 bis 40°C und destilliert dann am Rotavapor Toluol und Wasser ab. Nun versetzt man den Rückstand mit 100 ml Wasser, 100 ml Aethanol und 20 g Soda, rührt das Gemisch 2 Stunden bei 75 bis 80°C, kühlt es dann auf 40°C ab und destiliert Wasser und Aethanol unter Vakuum ab. Der ölige Rückstand wird in 200 ml Essigsäureäthylester aufgenommen, umgelöstes Material wird abfiltriert, und das Lösungsmittel wird unter Vakuum abdestilliert. Das Produkt liegt als gelbes, sehr viskoses Oel vor. Die Verbindung entspricht der Formel

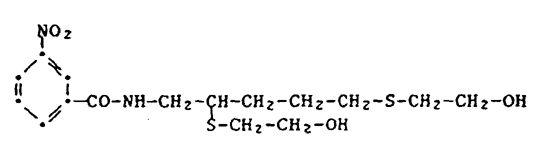

| Analyse: C₁₆H₂₄N₂O₅S₂ | |
|---|---|
| Berechnet | Gefunden |
| 49,5 % C | 49,0 % C |
| 6,2 % H | 6,3 % H |
| 7,2 % N | 6,9 % N |
| 16,5 % S | 16,8 % S |

Verwendet man statt des m-Nitrobenzoylchlorids die p-Verbindung und verfährt ansonsten wie oben, so erhält man das entsprechende p-Nitrobenzamid

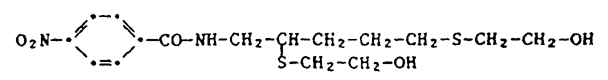

| Analyse: C₁₆H₂₄N₂O₅S₂ | |
|---|---|
| Berechnet | Gefunden |
| 49,5 % C | 49,4 % C |
| 6,2 % H | 6,5 % H |
| 7,2 % N | 6,8 % N |
| 16,5 % S | 17,1 % S |

Zur Gewinnung der Verbindungen, welche den Formeln (31) und (32) entsprechen, werden die Produkte wie vorn angegeben weiterverarbeitet.

Die in verschiedenen Beispielen als Ausgangsstoffe verwendeten, mit Produkt 1 bis V bezeichneten Verbindungen haben folgende Formeln:

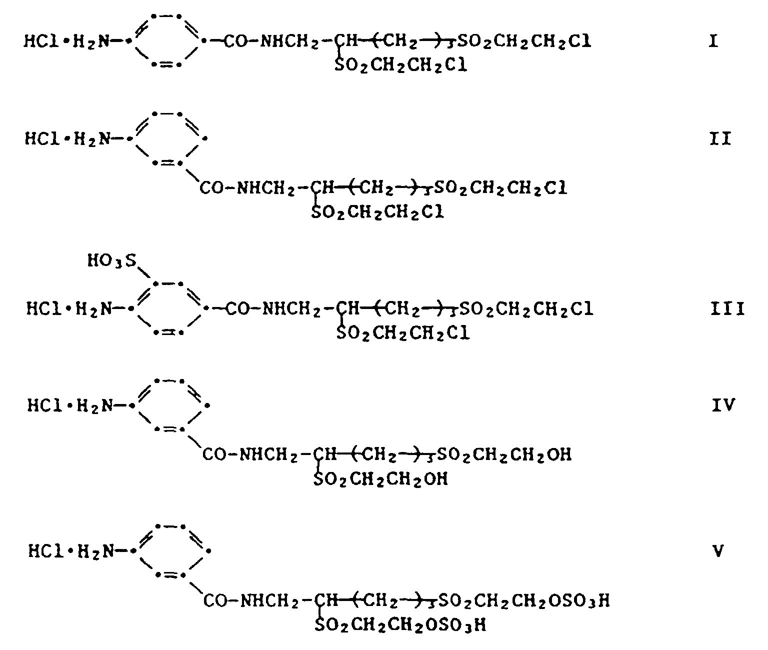

### Beispiel 3:

Die salzsauer diazotierte Lösung von 43 Teilen von Produkt 1 wird bei 0 bis 5° und pH = 5 bis 6 zu einer Lösung von 28,4 Teilen 1-(2'-Sulfophenyl)-3-carboxy-5-pyrazolon gegeben und gekuppelt. Der gelbe Monoazofarbstoff wird isoliert; er entspricht der Formel

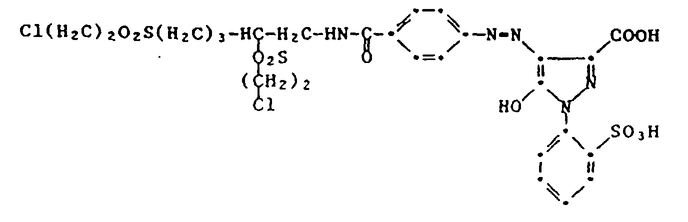

### Beispiel 4:

Die salzsauer diazotierte Lösung von 43 Teilen von Produkt II wird bei 0 bis 5° und pH = 4 bis 5 zu einer Lösung von 23 Teilen 3-Aminoacetanilid-4-sulfonsäure gegeben und gekuppelt. Der gelbe Monoazofarbstoff wird bei pH 10,0 und Raumtemperatur 30 Minuten lang vinyliert und anschliessend neutral isoliert er entspricht der Formel

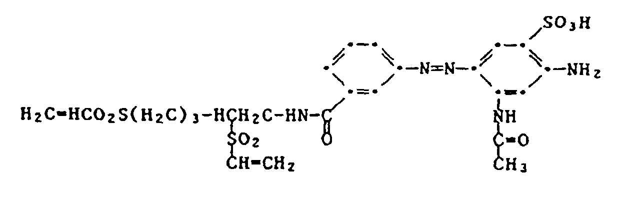

### Beispiel 5:

Die salzsauer diazotierte Lösung von 54 Teilen von Produkt III wird bei 0 bis 5° und pH = 5 bis 7 zu einer Lösung von 29 Teilen 1-Aethyl-3-aminocarbonyl-4-methyl-5-sulfomethyl-6-hydroxypyridon-2 gegeben und gekuppelt Der gelbe Monoazofarbstoff wird nach der Vinylierung isoliert, er entspricht der Formel

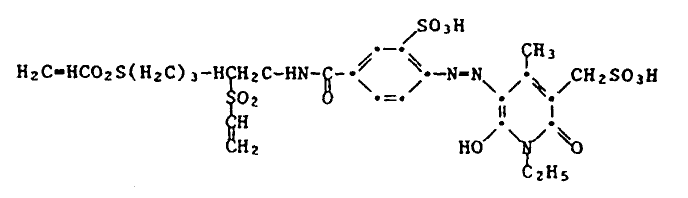

Nach der in Beispiel 3 beschriebenen Verfahrensweise lassen sich auch die Reaktivfarbstoffe der folgenden Formeln herstellen.

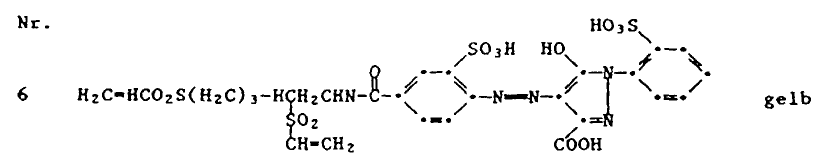

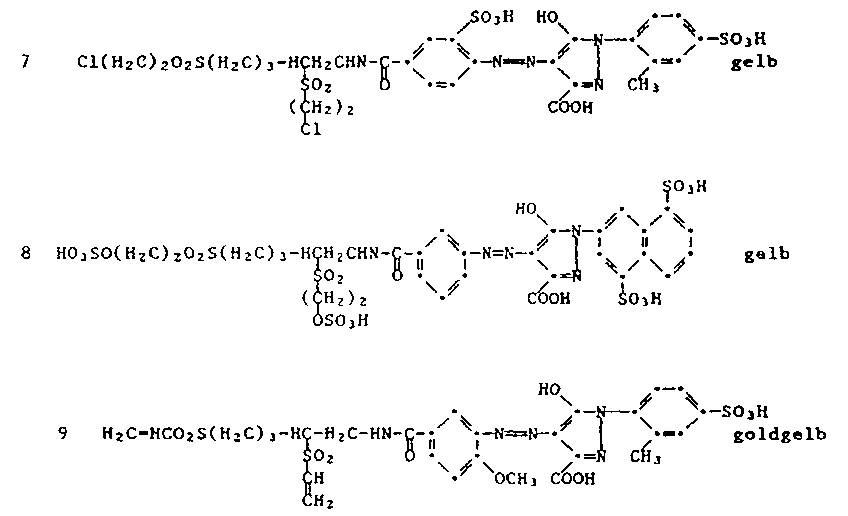

### Beispiel 10:

Zu einer salzsauer diazotierten Lösung von 108 Teilen von Produkt III werden 1200 Teile einer neutralen Lösung von 56,2 Teilen 2-Acetylamino-5-naphthol-7-sulfonsäure in 400 Teilen Eis/Wasser-Mischung getropft und bei pH 6 bis 7 gekuppelt. Anschliessend wird der Farbstoff bei pH 10,0 und Raumtemperatur vinyliert und dann neutral mit Kochsalz abgeschieden.

Das Pressgut wird durch Zerstäubungstrocknung getrocknet. Man erhält ein Pulver, das Baumwolle in reinen orangen Tönen färbt, und folgende Struktur aufweist

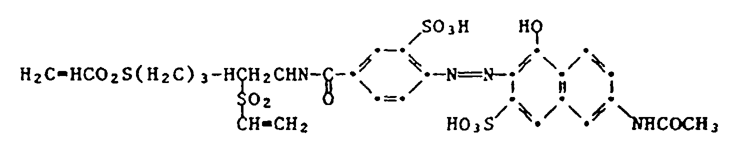

Weitere Farbstoffe, die nach der in Beispiel 10 gegebenen Vorschrift hergestellt werden können, sind die Reaktivfarbstoffe der folgenden Formeln.

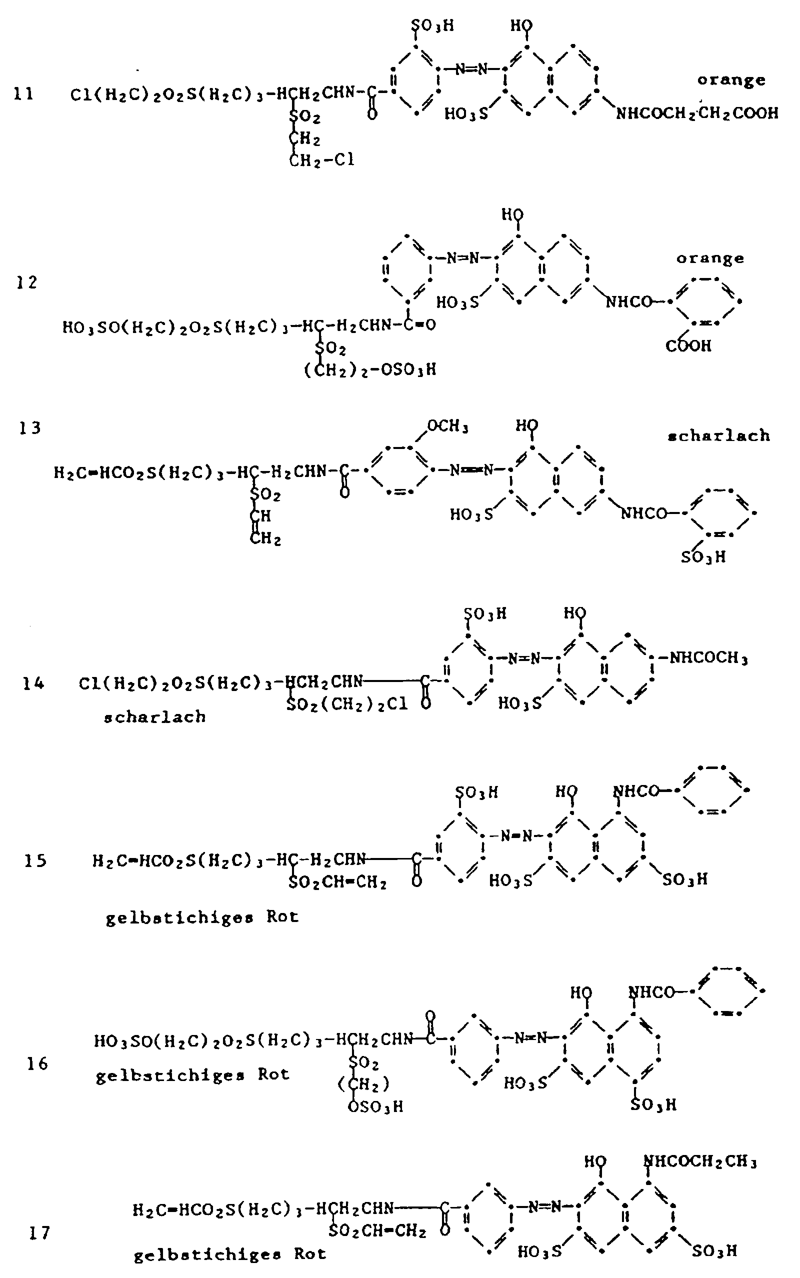

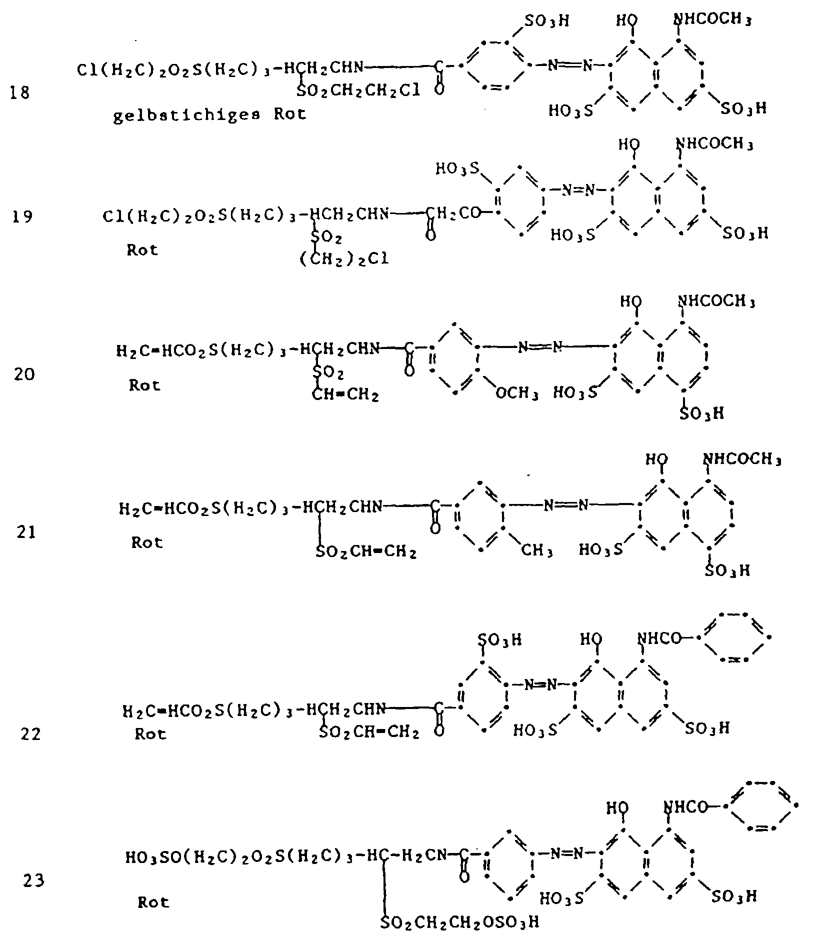

### Beispiel 24:

70,25 Teile 4-β-Sulfatoäthylsulfonyl-anilin werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31%igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40%igen wässrigen Natriumnitritlösung durchgeführt. Anschliessend wird ein geringer Ueberschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansatz 4 bis 5 Stunden bei einer Temperatur zwischen 4 und 8°C und einem pH-Wert zwischen 1 und 2 gerührt, Nach dieser Reaktionszeit wird der pH-Wert mit Natriumcarbonat auf 6,0 eingestellt.

In einem separaten Ansatz werden 135 Teile von Produkt III analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansalz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel 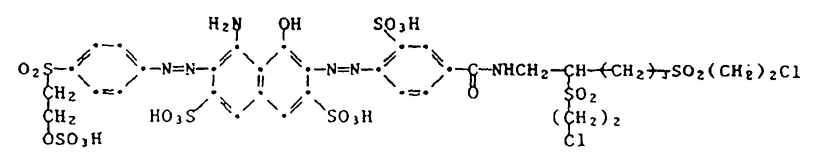 enthält, diese eignet sich sehr gut als Farbstoff zum Färben von Cellulosefasermaterialien nach den in der Technik üblichen, bekannten Färbe-und Druckmethoden und gängigen Fixiermethoden für faserreaktive Farbstoffe; sie liefert auf diesen Materialien marineblaue Farbtöne mit guten Echtheitseigenschaften.

### Beispiel 25:

Die wässrige Lösung des in Beispiel 24 erwähnten Farbstoffes wird bei Raumtemperatur und pH-Wert 10 etwa 30 Minuten lang vinyliert. Anschliessend wird der pH-Wert mit Salzsäure auf 5,0 zurückgestellt und der Monoazofarbstoff sprühgetrocknet. Er entspricht der Formel 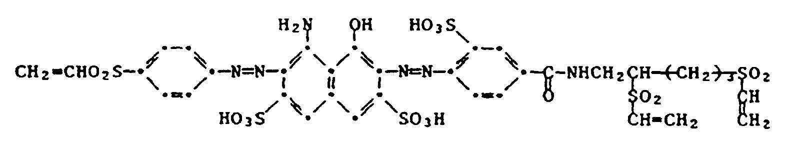 und färbt Baumwolle in marineblauen Farbtönen mit sehr guten Echtheitseigenschaften.

### Beispiel 26:

44 Teile Anilin-p-sulfonsäure werden in 200 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31%igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40%igen wässrigen Natriumnitritlösung durchgeführt; anschliessend wird ein geringer Ueberschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansalz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 135 Teile von Produkt III analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt Die hergestellte Disazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel 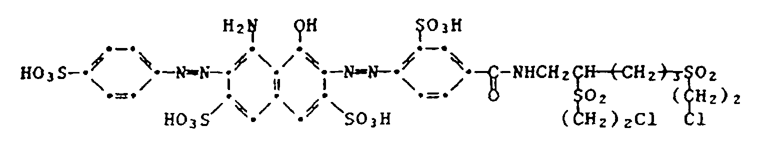 enthält und Baumwolle in marineblauen Farbtönen mit sehr guten Echtheitseigenschaften färbt.

### Beispiel 27:

Die salzsauer diazotierte Lösung von 54 Teilen von Produkt III wird bei 0 bis 5°C und pH = 5 bis 6 zu einer Lösung von 29.9 Teilen 1-(2'-Sulfo-5'-aminophenyl)-3-carboxy-5-pyrazolon gegeben und gekuppelt. Der gelbe Monoazofarbstoff wird anschliessend mit einer Suspension von 18,8 Teilen Cyanurchlorid versetzt und bei pH = 6 acyliert.

Der gebildete Chlortriazinfarbstoff wird isoliert; er entspricht der Formel

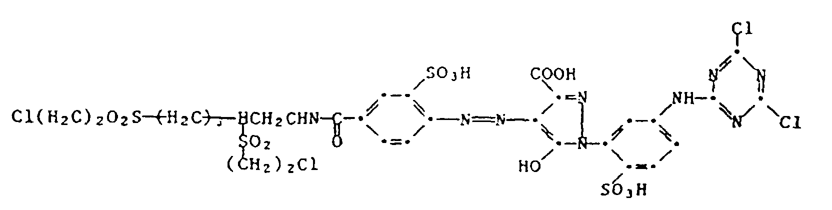

### Beispiel 28:

195 Teile Cyanurchlorid werden in 800 Volumenteilen Aceton gelöst; unter gutem Rühren gibt man diese Lösung in eine Mischung von 1300 Teilen Wasser und 1300 Teilen zerstossenem Eis sowie 20 Volumenteilen einer 2n-Salzsäure. Zu dieser so erhaltenen Suspension lässt man innerhalb von 50 bis 60 Minuten unter Rühren eine Lösung mit einem pH-Wert von 6,9 bis 7,2 aus 239 Teilen 2-Amino-5-naphthol-7-sulfonsäure, 65 Teilen Natriumcarbonat und 2000 Teilen Wasser einlaufen. Die Umsetzung des Cyanurchlorids mit dem Aminonaphthol wird bei einer Temperatur zwischen 0 und 5°C und einem pH-Wert von 3 bis 5 durchgeführt. Es wird so lange gerührt, bis kein freies Amin mehr durch eine Diazotierungsprobe nachweisbar ist.

Die so hergestellte Lösung der Kupplungskomponente wird mit 540 Teilen von Produkt III versetzt. Man rührt 2 Stunden lang und erhöht in dieser Zeit durch portionsweises Einstreuen von Natriumcarbonat den pH-Wert auf 6,5 bis 7,0. Es wird noch eine Stunde bei diesem pH-Wert und bei Raumtemperatur weitergerührt. Anschliessend gibt man 173 Teile Anilin-m-sulfonsäure und portionsweise etwa 110 Teile Natriumcarbonat hinzu, um den pH-Wert auf 5,0 bis 6,0 zu halten. Diese Reaktionslösung wird auf 50°C erwärmt und unter Rühren bei dieser Temperatur eine Stunde gehalten. Nach dem Abkühlen der Reaktionslösung wird die gebildete Azoverbindung mittels Natriumchlorid ausgefällt, abgesaugt und bei 60°C unter reduziertem Druck getrocknet. Es wird ein rotes, elektrolythaltiges Pulver erhalten, das das Natriumsalz der Verbindung der Formel 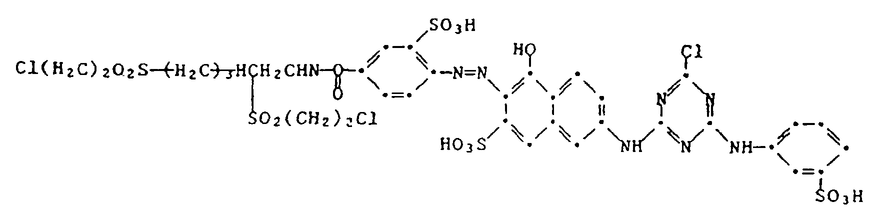 enthält.

Diese Azoverbindung eignet sich hervorragend als Farbstoff. In Folge seiner faserreaktiven Eigenschaften liefert er beispielsweise aus wässrig-alkalischer Flotte nach einem üblichen Auszieh- oder Klotzverfahren farbtiefe, orange Färbungen auf Baumwollfasern. Die Färbungen besitzen sehr gute Wasch- und Lichtechtheiten.

### Beispiel 29:

64 Teile 1-Amino-8-naphthol-3,6-disulfonsäure werden in 800 Teilen Wasser unter Zusatz von 30%iger Natriumhydroxidlösung bei pH 5,0 gelöst. Man erwärmt dann auf 30°C und lässt 42 Teile 2,4-Dichlor-6-isopropoxy-triazin zutropfen, wobei der pH-Wert durch Eintropfen von 2n-Natriumhydroxidlösung bei pH 4,0 bis 4,5 gehalten wird. Es wird 15 Stunden bei pH 4,0 bis 4,5 und 65°C kondensiert.

Die Lösung wird als Kupplungskomponente zur Farbstoffherstellung eingesetzt.

Zur Herstellung der Diazoniumverbindung werden 86 Teile von Produkt II in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel 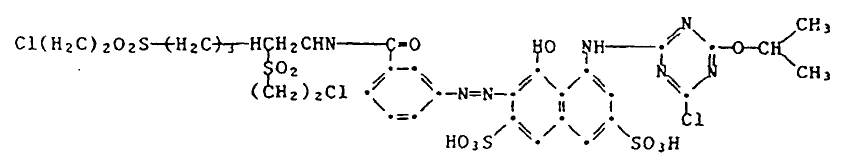 enthält.

Diese Verbindung besitzt sehr gute Farbstoffeigenschaften und färbt Cellulosematerialien nach den üblichen Färbe- und Druckverfahren für Reaktivfarbstoffe in roten Tönen mit sehr guten Nassechtheitseigenschaften.

### Beispiel 30:

64 Teile 1-Amino-8-napthol-3,6-disulfonsäure werden in 800 Teilen Wasser unter Zusatz von 30%iger Natriumhydroxidlösung bei pH 9,0 bis 9,5 gelöst. Man kühlt dann auf 10°C ab und lässt 34 Teile 2,4,6-Trifluor-5-chlor-pyrimidin zutropfen, wobei der pH-Wert durch Eintropfen von 5n-Natriumhydroxidlösung bei pH 9,25 bis 9,5 gehalten wird. Es wird 15 Minuten bei pH 8,5 bis 9 und 15°C nachgerührt und dann mit 4n-Salzsäurelösung versetzt, bis der pH-Wert von 6,5 erreicht wird.

Die Lösung wird als Kupplungskomponente zur Farbstoffherstellung eingesetzt.

Zur Herstellung der Diazoniumverbindung werden 108 Teile von Produkt III in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes elektrolythaltiges Farbstoffpulver erhalten, das das Natriumsalz der Verbindung der Formel 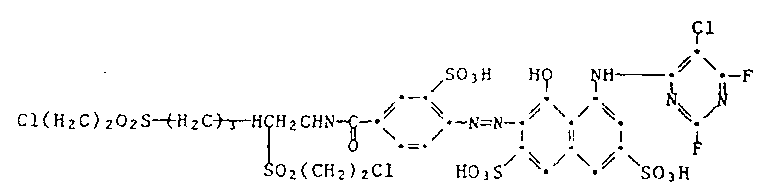 enthält.

Diese Verbindung besitzt sehr gute Farbstoffeigenschaften und färbt Cellulosematerialien nach den üblichen Färbe- und Druckverfahren für Reaktivfarbstoffe in blaustichig roten Tönen mit sehr guten Nassechtheitseigenschaften.

### Beispiel 31:

64 Teile 1-Amino-8-napthol-3,6-disulfonsäure werden in 800 Teilen Wasser unter Zusatz von 30%iger Natriumhydroxidlösung bei pH 5,0 gelöst. Man erwärmt dann auf 60°C und lässt 45 Teile 2,4,5,6-Tetrachlor-pyrimidin zutropfen, wobei der pH-Wert durch Eintropfen von 5n-Natriumhydroxidlösung bei pH 4,0 bis 4,5 gehalten wird. Es wird 15 Stunden bei pH 4,0 bis 4,5 und 65°C kondensiert.

Die Lösung wird als Kupplungskomponente zur Farbstoffherstellung eingesetzt.

Zur Herstellung der Diazoniumverbindung werden 108 Teile von Produkt III in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel 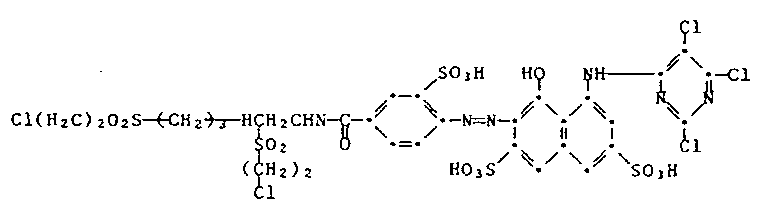 enthält.

Diese Verbindung besitzt sehr gute Farbstoffeigenschaften und färbt Cellulosematerialien nach den üblichen Färbe- und Druckverfahren für Reaktivfarbstoffe in roten Tönen mit sehr guten Nassechtheitseigenschaften.

### Beispiel 32:

31,9 Teile 1-Amino-8-hydroxynaphthalin-3,6-disulfonsäure werden in 800 ml Wasser neutral gelöst und die Lösung auf 0 bis 5°C abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n-Natriumhydroxydlösung schwach kongosauer gehalten wird. Nach Zusatz einer auf pH 5 gestellten Mischung von 11 Teilen N-Methylanilin in 100 ml Wasser wird der pH der Reaktionsmischung durch ständige Zugabe von 2n-Natriumhydroxydlösung zuerst kurze Zeit schwach kongosauer und dann bei 5 bis 6 gehalten. Dabei wird die Temperatur innert 2 bis 3 Stunden auf 20 bis 25°C erhöht. Nach vollständiger Reaktion wird dieses Zwischenprodukt bei 0 bis 10°C und pH 6,5 mit 54 Teilen von diazotiertem Produkt III gekuppelt. Nach vollständiger Kupplungsreaktion bei pH 8 wird die Reaktionsmischung geklärt und der gebildete Reaktivfarbstoff der Formel 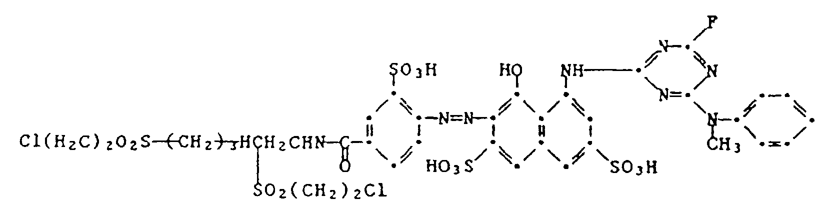 durch Eindampfen oder Gefriertrocknen der Reaktionslösung bei pH 7 isoliert. Er färbt Baumwolle in roten Tonen.

### Beispiel 33:

54,5 Teile des Farbstoffes 2-(4'-Amino-2'-ureido-phenylazo)-naphthalin-3,6,8-trisulfonsäure werden mit 250 Teilen Wasser neutral gelöst. Die neutrale Lösung wird auf 0°C abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxidlösung bei 6-6,5 gehalten wird. Nach Zugabe von 38 Teilen 2,5-Bis-β-chloräthylsulfonyl-aminopentanhydrochlorid in 100 ml Wasser wird die Temperatur auf 20° bis 25°C erhöht und der pH bei 5,5-6,5 gehalten.
Reaktionsdauer ca. 3 Stunden. Dann wird bei pH 10,0 20 Minuten lang vinyliert.

Der entstandene Farbstoff der Formel: 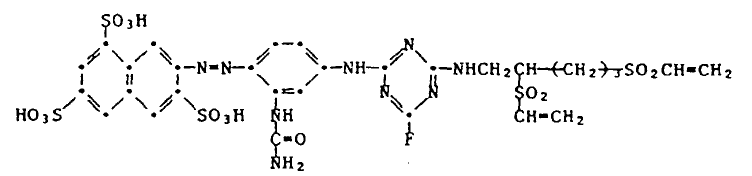 wird neutral durch Zugabe von Kochsalz abgeschieden und im Vakuum bei 40 bis 50° getrocknet.

### Beispiel 34:

54,5 Teile des Farbstoffes 2-(4'-Amino-2'-ureido-phenylazo)-naphthalin-3,6,8-trisulfonsäure werden mit 250 Teilen Wasser neutral gelöst. Diese neutrale Lösung gibt man zu einer wie im Beispiel 5 hergestellten Suspension von Cyanurchlorid in Aceton und Wasser. Durch Kühlung mit Eis hält man die Temperatur bei 0° bis 3°. Im Verlauf der Acylierungsreaktion werden 9 g Bicarbonat so eingetragen, dass der pH zwischen 5,5 und 7 bleibt. Wenn kein Ausgangsfarbstoff mehr im Chromatogramm nachweisbar ist, gibt man 38 Teile 2,5-Bis-β-chloräthylsulfonylaminopentanhydrochlorid in Form einer ca. 50%igen Paste zu und erwärmt auf 50°. Durch Zugabe von weiteren 18 g Bicarbonat hält man den pH-Wert in den Grenzen von 4,5 bis 6,0. Die Reaktion ist beendet, wenn kein weiteres Alkali mehr verbraucht wird. Der entstandene Farbstoff der Formel: 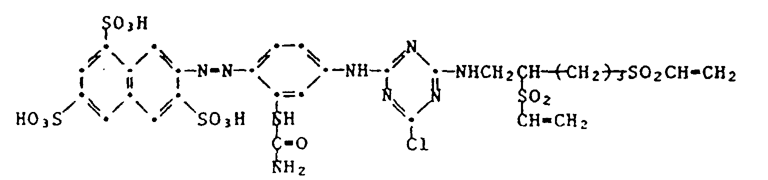 wird nach der Vinylierung neutral durch Zugabe von Kochsalz abgeschieden und im Vakuum bei 50 bis 75° getrocknet.

### Beispiel 35:

50,3 Teile des Farbstoffs 2-Amino-5-hydroxy-6-(2,5-disulfonylbenzolazo)-naphthalin-7-sulfonsäure werden in 800 ml Wasser neutral gelöst und die Lösung auf 0° bis 5°C abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxidlösung bei 6-6,5 gehalten wird. Nach Zusatz von 43 Teilen von Produkt II in 100 ml Wasser wird die Temperatur auf 20 bis 25°C erhöht und der pH bei 5,5-6,5 gehalten. Reaktionsdauer ca. 2 Stunden.

Zur Abscheidung des Farbstoffes wird die neutrale Lösung mit 10 % Natriumchlorid und 10 % Kaliumchlorid versetzt und filtriert. Die erhaltene Paste wird im Vakuum bei 40 bis 50° getrocknet. Der so hergestellte Reaktivfarbstoff hat die folgende Konstitution:

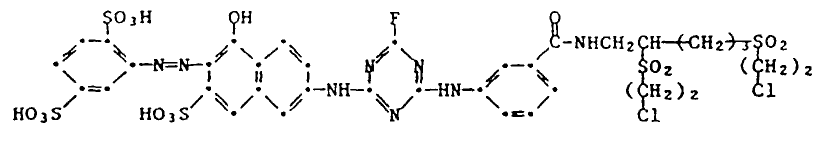

### Beispiel 36:

50,3 Teile des Farbstoffs 2-Amino-5-hydroxy-6-(2,5-disulfonylbenzolazo)-naphthalin-7-sulfonsäure werden in 800 ml Wasser neutral gelöst und die Lösung auf 0° bis 5°C abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxidlösung bei 6-6,5 gehalten wird. Nach Zusatz von 38 Teilen von 2,5-Bis-β-chloräthylsulfonyl-aminopentanhydrochlorid in 100 ml Wasser wird die Temperatur auf 20 bis 25°C erhöht und der pH bei 5,5-6,5 gehalten. Reaktionsdauer ca. 2 Stunden. Dann wird bei pH 10,0 und Raumtemperatur 20 Minuten lang vinyliert, und der pH wird auf 7,0 zurückgestellt.

Zur Abscheidung des Farbstoffes wird die neutrale Lösung mit 10% Natriumchlorid und 10% Kaliumchlorid versetzt und filtriert. Die erhaltene Paste wird im Vakuum bei 40 bis 50° getrocknet. Der so hergestellte Reaktivfarbstoff hat die folgende Konstitution:

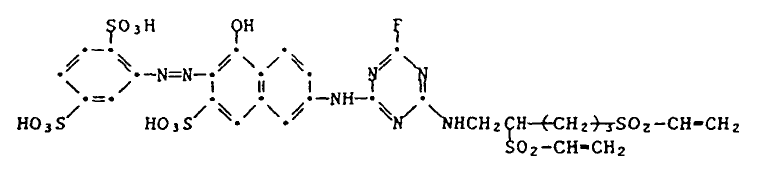

Der zur Herstellung des erfindungsgemässen Farbstoffs benötigte Ausgangsfarbstoff 2-Amino-5-hydroxy-6-(2',5'-disulfophenylazo)-naphthalin-7-sulfonsäure kann wie folgt erhalten werden:

50,6 Teile 2-Amino-benzol-1,4-disulfonsäure werden in 120 Teilen Wasser neutral gelöst und wie üblich diazotiert. Hierauf lässt man die Diazoverbindung bei 0-5° zu einer Mischung von 56,2 Teilen 2-Acetamino-5-naphthol-7-sulfonsäure, welche in 300 Teilen Wasser neutral gelöst wurden, 25 Teilen Natriumhydrogencarbonat und 150 Teilen Eis hinzulaufen. Der pH-Wert beträgt zunächst 6,5 und steigt nach längerem Rühren auf 7,5-7,8. Nach Beendigung der Kupplung gibt man 60 Teile 10-normale Natronlauge hinzu und erwärmt zur Verseifung der Acetaminogruppe 2 Stunden auf 90°. Die alkalische Lösung des orangen Zwischenfarbstoffes wird mit etwa 22 Teilen 10-normaler Salzsäure neutral gestellt, mit 20 % Natriumchlorid und 15 % Kaliumchlorid versetzt, einige Zeit gerührt und filtriert.

### Beispiel 37:

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 43 Teilen von Produkt I in 100 ml Wasser wird der pH der Reaktionsmischung durch ständige Zugabe von 2n Natriumhydroxylösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 30,3 Teilen diazotiertem 2-Amino-1,5-disulfonsäurenaphthalin gekuppelt. Nach vollständiger Kupplungsreaktion bei pH 8 wird die Reaktionsmischung geklärt und der gebildete Reaktivfarbstoff der Formel 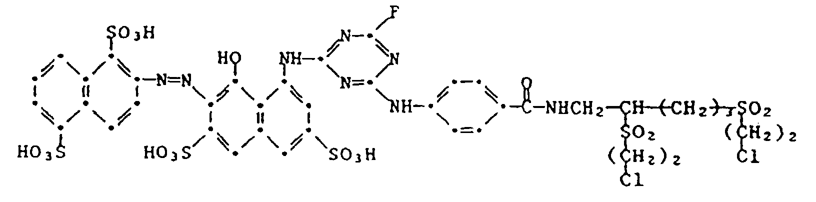 durch Eindampfen oder Gefriertrocknen der Reaktionslösung bei pH 7 isoliert. Er färbt Baumwolle in roten Tonen.

### Beispiel 38:

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kangosauer gehalten wird. Nach Zusatz einer auf pH 5 gestellten Mischung von 38 Teilen 2,5-Bis-β-chloräthylsulfonylaminopentan-hydrochlorid in 100 ml Wasser wird der pH der Reaktionsmischung durch ständige Zugabe von 2n Natriumhydroxylösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 30,3 Teilen diazotiertem 2-Amino-1,5-disulfonsäurenaphthalin gekuppelt. Nach vollständiger Kupplungsreaktion bei pH 8 wird die Reaktionsmischung geklärt und der gebildete Reaktivfarbstaff der Formel 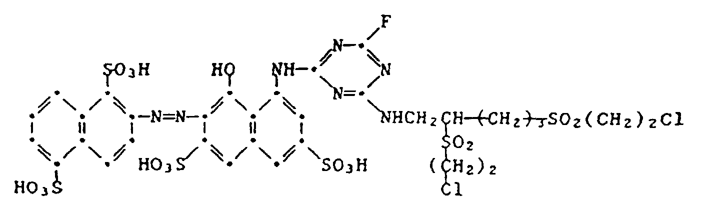 durch Eindampfen oder Gefriertrocknen der Reaktionslösung bei pH 7 isoliert. Er färbt Baumwolle in roten Tonen.

### Beispiel 39:

18,5 Teile Cyanurchlorid werden in 110 Teilen Aceton gelöst und unter kräftigem Rühren auf 250 Teile Eis gegeben. Dazu lässt man eine Lösung von 55,3 Teilen des Farbstoffs der folgenden Konstitution 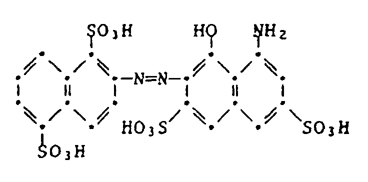 bei 0° hinzufliessen. Anschliessend werden 50 Teile 2-normale Sodalösung zugetropft, wobei sich ein pH-Wert von 6-6,5 ergibt. Nun kommen 38 Teile 2,5-Bis-β-chloräthylsulfonyl-aminopentan-hydrochlorid als Pulver hinzu. Man erwärmt in 1/2 Stunde auf 40°C und hält diese Temperatur 3 Stunden. Gleichzeitig werden 100 Teile 2-normale Sodalösung bei einem pH-Wert von 6,0-6,5 zugetropft. Dann vinyliert man bei pH 10,0, 15 Min. und neutralisiert Zur Abscheidung gibt man 20 % Kaliumchlorid hinzu, lässt unter Rühren auf 20-25° abkühlen und filtriert. Man erhält etwa 235 Teile Farbstoffpaste, die bei 50-55° im Vakuum getrocknet werden. Der hergestellte Reaktivfarbstoff hat folgende Konstitution

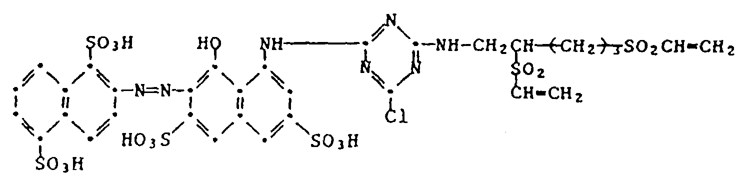

### Beispiel 40:

18,5 Teile Cyanurchlorid werden in 110 Teilen Aceton gelöst und unter kräftigem Rühren auf 250 Teile Eis gegeben. Dazu lässt man eine Lösung von 55,3 Teilen des Farbstoffes der folgenden Konstitution 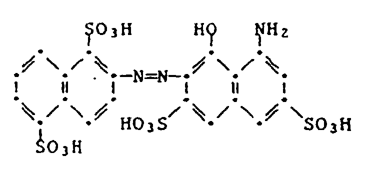 bei 0° hinzufliessen. Anschliessend werden 50 Teile 2-normale Sodalösung zugetropft, wobei sich ein pH-Wert von 6-6,5 ergibt. Nun kommen 43 Teile von Produkt II als Pulver hinzu. Man erwärmt in 1/2 Stunde auf 40°C und hält diese Temperatur 3 Stunden. Gleichzeitig werden 100 Teile 2-normale Sodalösung bei einem pH-Wert von 4,0-6,0 zugetropft. Zur Abscheidung gibt man 20 % Kaliumchlorid hinzu, lässt unter Rühren auf 20-25° abkühlen und filtriert. Man erhält etwa 235 Teile Farbstoffpaste, die bei 50-55° im Vakuum getrocknet werden. Der hergestellte Reaktivfarbstoff hat folgende Konstitution:

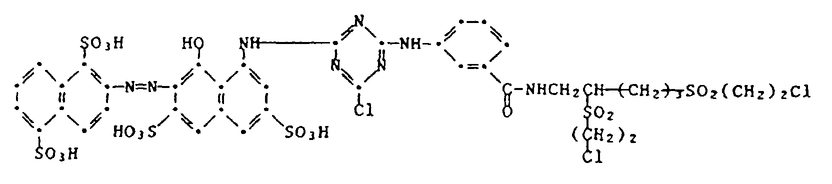

### Beispiel 41:

a) In eine Suspension von 31,9 Teilen 1-Amino-8-naphthol-3,6-disulfonsäure in 144 Teilen Wasser und 72 Teilen Eis werden unter gutem Rühren 18,5 Teile Cyanurchlorid eingetragen; der Reaktionsansatz wird noch 4 Stunden bei einer Temperatur zwischen 3 und 5°C und bei einem pH-Wert zwischen 1,7 und 2,2, der mittels Natriumbicarbonat gehalten wird, weitergerührt.
b) Getrennt hiervon wird das Diazoniumsalz der Diazokomponente hergestellt: Eine Lösung mit einem pH-Wert von 6,7-6,8 von 28,5 Teilen 4-β-Sulfatoäthylsulfonylanilin in 64 Teilen Wasser werden mit 105 Volumenteilen einer 40%igen wässrigen Natriumnitritlösung versetzt. Dieses Gemisch lässt man unter gutem Rühren in eine Mischung aus 80 Teilen zerkleinertem Eis und 7 Volumenteilen einer 95%igen wässrigen Schwefelsäure einfliessen. Man rührt noch eine Stunde bei einer Temperatur zwischen 0°C und 5°C nach und zersetzt sodann, wie üblich, überschüssige salpetrige Säure mit wenig Amidosulfonsäure.
c) Das hier unter a) hergestellte primäre Kondensationsprodukt aus Cyanurchlorid und der Aminonaphtholdisulfonsäure wird mit der hier unter b) beschriebenen Diazoniumsalzlösung vereinigt. Zur Durchführung der Kupplungsreaktion wird das stark saure Reaktionsgemisch bei einer Temperatur von etwa 5°C mittels Natriumbicarbonat auf einen pH-Wert von 4,0 bis 4,5 eingestellt und die Temperatur auf 15 bis 20°C erhöht. Es wird noch einige Stunden bei diesem pH-Wert und dieser Temperatur weitergerührt, bis die Kupplung beendet ist.
d) Die Lösung der Monoazoverbindung von c) wird mit einer Lösung mit einem pH-Wert von 5,5-6,0 von 38 Teilen 2,5-Bis-β-chloräthylsulfonylaminopentan-hydrochlorid in 64 Teilen Wasser vereinigt. Der pH-Wert wird auf etwa 6 gehalten und das Reaktionsgemisch im Verlaufe von 2 Stunden auf eine Temperatur von 60 bis 65°C erwärmt. Sodann wird der pH mittels Natriumbicarbonat auf einen Wert zwischen 6,5 und 7,0 erhöht, und das Filtrat sprühgetrocknet.
Es werden etwa 180 Teile natriumchloridhaltiges Pulver der Formel 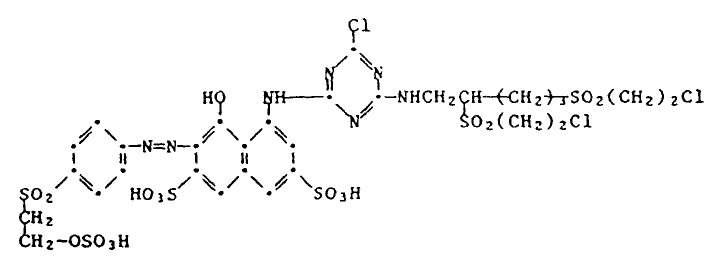 erhalten. Es färbt Baumwolle in roten Tönen.

### Beispiel 42:

106,6 Teile des Farbstoffes 3-(3'-Amino-4'-sulfophenylamino-sulfonyl)-kupferphthalocyanin-3'',3'''-3'''-trisulfonsäure werden mit Wasser und der nötigen Sodamenge neutral gelöst. Diese Lösung lässt man bei 0 bis 5° zu einer Anschlämmung von 18,5 Teilen Cyanurchlorid hinzulaufen, welche durch Zutropfen des in 110 Teilen Aceton gelösten Cyanurchlorids auf 250 Teile Eis hergestellt wurde. Bei der Umsetzung wird der pH-Wert durch Zutropfen von 50 ml 2-normaler Sodalösung auf 6 bis 6,5 gehalten. Zu der erhaltenen Zwischenstufe gibt man 48 Teile 2,5-Bis-β-chloräthylsulfonyl-aminopentan-hydrochlorid hinzu und erwärmt 4 Stunden auf 35 bis 45°. Durch Zutropfen von 100 Teilen 2-normaler Natronlauge wird gleichzeitig der pH-Wert auf 4,0 bis 4,5-gehalten. Der hergestellte Reaktivfarbstoff hat die folgende Konstitution:

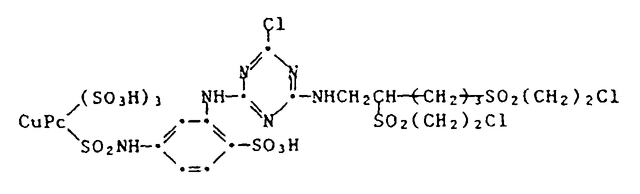

Er wird mit Natriumchlorid abgeschieden, filtriert und im Vakuum bei 55-60° getrocknet.

### Beispiel 43:

58,1 Teile des durch Diazotierung von 2-Aminophenol-4,6-disulfonsäure und Kupplung auf 2-Amino-5-naphthol-7-sulfonsäure mit anschliessender Kupferung in essigsaurer Lösung hergestellten Kupferkomplexfarbstoffes werden in Wasser neutral gelöst. Diese Farbstofflösung lässt man bei 0-5° zu einer Anschlämmung von 18,5 Teilen Cyanurchlorid hinzulaufen, welche durch Lösen des Cyanurchlorides in 110 Teilen Aceton und Zutropfen zu 250 Teilen Eis hergestellt wurde. Während der Umsetzung hält man den pH-Wert durch Zutropfen von 50 Teilen 2-normaler Sodalösung auf 4,5-5,5. Es wird 1-2 Stunden bei 0.5° nachgerührt, bis die Umsetzung beendet ist. Dann gibt man 38 Teile 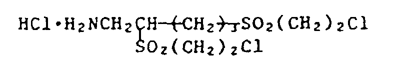 hinzu, erwärmt auf ca. 45° und hält den pH-Wert durch portionsweise Zugabe von 100 Teilen 2-normaler Sodalösung auf 4,5-5,0. Der erhaltene rubinrote Reaktivfarbstoff entspricht der folgende Formel: 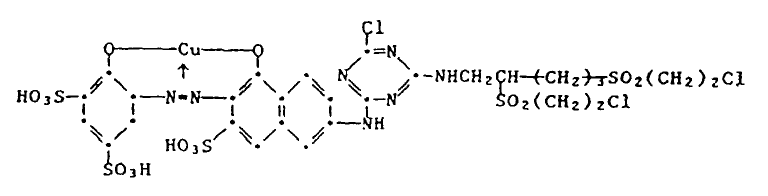 Er wird mit Natriumchlorid abgeschieden, filtriert und bei 55-60° getrocknet.

### Beispiel 44:

70,2 Teile des Diazofarbstoffes 1-Amino-2-(4'-sulfophenylazo)-7-(2''-sulfo-5''-aminophenylazo)-8-naphthol-3,6-disulfonsäure werden in Form einer neutralen Lösung bei 0-5° mit einer Anschlämmung von 18,5 Teilen Cyanurchlorid umgesetzt, welche in 100 Teilen Aceton gelöst und mit 250 Teilen Eis wieder gefällt wurden. Die Umsetzung erfolgt bei pH 6,0-6,5, wobei die Einhaltung des pH-Wertes durch Zutropfen von 50 Teilen 2-normaler Sodalösung erfolgt Anschliessend werden 38 Teile 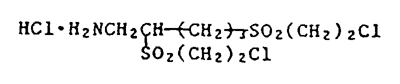 als Pulver zugegeben, auf 30-40° erwärmt und dabei der pH-Wert durch Zutropfen von 100 Teilen 2-normaler Sodalösung auf 4,0-4,5 gehalten. Der erhaltene Farbstoff der Konstitution: 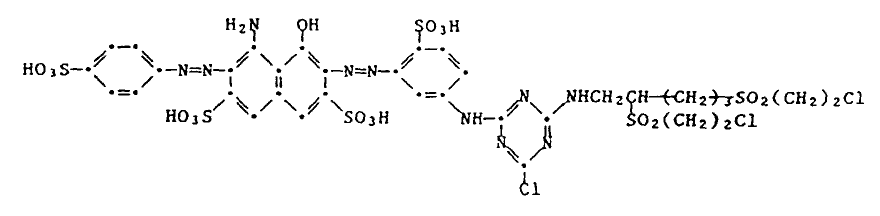 wird durch Aussalzen oder durch Sprühtrocknung isoliert.

### Beispiel 45:

81 Teile des Diazofarbstoffes 1-Amino-2(4'-β-sulfatoäthylsulfonyl-phenylazo)-7-(2''-sulfo-5''-aminophenylazo)-8-naphthol-3,6-disulfonsäure werden in Form einer neutralen Lösung bei 0-5° mit einer Anschlämmung von 18,5 Teilen Cyanurchlorid umgesetzt, welche in 110 Teilen Aceton gelöst und mit 250 Teilen Eis wieder gefällt wurden. Die Umsetzung erfolgt bei pH 6,0-6,5, wobei die Einhaltung des pH-Wertes durch Zutropfen von 50 Teilen 2-normaler Sodalösung erfolgt.
Anschliessend werden 38 Teile 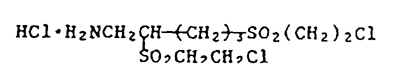 als Pulver zugegeben, auf 30-40° erwärmt und dabei der pH-Wert durch Zutropfen von 100 Teilen 2-normaler Sodalösung auf 4,0-4,5 gehalten. Der erhaltene Farbstoff der Konstitution: 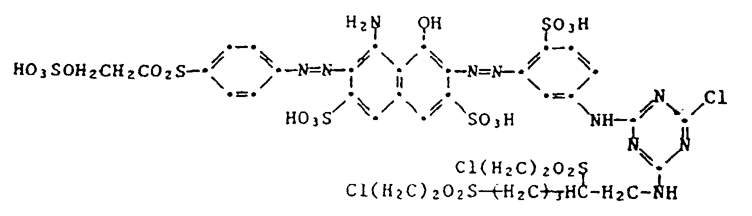 wird durch Aussalzen oder durch Sprühtrocknung isoliert.

### Beispiel 46:

50,3 Teile des Farbstoffes 1-Amino-4-(3'-amino-4'-methyl-5'-sulfo-phenyl-amino)-anthrachinon-2-sulfonsäure werden mit Wasser und der nötigen Menge Soda neutral gelöst. Diese Lösung wird bei 0-5° zu einer Anschlämmung von 18,5 Teilen Cyanurchlorid gegeben, welche durch Zutropfen des in 110 Teilen Aceton gelösten Cyanurchlorides auf 250 Teile Eis hergestellt werde. Der bei der Umsetzung entstehende Chlorwasserstoff wird durch Zutropfen von 50 Teilen 2-normaler Sodalösung neutralisiert, wobei sich ein pH-Wert von 6-6,5 einstellt Dann gibt man 38 Teile 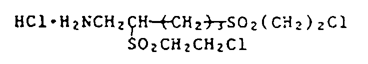 hinzu, erwärmt auf 30-40° und hält diese Temperatur 3 Stunden. Gleichzeitig wird durch Zutropfen von 100 Teilen 2-normaler Sodalösung der pH-Wert auf 4,0-4,5 gehalten. Der erhaltene Reaktivfarbstoff der Formel 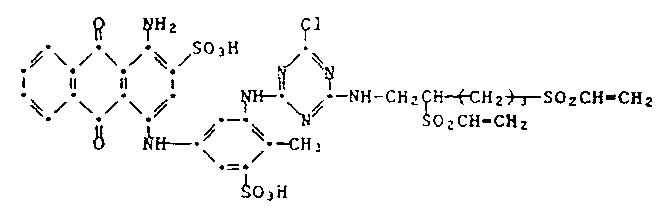 wird nach der Vinylierung neutral mit Natriumchlorid ausgesalzen, filtriert und bei 55-60° getrocknet.

### Beispiel 47:

11,5 Teile 1-Amino-2-sulfonsäure-4-bromanthrachinon und 11 Teile von Produkt IV werden mit 120 Teilen Wasser suspendiert. Bei Raumtemperatur werden 26 Teile Natriumhydrogencarbonat eingestreut, wobei der pH-Wert 8,5 erreicht wird. Die Suspension wird auf 75° erwärmt. Bei 70 bis 75°C und innert 3 Stunden, werden in 12 Portionen 0,3 Teile Kupferpulver/Kupfer-l-chlorid 1:1 eingetragen. Nach einer weiteren Stunde bei 75°C ist die Reaktion beendet. Die Suspension wird auf Raumtemperatur abgekühlt und mit 13 g Natriumchlorid (∼ 10 Volumenprozent) ausgesalzen und abfiltriert.

Der gut getrocknete Farbstoff wird zur Herstellung des Schwefelsäureesters in die dreifache Gewichtsmenge Schwefelsäure-Monohydrat eingetragen und bis zur vollständigen Lösung gerührt. Dann giesst man die Farbstofflösung auf Eis, wobei der Esterfarbstoff ausfällt. Er wird abfiltriert, sodann in einer Mischung aus Eis/Wasser angerührt und nach dem Neutralisieren mit Kaliumcarbonat durch Einstreuen von Kaliumchlorid ausgesalzen, abfiltriert und getrocknet.

Der gebildete Reaktivfarbstoff der Formel 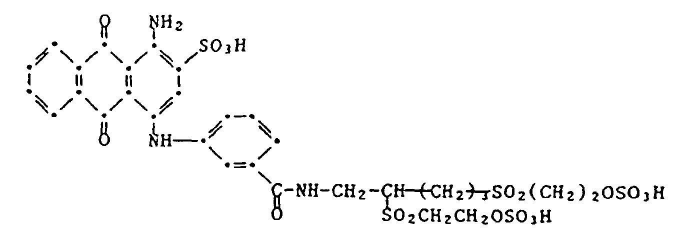 färbt Baumwolle in rein blauen Tönen.

Wird dieser Farbstoff gemäss Färbevorschrift IV eingesetzt, so wird er bei der Alkalizugabe, bedingt durch die eintretende Vinylierung, schwerlöslich, was niedrigere Fixierwerte ergibt. Hervorragende färberische Ergebnisse mit hohen Fixierwerten werden aber erhalten, wenn man den Farbstoff als Formulierung einsetzt, die wie folgt zusammengesetzt ist:
6,3 Teile des Farbstoffes der oben angegebenen Formel,
2,4 Teile Naphthalinsulfonsäure-Formaldehyd-Dispergator und
1,3 Teile Anthrachinon-2-sulfonsäure,
   wobei der Dispergator gegebenenfalls auch weggelassen werden kann.

Analog können alle folgenden Anthrachinonfarbstoffe mit knapper Löslichkeit im Foulardverfahren eingesetzt werden.

Nach dem Verfahren von Beispiel 47 können folgende Farbstoffe synthetisiert werden:

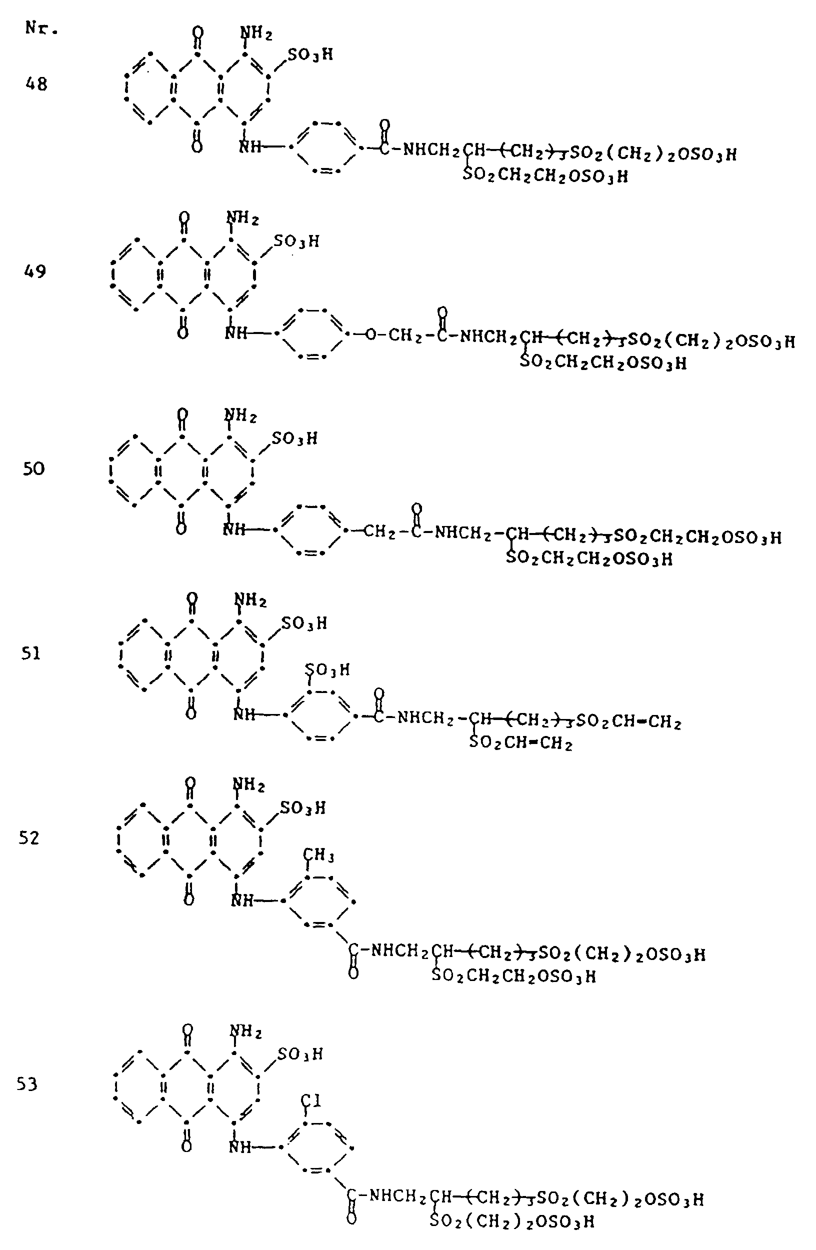

### Beispiel 54:

300 Teile Chlorsulfonsäure werden bei Raumtemperatur vorgelegt. Nun werden 36 Teile Kupferphthalocyanin portionenweise innert einer Stunde eingetragen. Die Temperatur wird nun langsam innert zwei Stunden auf 110°C erhöht. Innert einer Stunde wird die Temperatur auf 135°C erhöht. Unter gutem Rühren wird die Reaktionslösung 6 1/2 Stunden bei 130 bis 135°C gerührt, anschliessend auf Raumtemperatur abgekühlt und auf Eis/Wasser-Mischung ausgetragen; Endvolumen 2,5 Liter. Nun wird mit 37 Teilen (1,5 Volumenprozent) Natriumchlorid versetzt und filtriert. Das Nutschgut mit Eiswasser (1,5 % NaCl) kongoneutral gewaschen.

Die 250 Teile Paste werden mit 800 Teilen Eiswasser suspendiert, pH 2,5 bis 3,0. Nun wird die Lösung von 80 Teilen von Produkt V gelöst in 200 Teilen Wasser zugegeben; pH von ca. 2,0. Der pH wird langsam auf 5,0 bis 5,5 erhöht mit 20 Teilen conc. ammonialkalischer Lösung, dabei wird die Temperatur allmählich bis 25°C erhöht.

Zur Beendigung der Reaktion wird bei 50°C sechs Stunden lang gerührt, während der pH-Wert mit 2n Ammoniak bei 5,0 gehalten wird.

Mit 120 Teilen Natriumchlorid (5 Volumenprozent) wird der Farbstoff folgender Formel 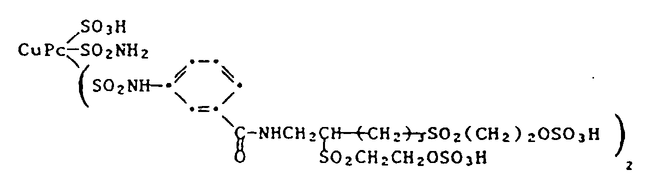 ausgesalzen. Er färbt Baumwolle in Türkistönen.

Analog können folgende Farbstoffe synthetisiert werden:

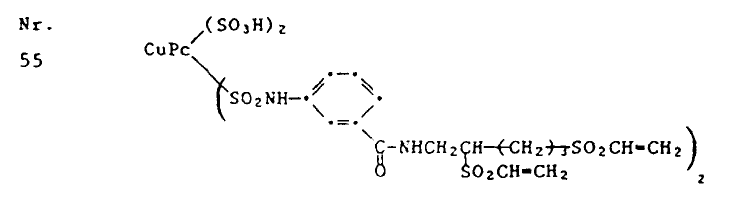

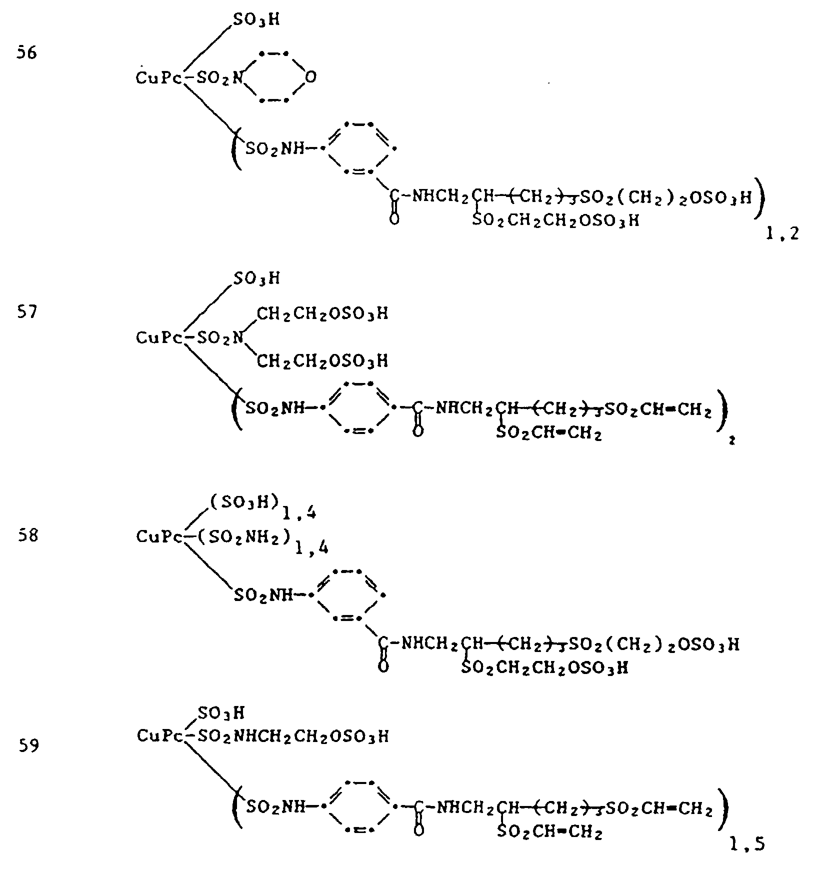

Weitere Farbstoffe, welche nach den in den vorangehenden Beispielen beschriebenen Verfahren hergestellt werden können, sind die Verbindungen der folgenden Formeln:

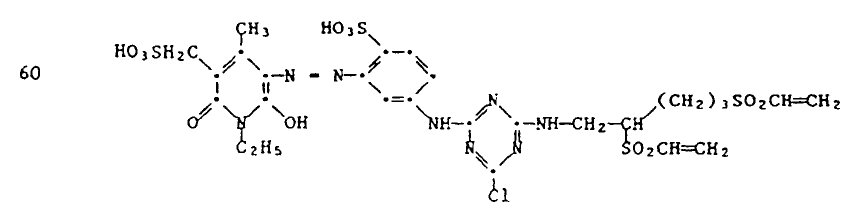

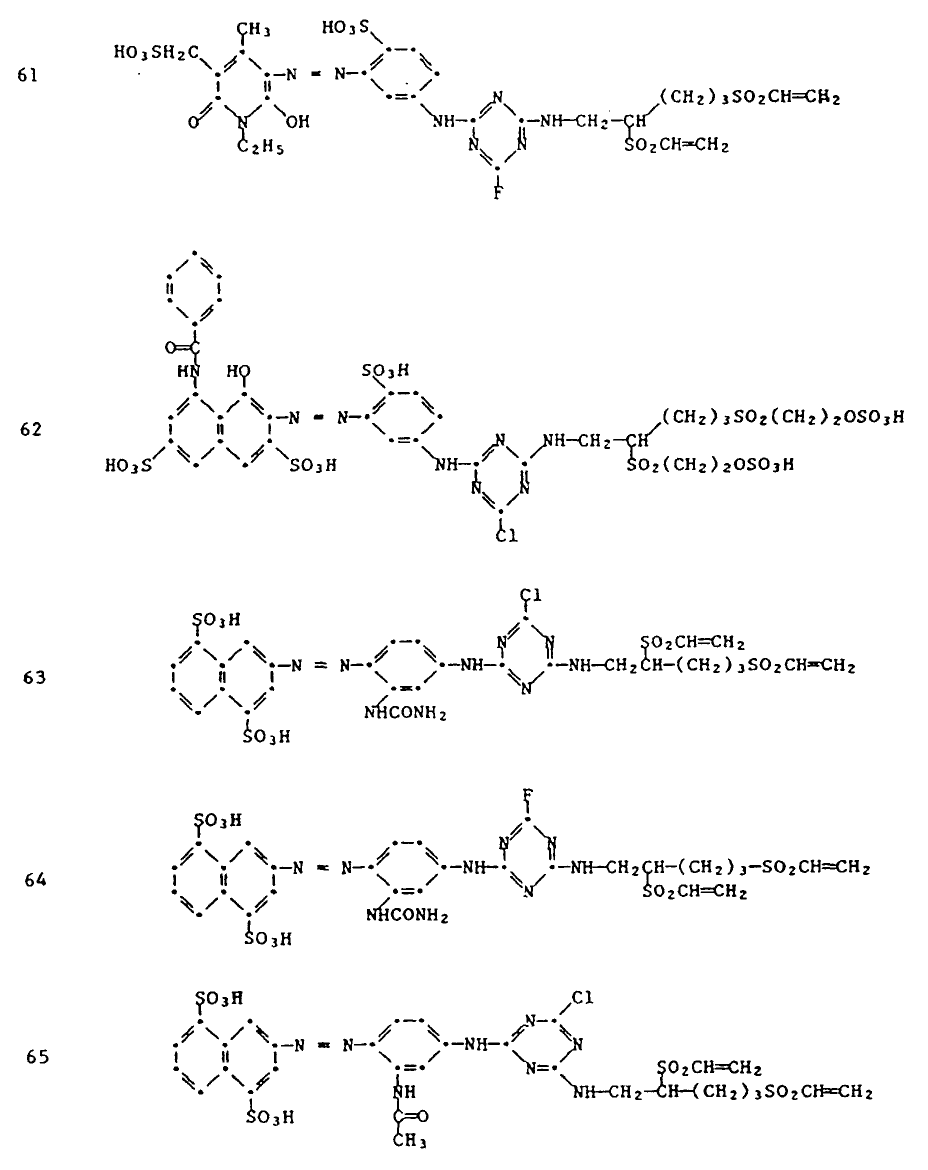

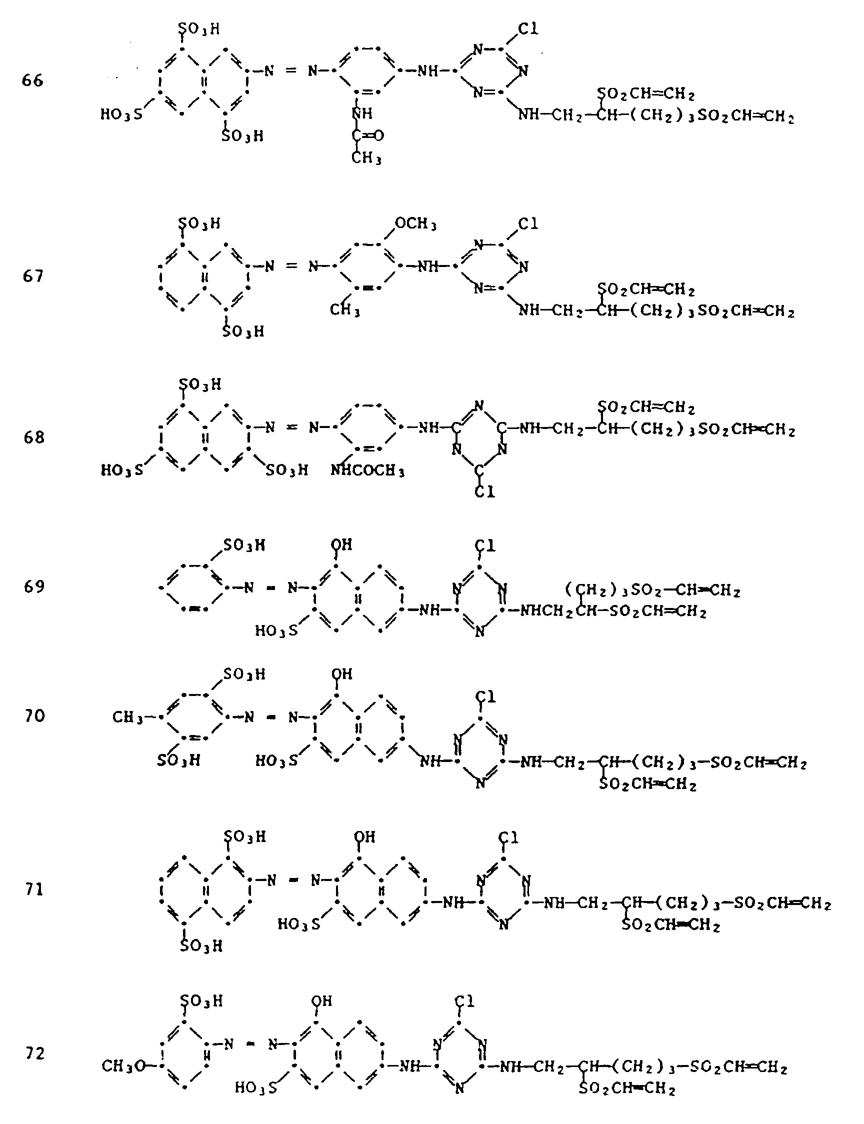

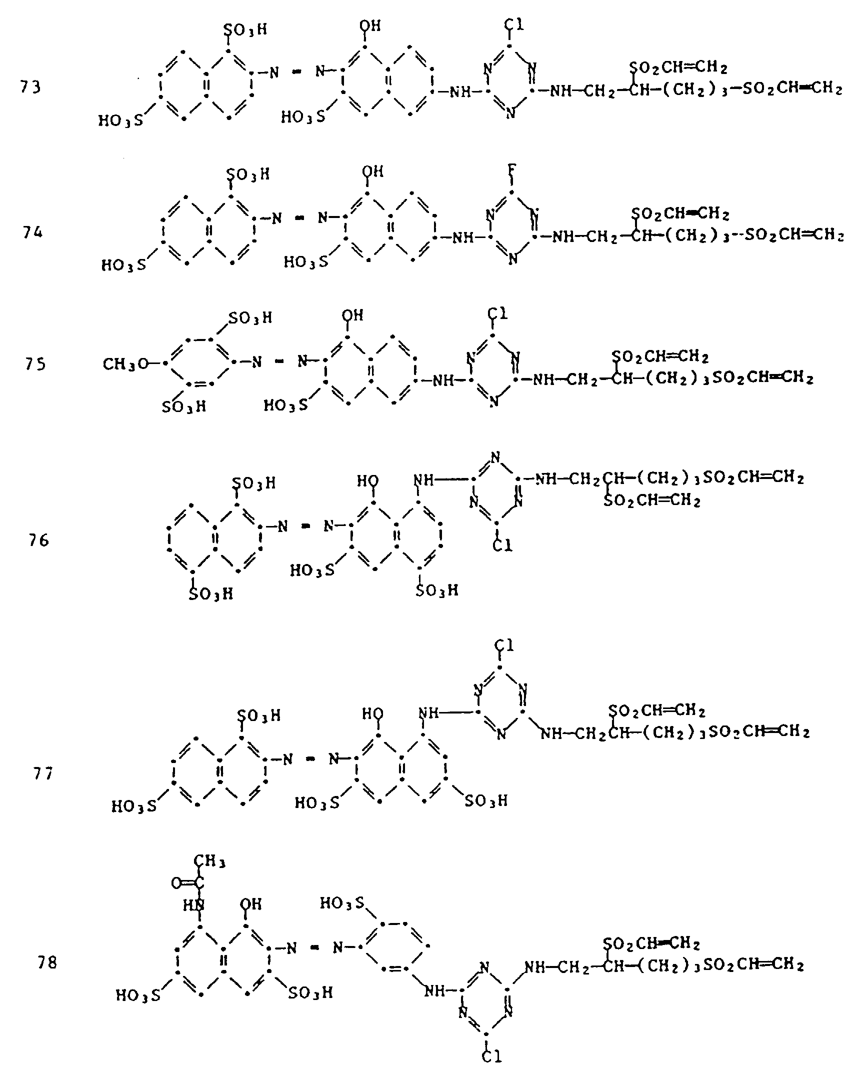

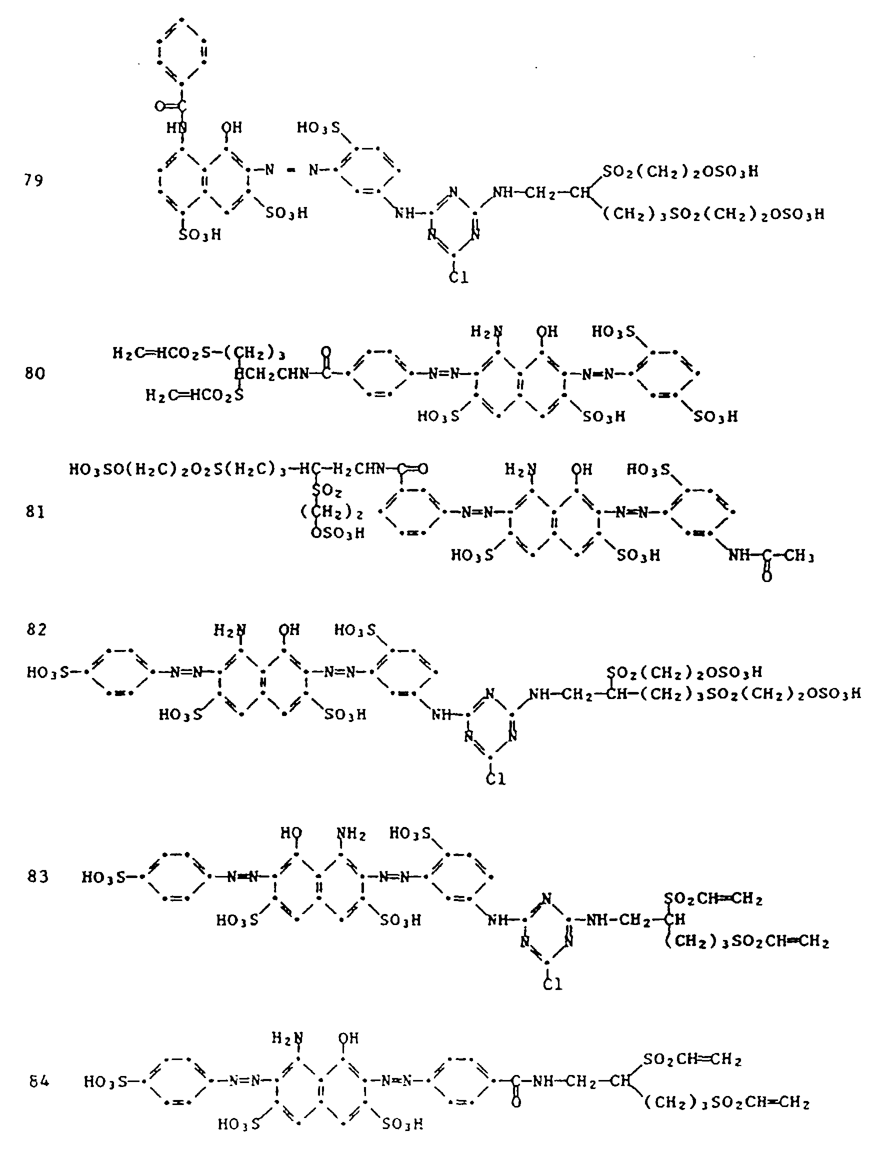

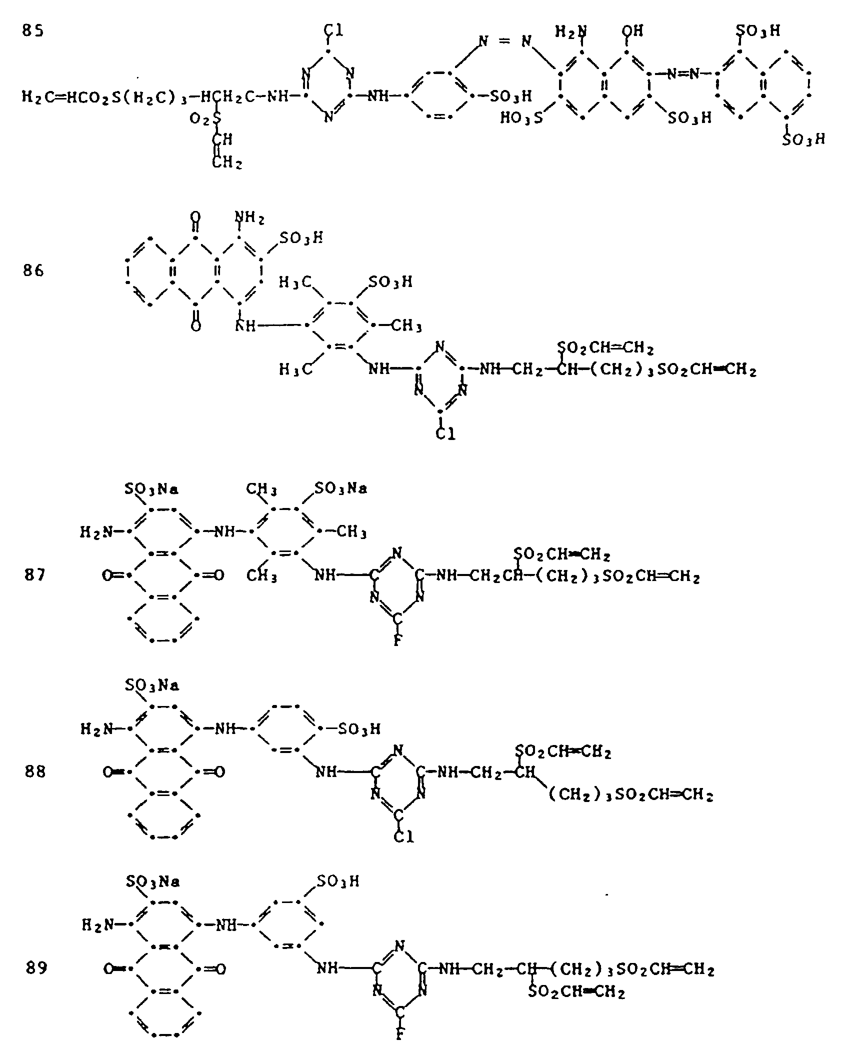

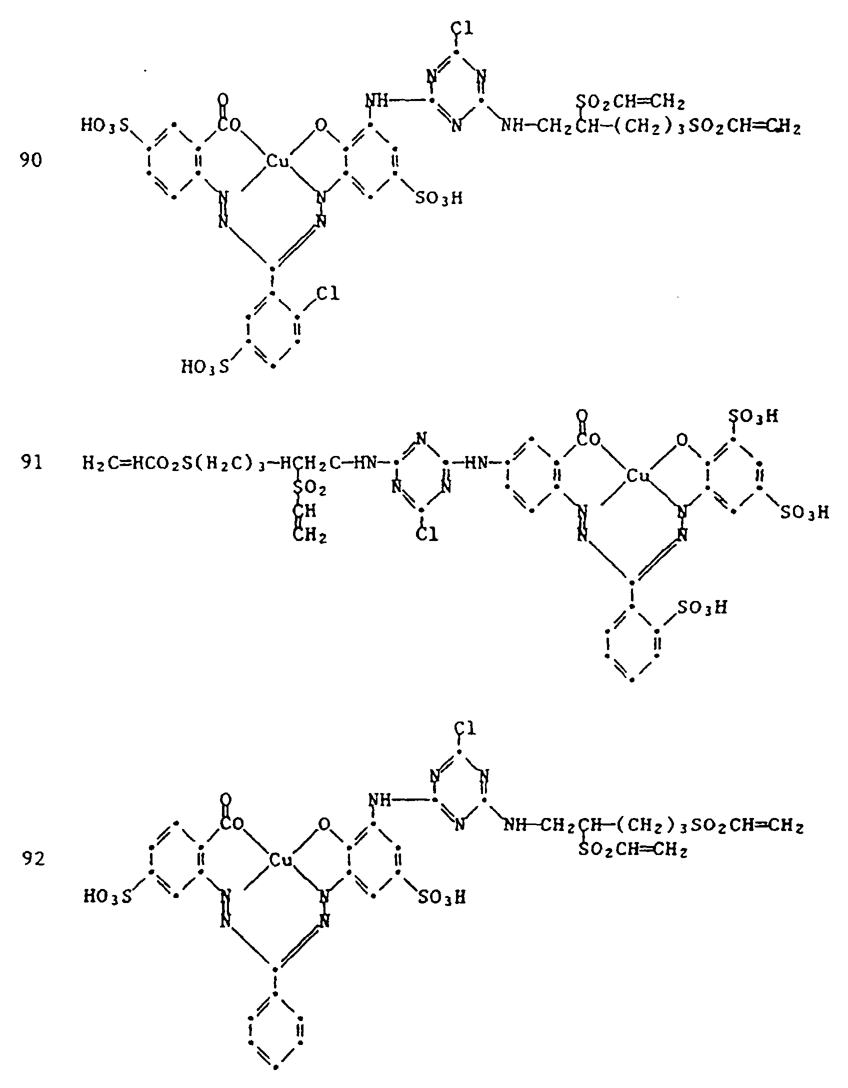

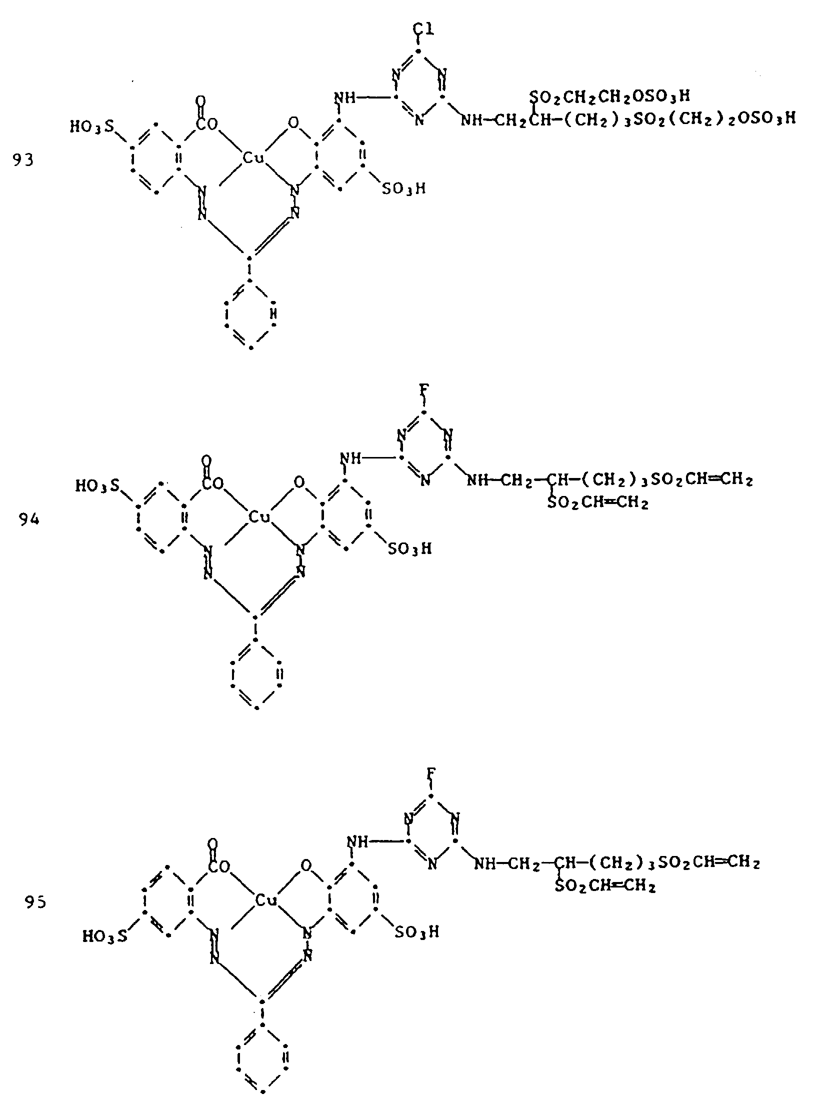

### Färbevorschrift I

2 Teile des gemäss Beispiel 3 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Färbevorschrift II

2 Teile des gemäss Beispiel 3 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

### Färbevorschrift III

8 Teile des gemäss Beispiel 3 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

### Färbevorschrift IV

4 Teile des gemäss Beispiel 3 erhaltenen Reaktivfarbstoffes werden in 50 Teilen Wasser gelöst. Dazu gibt man 50 Teile einer Lösung, die pro Liter 5 g Natriumhydroxyid und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült während einer Viertelstunde mit einem nichtionogenen Waschmittel kochend geseift, nochmals gespült und getrocknet.

### Färbevorschrift V

6 Teile des gemäss Beispiel 3 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift VI

2 Teile des gemäss Beispiel 3 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet. Dann imprägniert man das Gewebe mit einer 20°C warmen Lösung, die pro Liter 4g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

### Färbevorschrift VII

In 2000 Teile Wasser werden 2 Teile des Farbstoffes von Beispiel 3, 160 Teile Natriumsulfat und als Puffermittel 4 Teile Na₂HPO₄·12H₂O und 1 Teil KH₂PO₄ gegeben, so dass ein Färbebad mit einem pH von 7 erhalten wird. In dieses Bad werden 100 Teile einer Wirkware aus nicht-mercerisierter Baumwolle eingetaucht. Im Laufe von 30 Minuten wird die Temperatur des Bades auf 130°C gebracht, und bei dieser Temperatur wird 60 Minuten lang gefärbt. Danach wird die gefärbte Ware aus dem Bad genommen, mit Wasser gewaschen, geseift, wieder mit Wasser gewaschen und getrocknet. Es wird eine gelbe Färbung erhalten,

### Färbevorschrift VIII

In 2000 Teile Wasser werden 2 Teile des Farbstoffes von Beispiel 29, 2 Teile des bekannten wasserunlöslichen Anthrachinonfarbstoffes der Formel 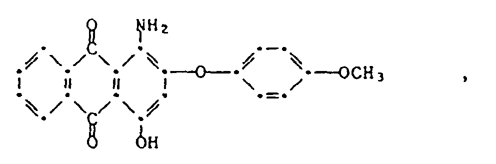 120 Teile Natriumsulfat und als Puffermittel 4 Teile Na₂HPO₄·12H₂O und 1 Teil KH₂PO₄ gegeben. In das so erhaltene Färbebad werden 100 Teile eines Polyester/Baumwoll-Mischgewebes (50:50) eingetaucht, und im Laufe von 30 Minuten wird die Temperatur des Bades auf 130°C gebracht, bei welcher 60 Minuten gefärbt wird. Dann wird das gefärbte Gewebe aus dem Bad genommen, mit Wasser gewaschen, geseift, erneut mit Wasser gewaschen und getrocknet. Es wird ein egal rot gefärbtes Gewebe erhalten. Das Färbebad wird vor Beginn und während des Färbens auf pH 7 gehalten.

### Druckvorschrift I

3 Teile des gemäss Beispiel 3 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

### Druckvorschrift II

5 Teile des gemäss Beispiel 3 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Verwendung der Reaktivfarbstoffe der Formel
D(̵U - A)₁₋₂ (1),
worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes; -U-A einen Rest der Formel
-CO-A (2a),
-B-CO-A (2b), 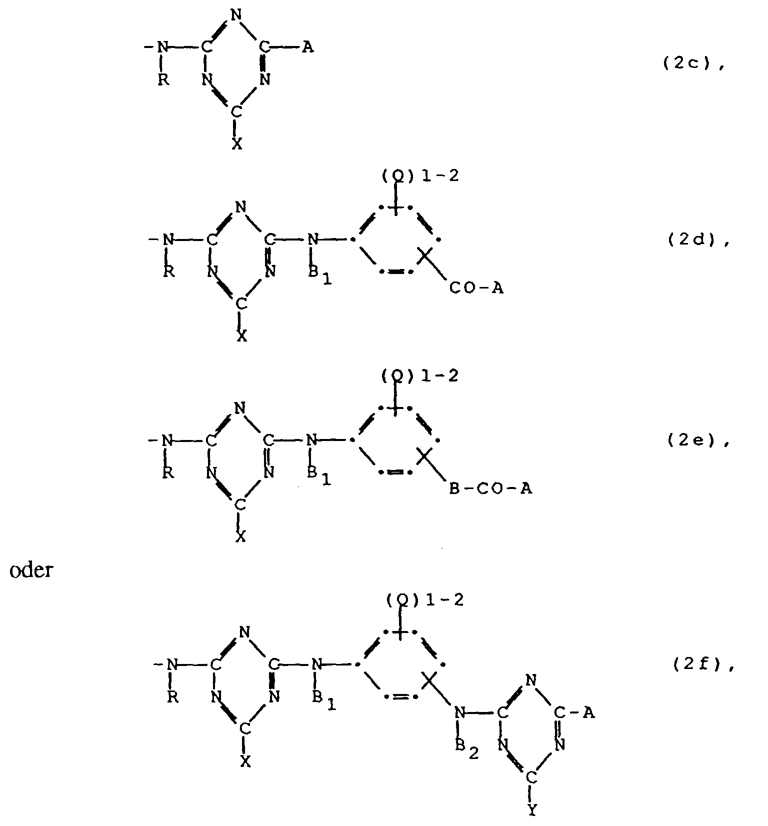
bedeutet, worin B ein Rest (̵CH₂)̵ₙ oder -O(̵CH₂)̵ₙ, n = 1 bis 6; R, B₁ und B₂ unabhängig voneinander Wasserstoff oder Alkyl mit 1 bis 4 Kohlenstoffatomen, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann; und X und Y unabhängig voneinander Fluor oder Chlor ist; Q für 1 bis 2 Substituenten aus der Gruppe Wasserstoff, C₁-C₄-Alkyl, C₁-₄-Alkoxy, Halogen, Carboxy oder Sulfo steht; und A ein Aminosubstituent der Formel 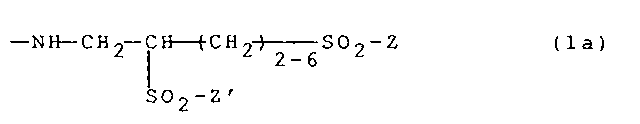 und Z und Z' unabhängig voneinander β-Sulfatoäthyl, β-Thiosulfatoäthyl, β-Phosphatoäthyl, β-Acyloxyäthyl, β-Halogenäthyl oder Vinyl ist, zum Färben oder Bedrucken von cellulosehaltigen Fasermaterialien.

2. Verwendung von Reaktivfarbstoffen gemäss Anspruch 1, worin A ein Rest der Formel 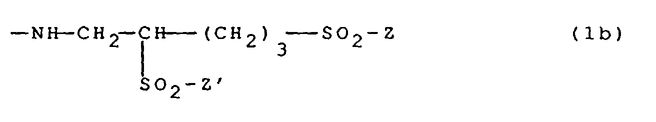 und Z=Z' ist, wobei Z bzw. Z' die für Anspruch 1 geltende Bedeutung hat.

3. Verwendung von Reaktivfarbstoffen gemäss Anspruch 1, worin -U-A einer der Reste der Formeln (2c) bis (2f), R Wasserstoff, Methyl oder Aethyl; B₁ und B₂ Wasserstoff; Q Sulfo; und X und Y Fluor- oder Chloratome sind.

4. Verwendung von Reaktivfarbstoffen gemäss Anspruch 1, worin D der Rest eines Mono- oder Disazofarbstoffes ist.

5. Verwendung von Reaktivfarbstoffen gemäss Anspruch 1, worin D der Rest eines Metallkomplexazo- oder Formazanfarbstoffes ist.

6. Verwendung von Reaktivfarbstoffen gemäss Anspruch 1, worin D der Rest eines Anthrachinonfarbstoffes ist.

7. Verwendung von Reaktivfarbstoffen gemäss Anspruch 1, worin D der Rest eines Phthalocyaninfarbstoffes ist.

8. Verwendung von Reaktivfarbstoffen gemäss Anspruch 1, worin D der Rest eines Dioxazinfarbstoffes ist.

9. Verwendung von Reaktivfarbstoffen gemäss Anspruch 4, worin D ein Mono- oder Disazofarbsroffrest der Formel 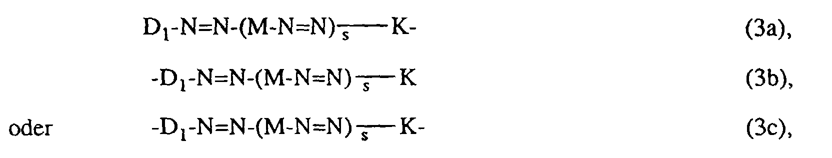 oder eines davon abgeleiteten Metallkomplexes; D₁ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon, 6-Hydroxypyridon-(2)- oder Acetessigsäurearylamid-Reihe ist, wobei D₁, M und K durch Alkylgruppen mit 1 bis 4 Kohlenstoffatomen, Alkoxygruppen mit 1 bis 4 Kohlenstoffatomen, Acylaminogruppen mit 1 bis 8 Kohlenstoffatomen, Amino, Alkylamino mit 1 bis 4 Kohlenstoffatomen, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, Alkylsulfonyl mit 1 bis 4 Kohlenstoffatomen, Trifluormethyl, Nitro, Cyano, Halogen, Carbamoyl, N-Alkylcarbamoyl mit 1 bis 4 Kohlenstoffatomen im Alkylrest, Sulfamoyl, N-Alkylsulfamoyl mit 1 bis 4 Kohlenstoffatomen, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo, insbesondere durch Hydroxy-, Amino-, Methyl-, Aethyl-, Methoxy- oder Aethoxygruppen, Alkanoylaminogruppen mit 2 bis 4 C-Atomen, Benzoylaminogruppen oder Halogenatome, substituiert sein können; s = 0 oder 1 ist; und D₁, M und K zusammen mindestens zwei Sulfogruppen, vorzugsweise drei oder vier Sulfogruppen, enthalten.

10. Verwendung von Reaktivfarbstoffen gemäss Anspruch 4, worin D ein Disazofarbstoffrest
der Formel
D₁-N=N-K-N=N-D₂- (4a),
oder
-D₁-N=N-K-N=N-D₂- (4b),
D₁ und D₂ unabhängig voneinander der Rest einer Diazokomponente der Benzol- oder Naphthalinreihe, und K der Rest einer Kupplungskomponente der Napthalinreihe ist; wobei D₁, D₂ und K durch Alkylgruppen mit 1 bis 4 Kohlenstoffatomen, Alkoxygruppen mit 1 bis 4 Kohlenstoffatomen, Acylaminogruppen mit 1 bis 8 Kohlenstoffatomen, Amino, Alkylamino mit 1 bis 4 Kohlenstoffatomen, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, Alkylsulfonyl mit 1 bis 4 Kohlenstoffatomen, Trifluormethyl, Nitro, Cyano, Halogen, Carbamoyl, N-Alkylcarbamoyl mit 1 bis 4 Kohlenstoffatomen im Alkylrest, Sulfamoyl, N-Alkylsulfamoyl mit 1 bis 4 Kohlenstoffatomen, N-(β-Hydroxyäthyl)-sulfamoyl, N,N-Di-(β-hydroxyäthyl)sulfamoyl, N-Phenylsulfamoyl, Ureido, Hydroxy, Carboxy, Sulfomethyl oder Sulfo, insbesondere durch Hydroxy-, Amino-, Methyl-, Aethyl-, Methoxy- oder Aethoxygruppen, Alkanoylaminogruppen mit 2 bis 4 C-Atomen, Benzoylaminogruppen oder Halogenatome, substituiert sein können; und D₁, M und K zusammen mindestens zwei Sulfogruppen, vorzugsweise drei oder vier Sulfogruppen, enthalten.

11. Verwendung von Reakfivfarbstoffen gemäss Anspruch 5, worin D der Rest eines 1:1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.

12. Verwendung von Reaktivfarbstoffen gemäss Anspruch 4, worin D der Rest eines Formazanfarbstoffes der Formel 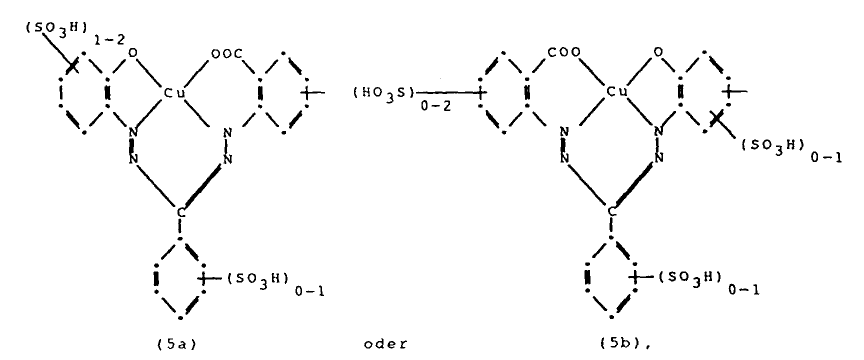 ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.

13. Verwendung von Reaktivfarbstoffen gemäss Anspruch 6, worin D der Rest eines Anthrachinonfarbstoffes der Formel 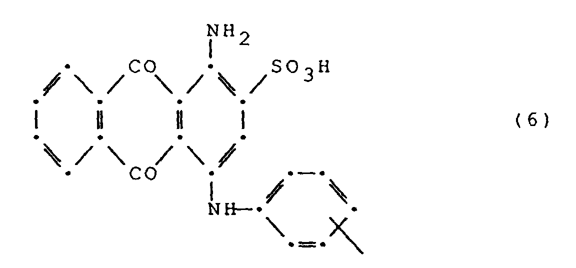 ist; wobei der Anthrachinonkern durch eine weitere Sulfogruppe, und der Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 stark wasserlöslichmachende Gruppen enthält.

14. Verwendung von Reaktivfarbstoffen gemäss Anspruch 7, worin D der Rest eines Phthalocyaninfarbstoffes der Formel 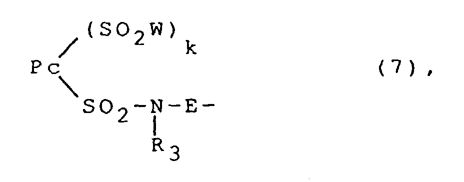 Pc der Rest eines Kupfer- oder Nickelphthalocyanins; W -OH und/oder -NR₁R₂; R₁ und R₂ unabhängig voneinander Wasserstoff oder Alkyl mit 1 bis 4 Kohlenstoffatomen, das durch Hydroxy oder Sulfo substituiert sein kann; R₃ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Aethylenrest; und k = 1 bis 3 ist.

15. Verwendung von Reaktivfarbstoffen gemäss Anspruch 8, worin D der Rest eines Dioxazinfarbstoffes der Formel 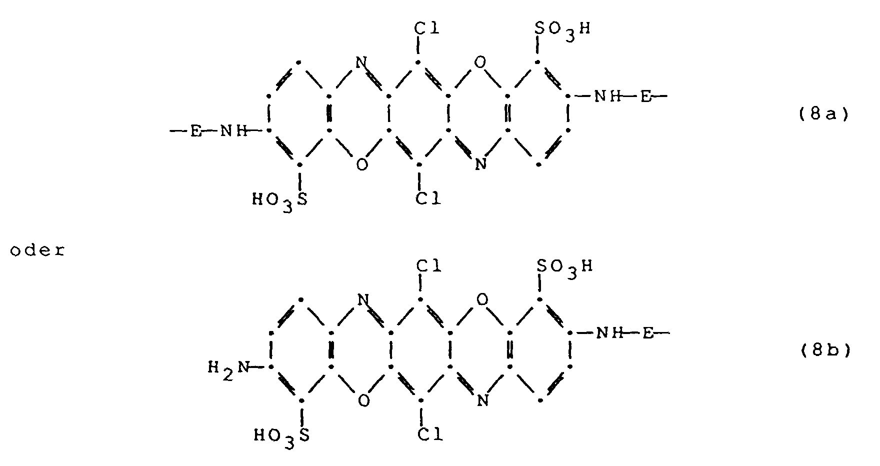 ist, worin E ein Phenylenrest, der durch Alkyl mit 1 bis 4 C-Atomen, Halogen, Carboxy oder Sulfo substituiert sein kann; oder ein Alkylenrest mit 2 bis 6 C-Atomen ist; und die äusseren Benzolringe in den Formeln (8a) und (8b) durch Alkyl mit 1 bis 4 C-Atomen, Alkoxy mit 1 bis 4 C-Atomen, Acetylamino, Nitro, Halogen, Carboxy oder Sulfo weitersubstituiert sein können.

16. Verwendung von Reaktivfarbstoffen gemäss Anspruch 9, der Formel 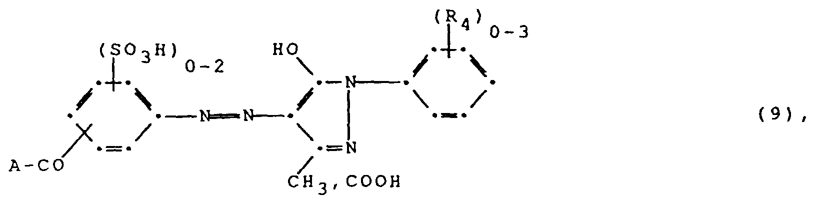 worin R₄ für 0 bis 3 Substituenten aus der Gruppe C₁-₄-Alkyl, C₁-₄-Alkoxy, Halogen, Carboxy und Sulfo, unabhängig voneinander, steht; und A ein Rest der Formel (1a) ist;
oder der Formel 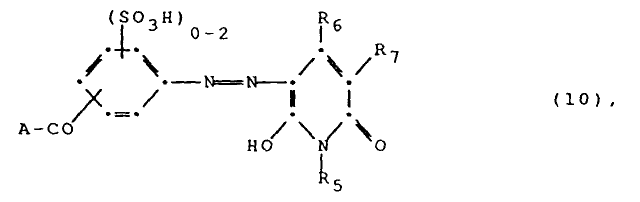 worin R₅ und R₆ unabhängig voneinander Wasserstoff, C₁-₄-Alkyl oder Phenyl, und R₇ Wasserstoff, Cyano, Carbamoyl oder Sulfomethyl ist; und
A ein Rest der Formel (1a) ist;
oder der Formel 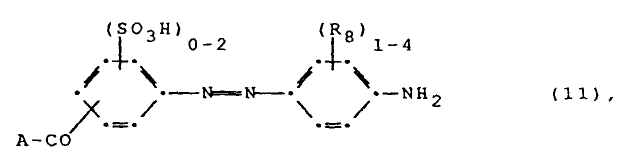 worin R₈ für 1 bis 4 Substituenten aus der Gruppe Wasserstoff, Halogen, Nitro, Cyan, Trifluormethyl, Sulfamoyl, Carbamoyl, C₁-₄-Alkyl, C₁-₄-Alkoxy, Amino, Acetylamino, Ureido, Hydroxy, Carboxy, Sulfomethyl und Sulfo, unabhängig voneinander, steht; und A ein Rest der Formel (1a) ist;
oder der Formel 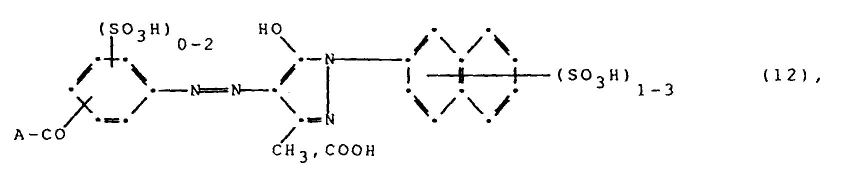 worin A ein Rest der Formel (1a) ist;
oder der Formel 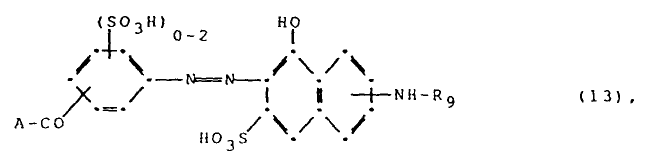 worin R₉ C₁-₄-Alkanoyl, Carboxy-C₁-C₄-alkanoyl, Benzoyl, Carboxybenzoyl oder Sulfobenzoyl ist; und A ein Rest der Formel (1a) ist;
oder der Formel 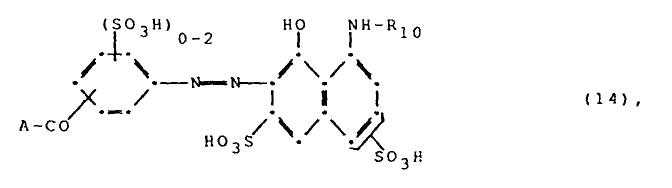 worin R₁₀ C₁-₄-Alkanoyl oder Benzoyl ist; und A ein Rest der Formel (1a) ist.

17. Verwendung von Reaktivfarbstoffen gemäss Anspruch 11, der Formel 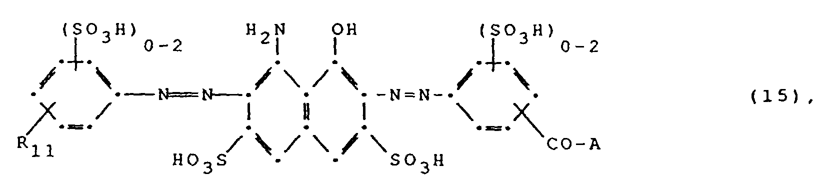 worin R₁₁ Wasserstoff, β-Sulfaoäthylsulfonyl oder Vinylsulfonyl ist; und A ein Rest der Formel (1a) ist.

18. Verwendung von Reaktivfarbstoffen gemäss Anspruch 9, der Formel 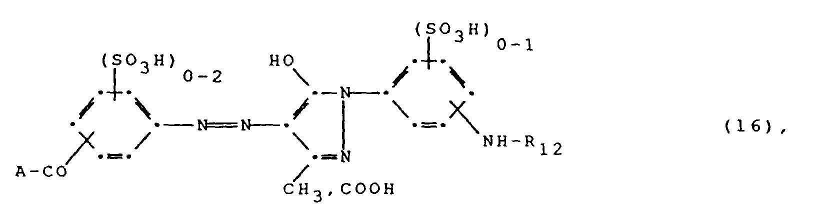 worin R₁₂ ein Halogentriazin- oder Halogenpyrimidin-Rest ist; und A ein Rest der Formel (1a) ist;
oder der Formel 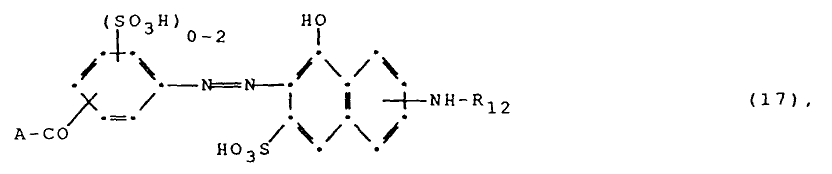 worin R₁₂ ein Halogentriazin- oder Halogenpyrimidin-Rest ist; und A ein Rest der Formel (1a) ist;
oder der Formel 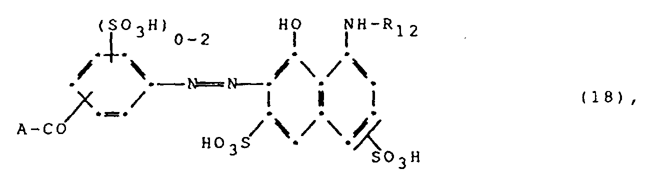 worin R₁₂ ein Halogentriazin- oder Halogenpyrimidin-Rest ist; und A ein Rest der Formel (1a) ist;
oder der Formel 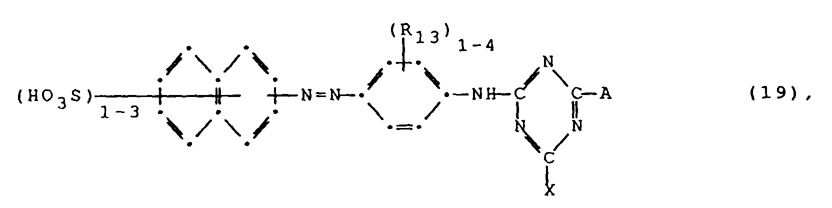 worin R₁₃ für 1 bis 4 Substituenten aus der Gruppe Wasserstoff, Halogen, Nitro, Cyan, Trifluormethyl, Sulfamoyl, Carbamoyl, C₁-₄-Alkyl, C₁-₄-Alkoxy, Amino, Acetylamino, Ureido, Hydroxy, Carboxy, Sulfomethyl und Sulfo, unabhängig voneinander, steht; X Fluor oder Chlor, und A ein Rest der Formel (1a) ist;
oder der Formel 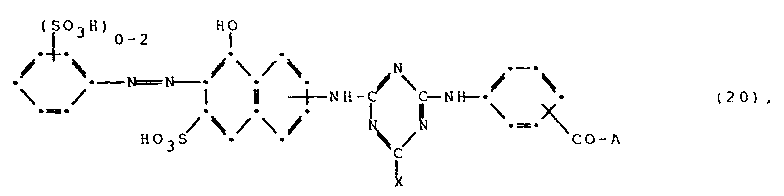 worin X Fluor oder Chlor, und A ein Rest der Formel (1a) ist;
oder der Formel 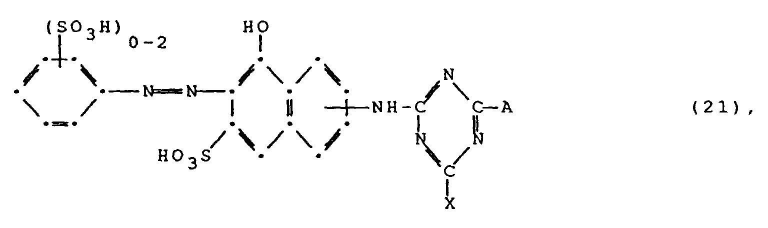 worin X Fluor oder Chlor, und A ein Rest der Formel (1a) ist;
oder der Formel 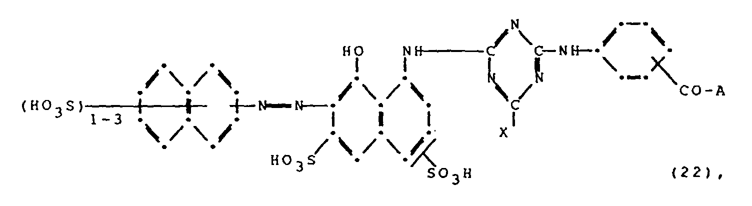 worin X Fluor oder Chlor, und A ein Rest der Formel (1a) ist;
oder der Formel 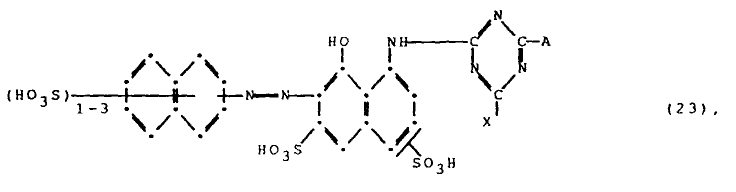 worin X Fluor oder Chlor, und A ein Rest der Formel (1a) ist;
oder der Formel 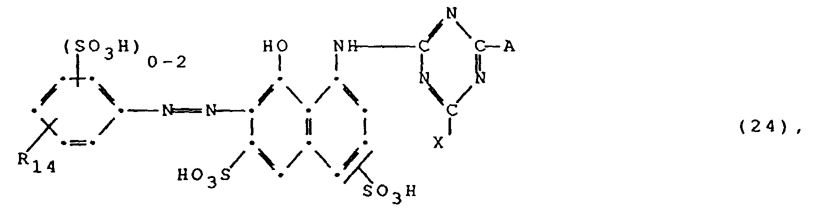 worin R₁₄ Wasserstoff, β-Sulfatoäthylsulfonyl oder Vinylsulfonyl ist; X Fluor oder Chlor, und A ein Rest der Formel (1a) ist;
oder der Formel 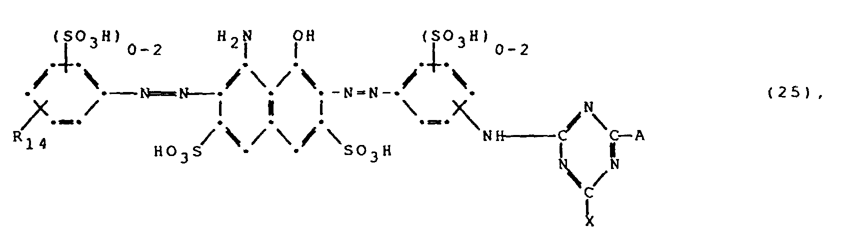 worin R₁₄ Wasserstoff, β-Sulfatoäthylsulfonyl oder Vinylsulfonyl ist; X Fluor oder Chlor und A ein Rest der Formel (1a) ist.

19. Verwendung gemäss einem der Ansprüche 1 bis 18, zum Färben oder Bedrucken von Baumwolle.

20. Reaktivfarbstoffe der Formel
D(̵U - A)₁₋₂ (1),
worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes; -U-A einen Rest der Formel
-CO-A (2a),
-B-CO-A (2b), 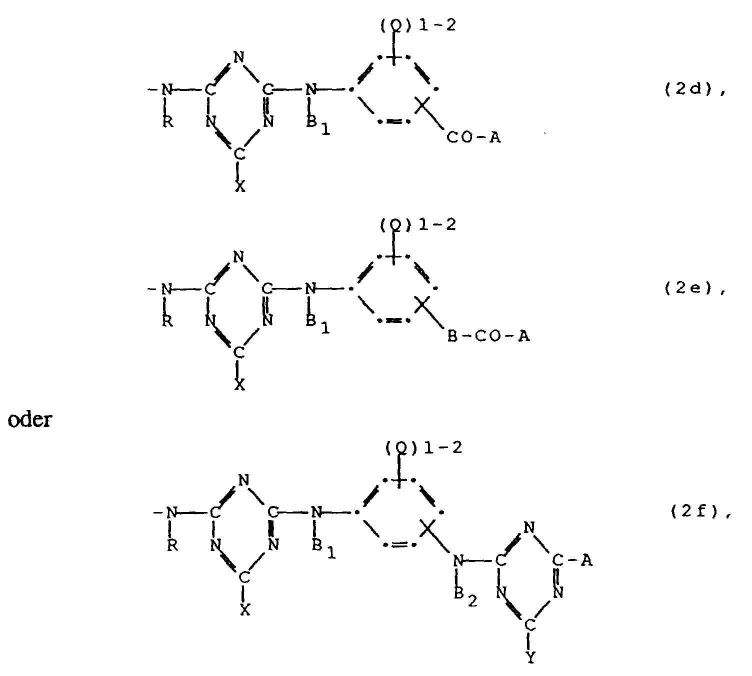
bedeutet, worin B ein Rest (̵CH₂)̵ₙ oder -O(̵CH₂)̵ₙ, n = 1 bis 6; R, B₁ und B₂ unabhängig voneinander Wasserstoff oder Alkyl mit 1 bis 4 Kohlenstoffatomen, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann; und X und Y unabhängig voneinander Fluor oder Chlor ist; Q für 1 bis 2 Substituenten aus der Gruppe Wasserstoff, C₁-C₄-Alkyl, C₁-₄-Alkoxy, Halogen, Carboxy oder Sulfo steht; und A ein Aminosubstituent der Formel 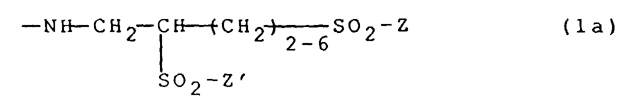 und Z und Z' unabhängig voneinander β-Sulfatoäthyl, β-Thiosulfatoäthyl, β-Phosphatoäthyl, β-Acyloxyäthyl, β-Halogenäthyl oder Vinyl ist.

21. Reaktivfarbstoffe gemäss Anspruch 20, worin A ein Rest der Formel 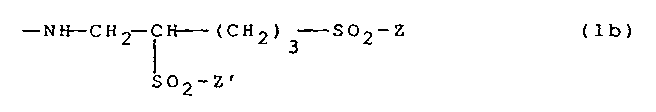 und Z=Z' ist, wobei Z bzw. Z' die für Anspruch 20 geltende Bedeutung hat.

22. Reaktivfarbstoffe gemäss Anspruch 20, worin -U-A einer der Reste der Formeln (2d) bis (2f), R Wasserstoff, Methyl oder Aethyl; B₁ und B₂ Wasserstoff; Q Sulfo; und X und Y Fluor- oder Chloratome sind.

23. Reaktivfarbstoffe gemäss Anspruch 20, worin D der Rest eines Mono- oder Disazofarbstoffes ist.

24. Reaktivfarbstoffe gemäss Anspruch 20, worin D der Rest eines Metallkomplexazo- oder Formazanfarbstoffes ist.

25. Reaktivfarbstoffe gemäss Anspruch 20, worin D der Rest eines Anthrachinonfarbstoffes ist.

26. Reaktivfarbstoffe gemäss Anspruch 20, worin D der Rest eines Phthalocyaninfarbstoffes ist.

27. Reaktivfarbstoffe gemäss Anspruch 20, worin D der Rest eines Dioxazinfarbstoffes ist.

28. Reaktivfarbstoffe gemäss Anspruch 23, worin D ein Mono- oder Disazofarbstoffrest der Formel 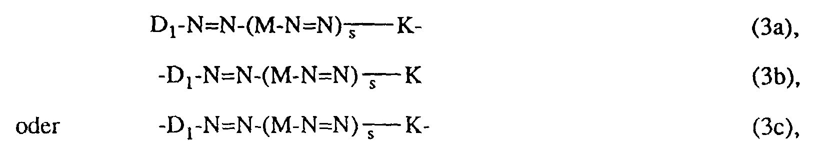 oder eines davon abgeleiteten Metallkomplexes; D₁ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon, 6-Hydroxypyridon-(2)- oder Acetessigsäurearylamid-Reihe ist, wobei D₁, M und K durch Alkylgruppen mit 1 bis 4 Kohlenstoffatomen, Alkoxygruppen mit 1 bis 4 Kohlenstoffatomen, Acylaminogruppen mit 1 bis 8 Kohlenstoffatomen, Amino, Alkylamino mit 1 bis 4 Kohlenstoffatomen, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, Alkylsulfonyl mit 1 bis 4 Kohlenstoffatomen, Trifluormethyl, Nitro, Cyano, Halogen, Carbamoyl, N-Alkylcarbamoyl mit 1 bis 4 Kohlenstoffatomen im Alkylrest, Sulfamoyl, N-Alkylsulfamoyl mit 1 bis 4 Kohlenstoffatomen, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo, insbesondere durch Hydroxy-, Amino-, Methyl-, Aethyl-, Methoxy- oder Aethoxygruppen, Alkanoylaminogruppen mit 2 bis 4 C-Atomen, Benzoylaminogruppen oder Halogenatome, substituiert sein können; s = 0 oder 1 ist; und D₁, M und K zusammen mindestens zwei Sulfogruppen, vorzugsweise drei oder vier Sulfogruppen, enthalten.

29. Reaktivfarbstoffe gemäss Anspruch 23, worin D ein Disazofarbstoffrest der Formel
D₁-N=N-K-N=N-D₂- (4a),
oder
-D₁-N=N-K-N=N-D₂- (4b),
D₁ und D₂ unabhängig voneinander der Rest einer Diazokomponente der Benzol- oder Naphthalinreihe, und K der Rest einer Kupplungskomponente der Napthalinreihe ist; wobei D₁, D₂ und K durch Alkylgruppen mit 1 bis 4 Kohlenstoffatomen, Alkoxygruppen mit 1 bis 4 Kohlenstoffatomen, Acylaminogruppen mit 1 bis 8 Kohlenstoffatomen, Amino, Alkylamino mit 1 bis 4 Kohlenstoffatomen, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, Alkylsulfonyl mit 1 bis 4 Kohlenstoffatomen, Trifluormethyl, Nitro, Cyano, Halogen, Carbamoyl, N-Alkylcarbamoyl mit 1 bis 4 Kohlenstoffatomen im Alkylrest, Sulfamoyl, N-Alkylsulfamoyl mit 1 bis 4 Kohlenstoffatomen, N-(β-Hydroxyäthyl)-sulfamoyl, N,N-Di-(β-hydroxyäthyl)sulfamoyl, N-Phenylsulfamoyl, Ureido, Hydroxy, Carboxy, Sulfomethyl oder Sulfo, insbesondere durch Hydroxy-, Amino-, Methyl-, Aethyl-, Methoxy- oder Aethoxygruppen, Alkanoylaminogruppen mit 2 bis 4 C-Atomen, Benzoylaminogruppen oder Halogenatome, substituiert sein können; und D₁, M und K zusammen mindestens zwei Sulfogruppen, vorzugsweise drei oder vier Sulfogruppen, enthalten.

30. Reaktivfarbstoffe gemäss Anspruch 24, worin D der Rest eines 1:1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.

31. Reaktivfarbstoffe gemäss Anspruch 23, worin D der Rest eines Formazanfarbstoffes der Formel 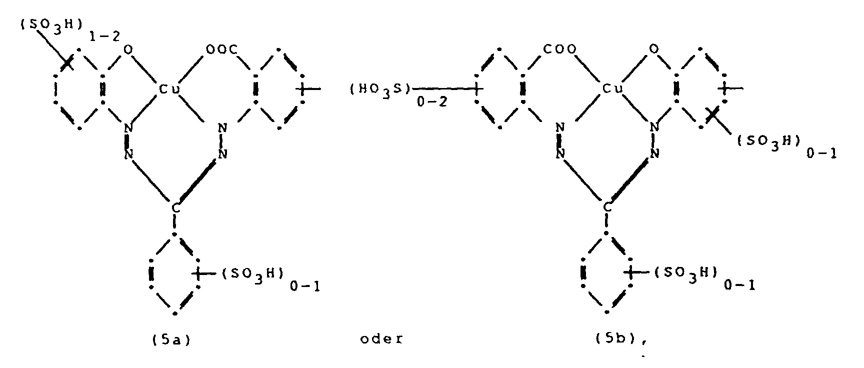 ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.

32. Reaktivfarbstoffe gemäss Anspruch 25, worin D der Rest eines Anthrachinonfarbstoffes der Formel 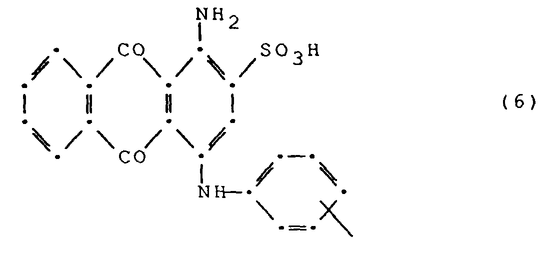 ist; wobei der Anthrachinonkern durch eine weitere Sulfogruppe, und der Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 stark wasserlöslichmachende Gruppen enthält.

33. Reaktivfarbstoffe gemäss Anspruch 26, worin D der Rest eines Phthalocyaninfarbstoffes der Formel 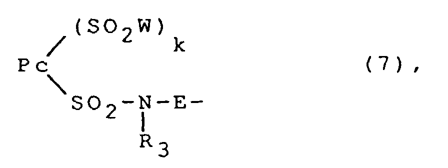 Pc der Rest eines Kupfer- oder Nickelphthalocyanins; W -OH und/oder -NR₁R₂; R₁ und R₂ unabhängig voneinander Wasserstoff oder Alkyl mit 1 bis 4 Kohlenstoffatomen, das durch Hydroxy oder Sulfo substituiert sein kann; R₃ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Aethylenrest; und k = 1 bis 3 ist.

34. Reaktivfarbstoffe gemäss Anspruch 27, worin D der Rest eines Dioxazinfarbstoffes der Formel 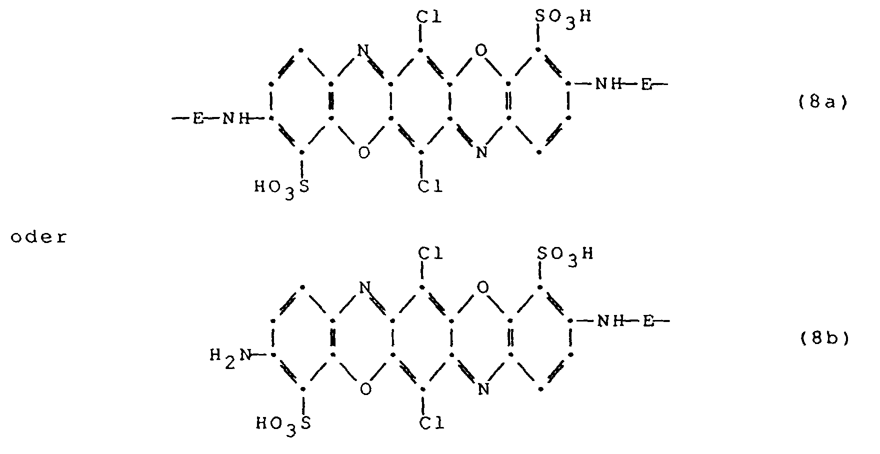 ist, worin E ein Phenylenrest, der durch Alkyl mit 1 bis 4 C-Aromen, Halogen, Carboxy oder Sulfo substituiert sein kann; oder ein Alkylenrest mit 2 bis 6 C-Atomen ist; und die äusseren Benzolringe in den Formeln (8a) und (8b) durch Alkyl mit 1 bis 4 C-Atomen, Alkoxy mit 1 bis 4 C-Atomen, Acetylamino, Nitro, Halogen, Carboxy oder Sulfo weitersubstituiert sein können.

35. Reaktivfarbstoffe gemäss Anspruch 28, der Formel 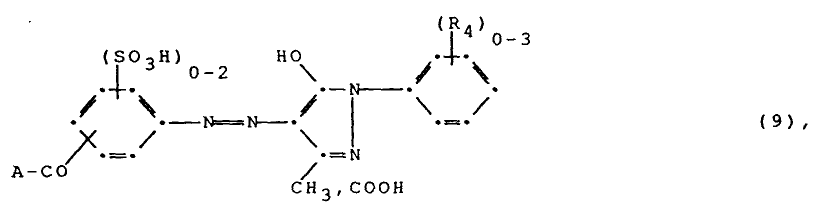 worin R₄ für 0 bis 3 Substituenten aus der Gruppe C₁-₄-Alkyl, C₁-₄-Alkoxy, Halogen, Carboxy und Sulfo, unabhängig voneinander, steht; und A ein Rest der Formel (1a) ist;
oder der Formel 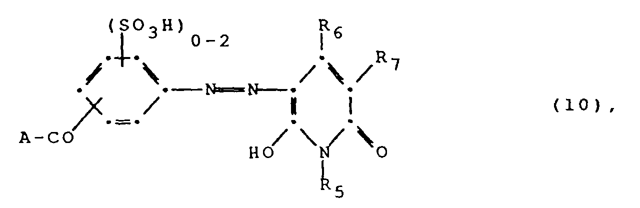 worin R₅ und R₆ unabhängig voneinander Wasserstoff, C₁-₄-Alkyl oder Phenyl, und R₇ Wasserstoff, Cyano, Carbamoyl oder Sulfomethyl ist; und
A ein Rest der Formel (1a) ist;
oder der Formel 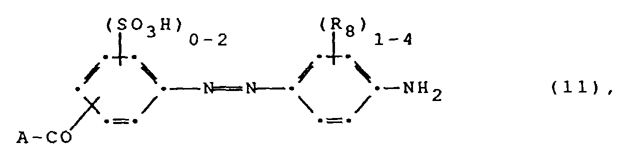 worin R₈ für 1 bis 4 Substituenten aus der Gruppe Wasserstoff, Halogen, Nitro, Cyan, Trifluormethyl, Sulfamoyl, Carbamoyl, C₁-₄-Alkyl, C₁-₄-Alkoxy, Amino, Acetylamino, Ureido, Hydroxy, Carboxy, Sulfomethyl und Sulfo, unabhängig voneinander, steht; und A ein Rest der Formel (1a) ist;
oder der Formel 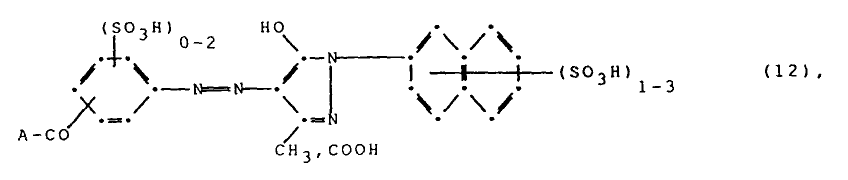 worin A ein Rest der Formel (1a) ist;
oder der Formel 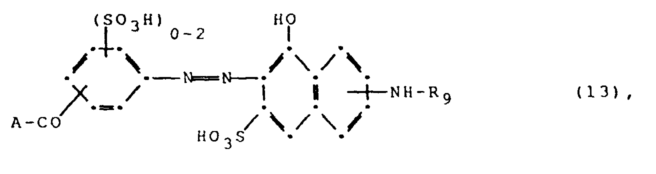 worin R₉ C₁-₄-Alkanoyl, Carboxy-C₁-C₄-alkanoyl, Benzoyl, Carboxybenzoyl oder Sulfobenzoyl ist; und A ein Rest der Formel (1a) ist;
oder der Formel 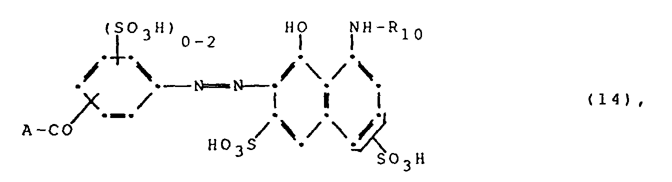 worin R₁₀ C₁-₄-Alkanoyl oder Benzoyl ist; und A ein Rest der Formel (1a) ist.

36. Reaktivfarbstoffe gemäss Anspruch 29, der Formel 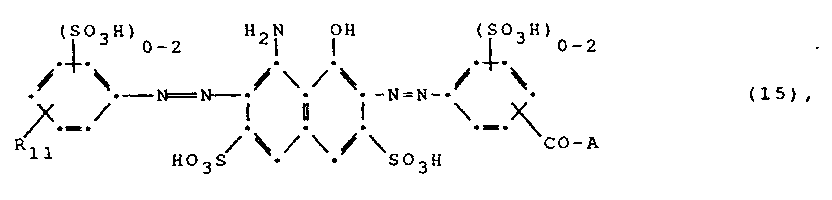 worin R₁₁ Wasserstoff, β-Sulfatoäthylsulfonyl oder Vinylsulfonyl ist; und A ein Rest der Formel (1a) ist.

37. Reaktivfarbstoffe gemäss Anspruch 28, der Formel 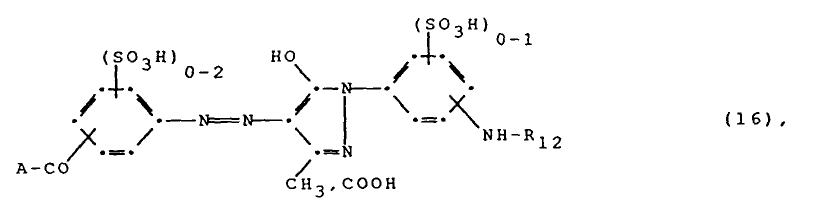 worin R₁₂ ein Halogentriazin- oder Halogenpyrimidin-Rest ist; und A ein Rest der Formel (1a) ist;
oder der Formel 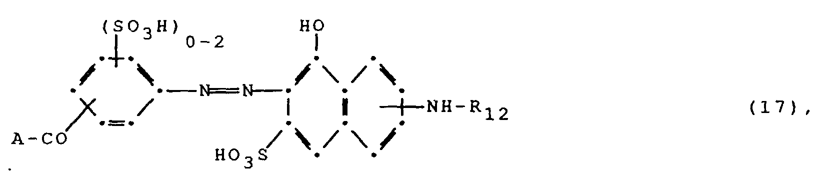 worin R₁₂ ein Halogentriazin- oder Halogenpyrimidin-Rest ist; und A ein Rest der Formel (1a) ist;
oder der Formel 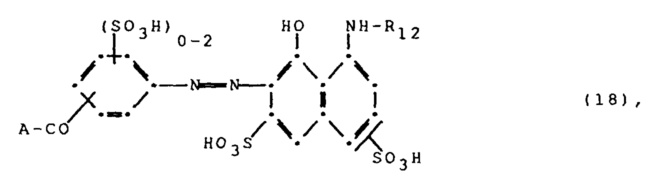 worin R₁₂ ein Halogentriazin- oder Halogenpyrimidin-Rest ist; und A ein Rest der Formel (1a) ist;
oder der Formel 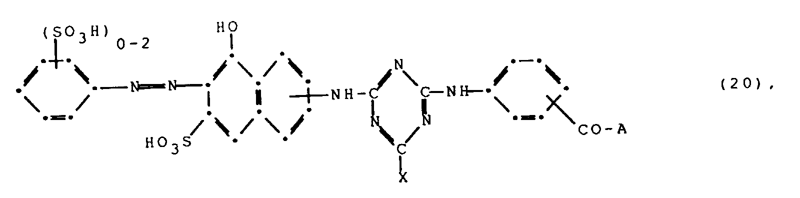 worin X Fluor oder Chlor, und A ein Rest der Formel (1a) ist;
oder der Formel 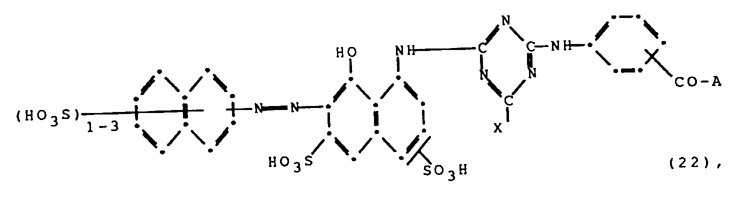 worin X Fluor oder Chlor, und A ein Rest der Formel (1a) ist.

38. Verfahren zur Herstellung von Reaktivfarbstoffen der Formel (1) gemäss Anspruch 20, dadurch gekennzeichnet, dass man in einen organischen Farbstoff mit dem Rest D oder in ein Farbstoffvorprodukt einen Rest oder zwei Reste der Formel
-U-A (1c)
einführt, wobei D, U und A die unter Formel (1) angegebenen Bedeutungen haben, oder dass man, im Falle der Verwendung von Farbstoffvorprodukten, die erhaltenen Zwischenprodukte in die gewünschten Endfarbstoffe überführt, und gegebenenfalls eine weitere Umwandlungsreaktion anschliesst.

39. Verbindungen der Formel

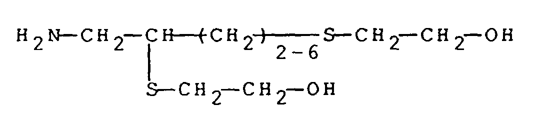

40. Verbindungen gemäss Anspruch 39, der Formel

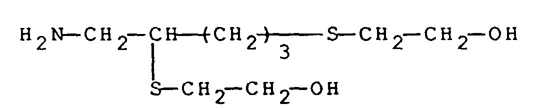

41. Verbindungen der Formeln 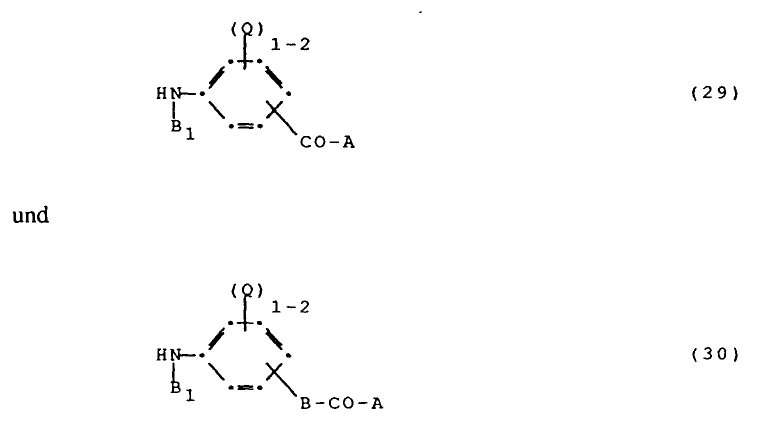 worin B ein Rest (̵CH₂)̵ₙ oder -O(̵CH₂)̵ₙ, n = 1 bis 6; B₁ Wasserstoff oder Alkyl mit 1 bis 4 Kohlenstoffatomen, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann; Q für 1 bis 2 Substituenten aus der Gruppe Wasserstoff, C₁-C₄-Alkyl, C₁-₄-Alkoxy, Halogen, Carboxy oder Sulfo steht; und A die in Anspruch 1 angegebene Bedeutung hat.

42. Verbindungen gemäss Anspruch 41, der Formeln 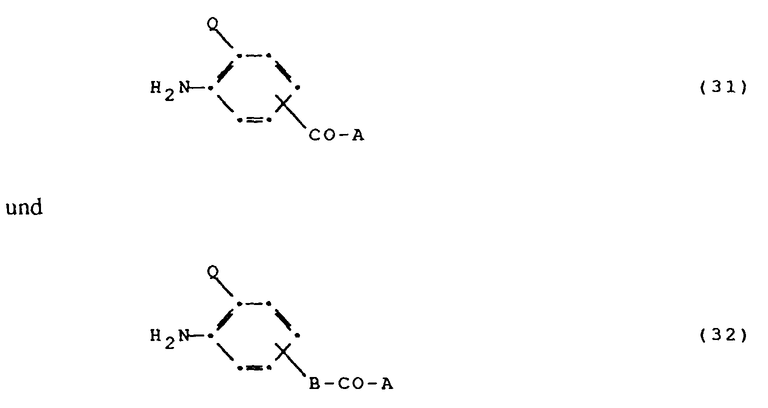 worin B, Q und A die in Anspruch 41 angegebenen Bedeutungen haben.

43. Verbindungen der Formel

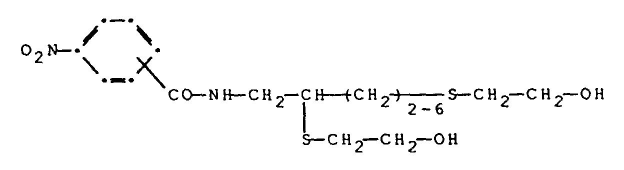

44. Verbindungen gemäss Anspruch 43, der Formel

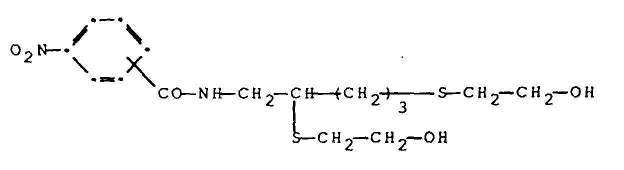

45. Verfahren zur Herstellung von Verbindungen gemäss Anspruch 41, dadurch gekennzeichnet, dass man ein entsprechendes Nitrophenylcarbonsäurechlorid bzw. Nitrophenyl- oder Nitrophenoxy-alkansäurechlorid mit einem Amin der Formel H-A kondensiert und die Nitrogruppe zur Aminogruppe reduziert.

46. Verfahren zur Herstellung von Verbindungen gemäss Anspruch 43, dadurch gekennzeichnet, dass man ein entsprechendes Nitrophenylcarbonsäurechlorid bzw. Nitrophenyl- oder Nitrophenoxy-alkansäurechlorid mit einem geeigneten Dihalogenalkylamin kondensiert und das Kondensationsprodukt mit Mercaptoäthanol umsetzt.

47. Verfahren zur Herstellung von Verbindungen gemäss Anspruch 43, dadurch gekennzeichnet, dass man ein entsprechendes Nitrophenylcarbonsäurechlorid bzw. Nitrophenyl- oder Nitrophenoxy-alkansäurechlorid mit einem Bis-ß-hydroxyäthylthio-aminoalkan kondensiert.

48. Verfahren gemäss Anspruch 47, dadurch gekennzeichnet, dass man m- oder p-Nitrobenzoylchlorid mit 2,5-Bis-β-hydroxyäthylthio-1-amino-pentan kondensiert.

## Claims

1. The use of a reactive dye of the formula
D(̵U - A)₁₋₂ (1)
in which D is the radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye; -U-A is a radical of the formula
-CO-A (2a),
-B-CO-A (2b), 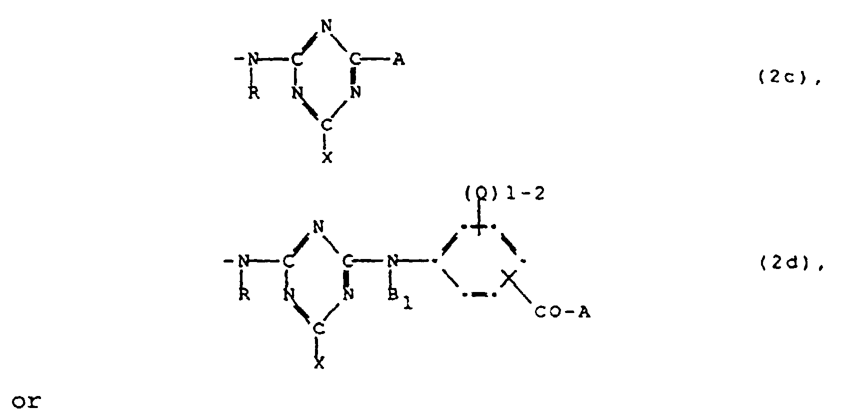 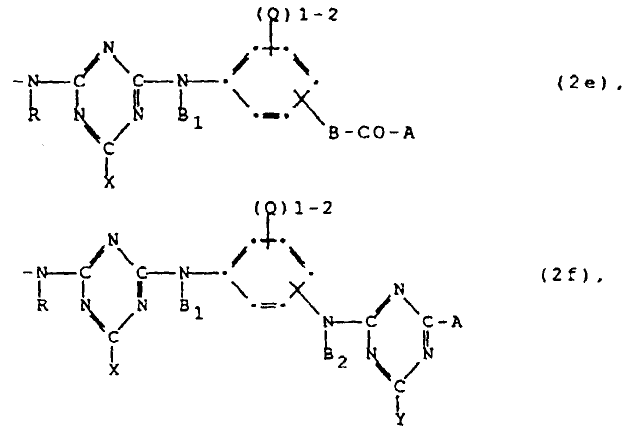
in which B is a (CH₂)ₙ- or -O-(CH₂)ₙ radical where n is 1 to 6; R, B₁ and B₂, independently of one another, are hydrogen or alkyl having 1 to 4 carbon atoms, which can be substituted by halogen, hydroxyl, cyano, C₁-C₄alkoxy, C₁-C₄alkoxycarbonyl, carboxyl, sulfamoyl, sulfo or sulfato; and X and Y, independently of one another, are fluoro or chloro; Q is 1 to 2 substituents from the group consisting of hydrogen, C₁-C₄alkyl, C₁-C₄alkoxy, halogen, carboxyl or sulfo; and A is an amino substituent of the formula 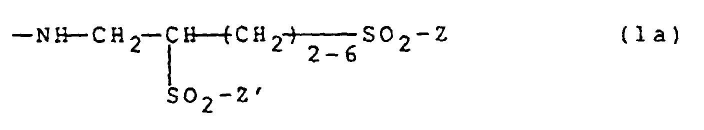 and Z and Z', independently of one another, are β-sulfatoethyl, β-thiosulfatoethyl, β-phosphatoethyl, β-acyloxyethyl, β-haloethyl or vinyl, for the dyeing or printing of cellulose-containing fibre materials.

2. The use of a reactive dye according to claim 1, in which A is a radical of the formula 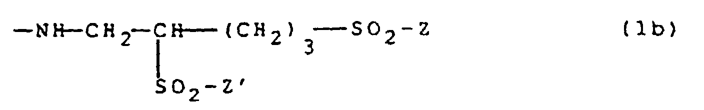 and Z is Z', Z or Z' being as defined in claim 1.

3. The use of a reactive dye according to claim 1, in which -U-A is one of the radicals of the formulae (2c) to (2f), R is hydrogen, methyl or ethyl; B₁ and B₂ are hydrogen; Q is sulfo; and X and Y are fluorine or chlorine atoms.

4. The use of a reactive dye according to claim 1, in which D is the radical of a monoazo or disazo dye.

5. The use of a reactive dye according to claim 1, in which D is the radical of a metal complex azo or formazan dye.

6. The use of a reactive dye according to claim 1, in which D is the radical of an anthraquinone dye.

7. The use of a reactive dye according to claim 1, in which D is the radical of a phthalocyanine dye.

8. The use of a reactive dye according to claim 1, in which D is the radical of a dioxazine dye.

9. The use of a reactive dye according to claim 4, in which D is a monoazo or disazo dye radical of the formula
D₁-N=N-(M-N=N)ₛ-K- (3a),
-D₁-N=N-(M-N=N)ₛ-K (3b),
or
-D₁-N=N-(M-N=N)ₛ-K- (3c),
or of a metal complex derived therefrom; D₁ is the radical of a diazo component of the benzene or naphthalene series, M is the radical of a middle component of the benzene or naphthalene series and K is the radical of a coupling component of the benzene, naphthalene, pyrazolone, 6-hydroxy-2-pyridone or arylacetoacetamide series, it being possible for D₁, M and K to be substituted by alkyl groups having 1 to 4 carbon atoms, alkoxy groups having 1 to 4 carbon atoms, acylamino groups having 1 to 8 carbon atoms, amino, alkylamino having 1 to 4 carbon atoms, phenylamino, N,N-di-β-hydroxyethylamino, N,N-di-β-sulfatoethylamino, sulfobenzylamino, N,N-disulfobenzylamino, alkoxycarbonyl having 1 to 4 carbon atoms in the alkoxy radical, alkylsulfonyl having 1 to 4 carbon atoms, trifluoromethyl, nitro, cyano, halogen, carbamoyl, N-alkylcarbamoyl having 1 to 4 carbon atoms in the alkyl radical, sulfamoyl, N-alkylsulfamoyl having 1 to 4 carbon atoms, N-(β-hydroxyethyl)sulfamoyl, N,N-di(β-hydroxyethyl)sulfamoyl, N-phenylsulfamoyl, ureido, hydroxyl, carboxyl, sulfomethyl or sulfo, in particular by hydroxyl, amino, methyl, ethyl, methoxy or ethoxy groups, alkanoylamino groups having 2 to 4 carbon atoms, benzoylamino groups or halogen atoms; s is 0 or 1; and D₁, M and K together contain at least two sulfo groups, preferably three or four sulfo groups.

10. The use of a reactive dye according to claim 4, in which D is a disazo dye radical of the formula
D₁-N=N-K-N=N-D₂- (4a),
or
-D₁-N=N-K-N=N-D₂- (4b),
D₁ and D₂, independently of one another, are the radical of a diazo component of the benzene or naphthalene series; and K is the radical of a coupling component of the naphthalene series; it being possible for D₁, D₂ and K to be substituted by alkyl groups having 1 to 4 carbon atoms, alkoxy groups having 1 to 4 carbon atoms, acylamino groups having 1 to 8 carbon atoms, amino, alkylamino having 1 to 4 carbon atoms, phenylamino, N,N-di-β-hydroxyethylamino, N,N-di-β-sulfatoethylamino, sulfobenzylamino, N,N-disulfobenzylamino, alkoxycarbonyl having 1 to 4 carbon atoms in the alkoxy radical, alkylsulfonyl having 1 to 4 carbon atoms, trifluoromethyl, nitro, cyano, halogen, carbamoyl, N-alkylcarbamoyl having 1 to 4 carbon atoms in the alkyl radical, sulfamoyl, N-alkylsulfamoyl having 1 to 4 carbon atoms, N-(β-hydroxyethyl)sulfamoyl, N,N-di(β-hydroxyethyl)sulfamoyl, N-phenylsulfamoyl, ureido, hydroxyl, carboxyl, sulfomethyl or sulfo, in particular by hydroxyl, amino, methyl, ethyl, methoxy or ethoxy groups, alkanoylamino groups having 2 to 4 C atoms, benzoylamino groups or halogen atoms; and D₁, D₂ and K together contain at least two sulfo groups, preferably three or four sulfo groups.

11. The use of a reactive dye according to claim 5, in which D is the radical of a 1:1 copper complex azo dye of the benzene or naphthalene series and the copper atom is bound on both sides to one metallizable group each in the ortho-position relative to the azo bridge.

12. The use of a reactive dye according to claim 4, in which D is the radical of a formazan dye of the formula 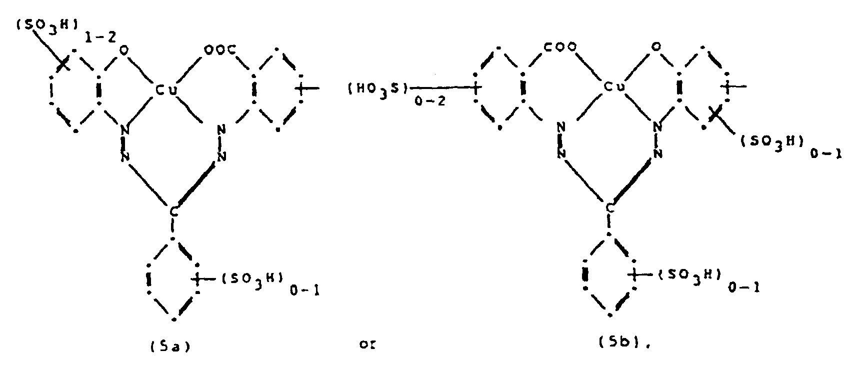 in which the benzene rings can be further substituted by alkyl having 1 to 4 C atoms, alkoxy having 1 to 4 C atoms, alkylsulfonyl having 1 to 4 C atoms, halogen or carboxyl.

13. The use of a reactive dye according to claim 6, in which D is the radical of an anthraquinone dye of the formula 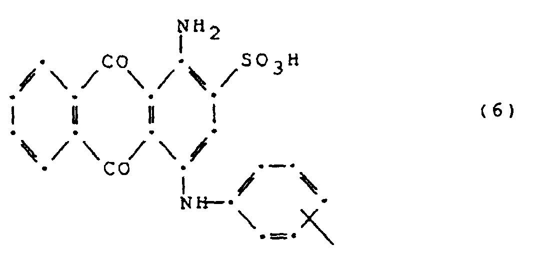 it being possible for the anthraquinone ring to be substituted by a further sulfo group and the phenyl radical to be substituted by alkyl having 1 to 4 C atoms, alkoxy having 1 to 4 C atoms, halogen, carboxyl or sulfo, and the dye preferably containing at least two strongly water-solubilizing groups.

14. The use of a reactive dye according to claim 7, in which D is the radical of a phthalocyanine dye of the formula 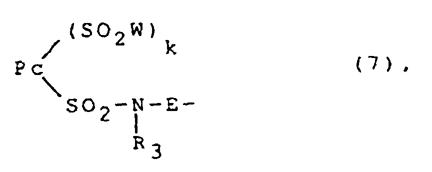 Pc is the radical of a copper or nickel phthalocyanine; W is -OH and/or -NR₁R₂; R₁ and R₂, independently of one another, are hydrogen or alkyl having 1 to 4 carbon atoms, which can be substituted by hydroxyl or sulfo; R₃ is hydrogen or alkyl having 1 to 4 carbon atoms; E is a phenylene radical which can be substituted by alkyl having 1 to 4 C atoms, halogen, carboxyl or sulfo; or is an alkylene radical having 2 to 6 C atoms, preferably a sulfophenylene or ethylene radical; and k is 1 to 3.

15. The use of a reactive dye according to claim 8, in which D is the radical of a dioxazine dye of the formula 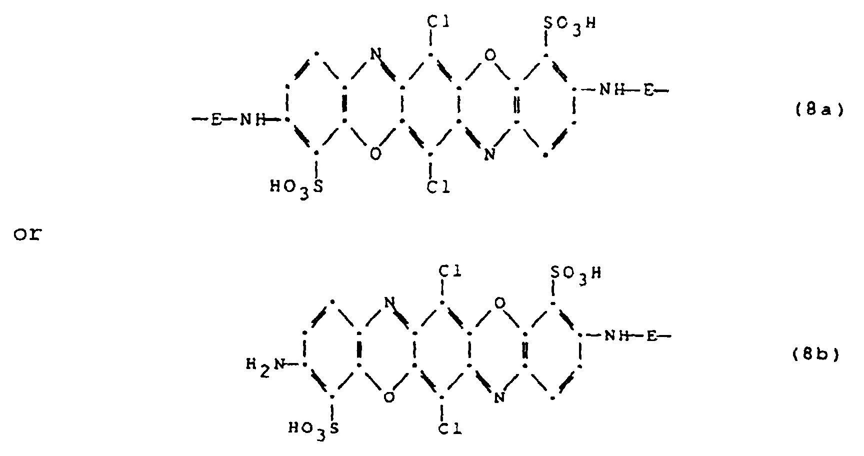 in which E is a phenylene radical which can be substituted by alkyl having 1 to 4 C atoms, halogen, carboxyl or sulfo; or is an alkylene radical having 2 to 6 C atoms; and the outer benzene rings in formulae (8a) and (8b) can be further substituted by alkyl having 1 to 4 C atoms, alkoxy having 1 to 4 C atoms, acetylamino, nitro, halogen, carboxyl or sulfo.

16. The use of a reactive dye according to claim 9, of the formula 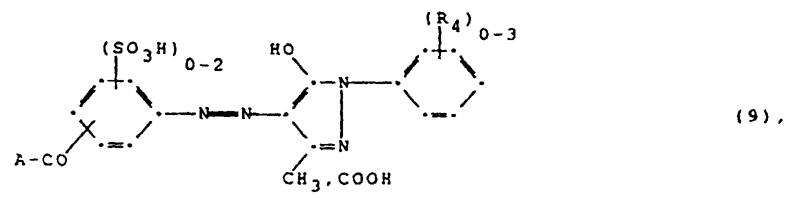 in which R₄ is 0 to 3 substituents from the group consisting of C₁-C₄alkyl, C₁-C₄alkoxy, halogen, carboxyl and sulfo, independently of one another; and A is a radical of the formula (1a);
or of the formula 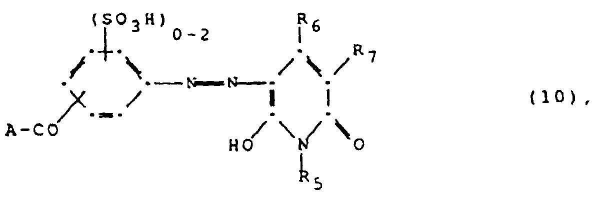 in which R₅ and R₆, independently of one another, are hydrogen, C₁-C₄alkyl or phenyl, and R₇ is hydrogen, cyano, carbamoyl or sulfomethyl; and
A is a radical of the formula (1a);
or of the formula 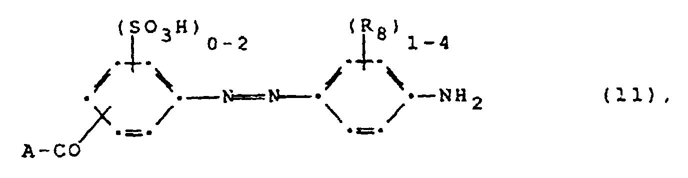 in which R₈ is 1 to 4 substituents from the group consisting of hydrogen, halogen, nitro, cyano, trifluoromethyl, sulfamoyl, carbamoyl, C₁-C₄alkyl, C₁-C₄alkoxy, amino, acetylamino, ureido, hydroxyl, carboxyl, sulfomethyl and sulfo, independently of one another; and A is a radical of the formula (1a);
or of the formula 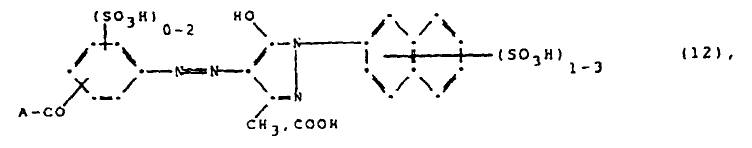 in which A is a radical of the formula (1a);
or of the formula 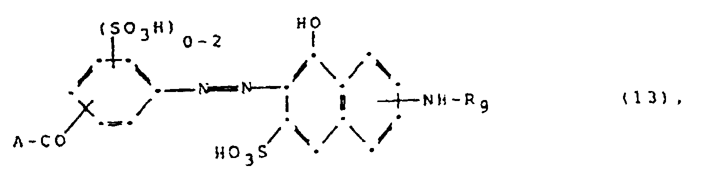 in which R₉ is C₁-C₄alkanoyl, carboxy-C₁-C₄alkanoyl, benzoyl, carboxybenzoyl or sulfobenzoyl; and A is a radical of the formula (1a);
or of the formula 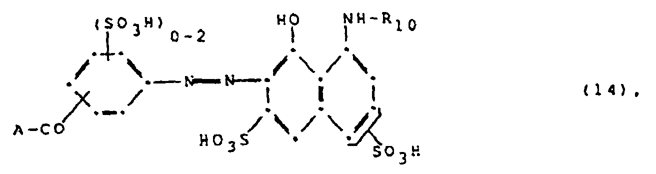 in which R₁₀ is C₁-C₄alkanoyl or benzoyl; and A is a radical of the formula (1a).

17. The use of a reactive dye according to claim 11, of the formula 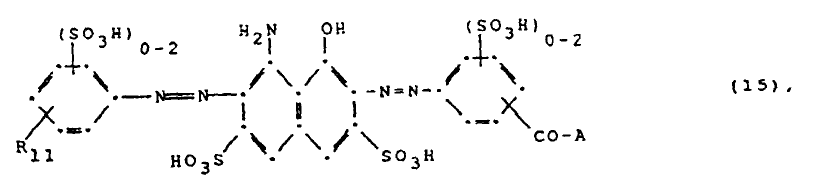 in which R₁₁ is hydrogen, β-sulfatoethylsulfonyl or vinylsulfonyl; and A is a radical of the formula (1a).

18. The use of a reactive dye according to claim 9, of the formula 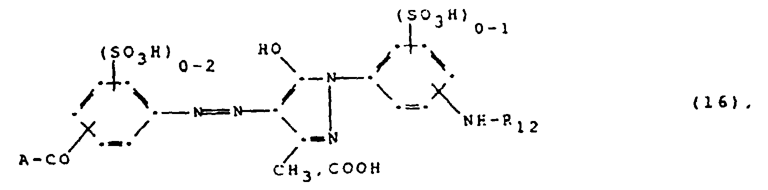 in which R₁₂ is a halotriazine or halopyrimidine radical; and A is a radical of the formula (1a);
or of the formula 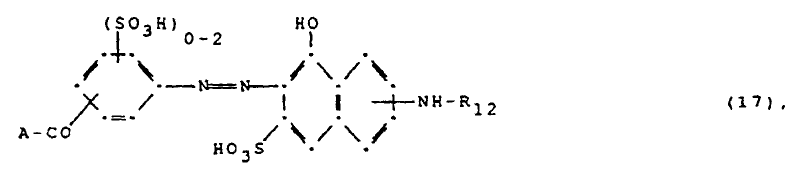 in which R₁₂ is a halotriazine or halopyrimidine radical; and A is a radical of the formula (1a);
or of the formula 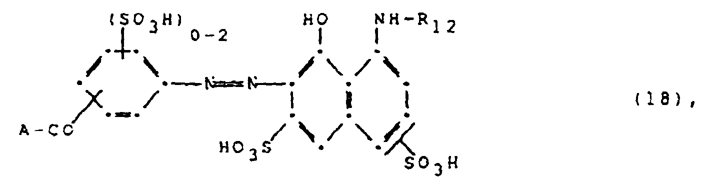 in which R₁₂ is a halotriazine or halopyrimidine radical; and A is a radical of the formula (1a);
or of the formula 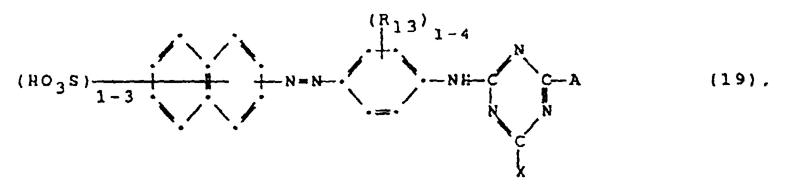 in which R₁₃ is 1 to 4 substituents from the group consisting of hydrogen, halogen, nitro, cyano, trifluoromethyl, sulfamoyl, carbamoyl, C₁-C₄alkyl, C₁-C₄alkoxy, amino, acetylamino, ureido, hydroxyl, carboxyl, sulfomethyl and sulfo, independently of one another; X is fluoro or chloro and A is a radical of the formula (1a);
or of the formula 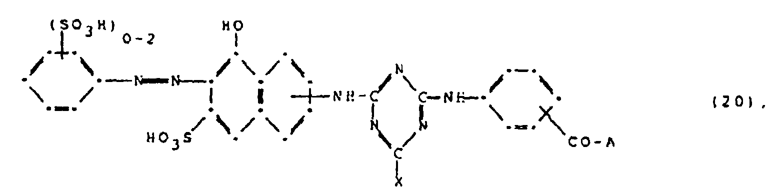 in which X is fluoro or chloro and A is a radical of the formula (1a);
or of the formula 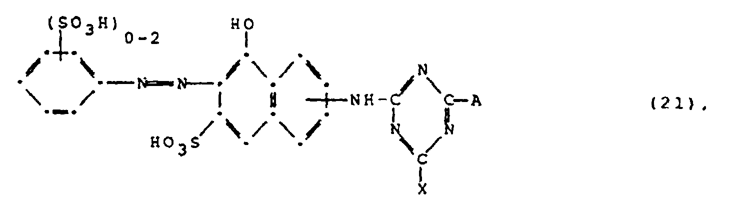 in which X is fluoro or chloro and A is a radical of the formula (1a);
or of the formula 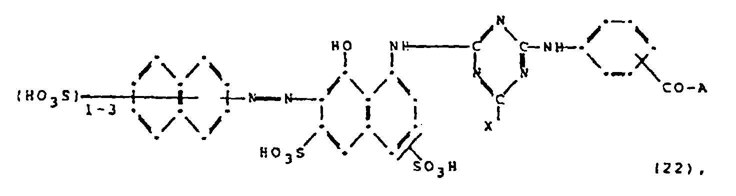 in which X is fluoro or chloro and A is a radical of the formula (1a);
or of the formula 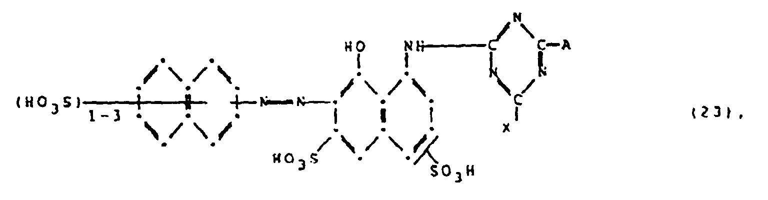 in which X is fluoro or chloro and A is a radical of the formula (1a);
or of the formula 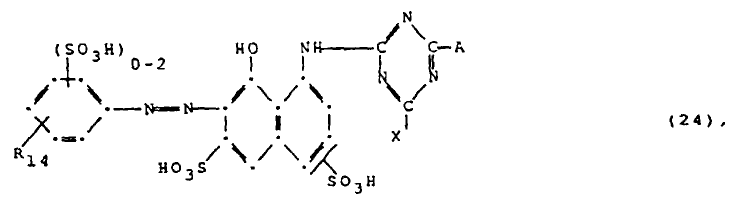 in which R₁₄ is hydrogen, β-sulfatoethylsulfonyl or vinylsulfonyl; X is fluoro or chloro and A is a radical of the formula (1a);
or of the formula 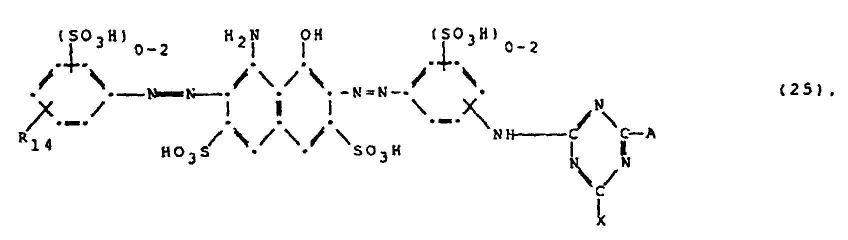 in which R₁₄ is hydrogen, β-sulfatoethylsulfonyl or vinylsulfonyl; X is fluoro or chloro and A is a radical of the formula (1a).

19. The use according to one of claims 1 to 18 for the dyeing or printing of cotton.

20. A reactive dye of the formula
D (̵U-A)₁₋₂ (1)
in which D is the radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye; -U-A is a radical of the formula
-CO-A (2a),
-B-CO-A (2b), 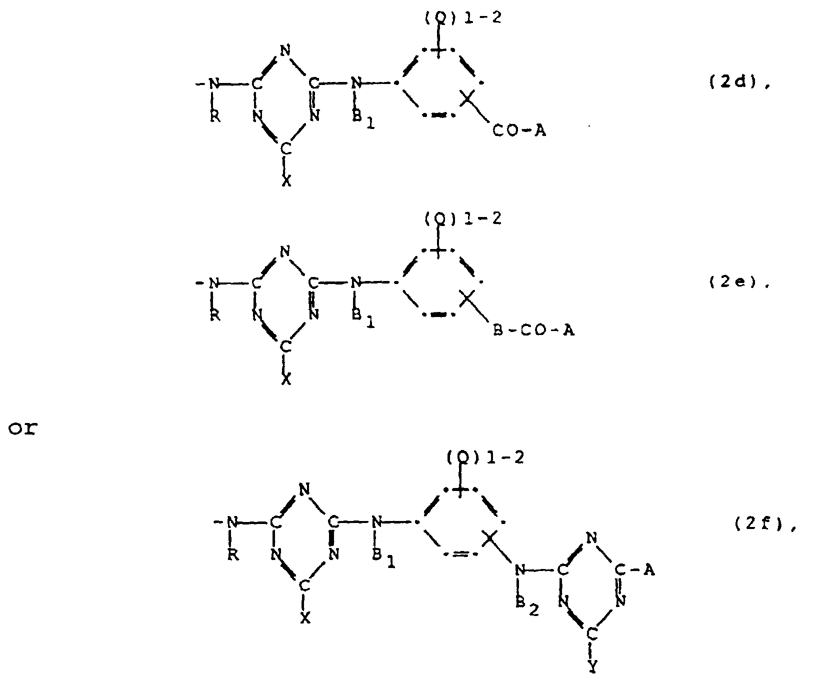
in which B is a (̵CH₂)̵ₙ or -O(̵CH₂)̵ₙ radical where n is 1 to 6; R, B₁ and B₂, independently of one another, are hydrogen or alkyl having 1 to 4 carbon atoms, which can be substituted by halogen, hydroxyl, cyano, C₁-C₄alkoxy, C₁-C₄alkoxycarbonyl, carboxyl, sulfamoyl, sulfo or sulfato; and X and Y, independently of one another, are fluoro or chloro; Q is 1 to 2 substituents from the group consisting of hydrogen, C₁-C₄alkyl, C₁-C₄alkoxy, halogen, carboxyl or sulfo; and A is an amino substituent of the formula 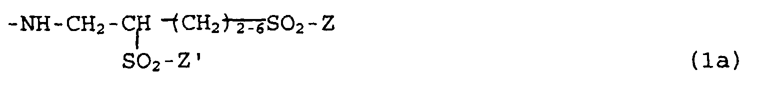 and Z and Z', independently of one another, are β-sulfatoethyl, β-thiosulfatoethyl, β-phosphatoethyl, β-acyloxyethyl, β-haloethyl or vinyl.

21. A reactive dye according to claim 20, in which A is a radical of the formula 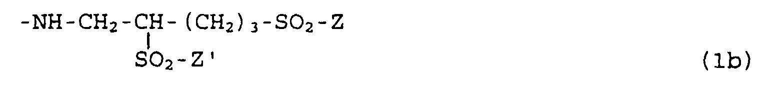 and Z is Z', Z or Z' being as defined in claim 20.

22. A reactive dye according to claim 20, in which -U-A is one of the radicals of the formulae (2d) to (2f), R is hydrogen, methyl or ethyl; B₁ and B₂ are hydrogen; Q is sulfo; and X and Y are fluorine or chlorine atoms.

23. A reactive dye according to claim 20, in which D is the radical of a monoazo or disazo dye.

24. A reactive dye according to claim 20, in which D is the radical of a metal complex azo or formazan dye.

25. A reactive dye according to claim 20, in which D is the radical of an anthraquinone dye.

26. A reactive dye according to claim 20, in which D is the radical of a phthalocyanine dye.

27. A reactive dye according to claim 20, in which D is the radical of a dioxazine dye.

28. A reactive dye according to claim 23, in which D is a monoazo or disazo dye radical of the formula
D₁-N=N-(M-N=N)ₛ-K- (3a),
-D₁-N=N-(M-N=N)ₛ-K (3b),
or
-D₁-N=N-(M-N=N)ₛ-K- (3c),
or of a metal complex derived therefrom; D₁ is the radical of a diazo component of the benzene or naphthalene series, M is the radical of a middle component of the benzene or naphthalene series and K is the radical of a coupling component of the benzene, naphthalene, pyrazolone, 6-hydroxy-2-pyridone or arylacetoacetamide series, it being possible for D₁, M and K to be substituted by alkyl groups having 1 to 4 carbon atoms, alkoxy groups having 1 to 4 carbon atoms, acylamino groups having 1 to 8 carbon atoms, amino, alkylamino having 1 to 4 carbon atoms, phenylamino, N,N-di-β-hydroxyethylamino, N,N-di-β-sulfatoethylamino, sulfobenzylamino, N,N-disulfobenzylamino, alkoxycarbonyl having 1 to 4 carbon atoms in the alkoxy radical, alkylsulfonyl having 1 to 4 carbon atoms, trifluoromethyl, nitro, cyano, halogen, carbamoyl, N-alkylcarbamoyl having 1 to 4 carbon atoms in the alkyl radical, sulfamoyl, N-alkylsulfamoyl having 1 to 4 carbon atoms, N-(β-hydroxyethyl)sulfamoyl, N,N-di(β-hydroxyethyl)sulfamoyl, N-phenylsulfamoyl, ureido, hydroxyl, carboxyl, sulfomethyl or sulfo, in particular by hydroxyl, amino, methyl, ethyl, methoxy or ethoxy groups, alkanoylamino groups having 2 to 4 C atoms, benzoylamino groups or halogen atoms; s is 0 or 1; and D₁, M and K together contain at least two sulfo groups, preferably three or four sulfo groups.

29. A reactive dye according to claim 23, in which D is a disazo dye radical of the formula
D₁-N=N-K-N=N-D₂- (4a),
or
-D₁-N=N-K-N=N-D₂- (4b),
D₁ and D₂, independently of one another, are the radical of a diazo component of the benzene or naphthalene series, and K is the radical of a coupling component of the naphthalene series; it being possible for D₁, D₂ and K to be substituted by alkyl groups having 1 to 4 carbon atoms, alkoxy groups having 1 to 4 carbon atoms, acylamino groups having 1 to 8 carbon atoms, amino, alkylamino having 1 to 4 carbon atoms, phenylamino, N,N-di-β-hydroxyethylamino, N,N-di-β-sulfatoethylamino, sulfobenzylamino, N,N-disulfobenzylamino, alkoxycarbonyl having 1 to 4 carbon atoms in the alkoxy radical, alkylsulfonyl having 1 to 4 carbon atoms, trifluoromethyl, nitro, cyano, halogen, carbamoyl, N-alkylcarbamoyl having 1 to 4 carbon atoms in the alkyl radical, sulfamoyl, N-alkylsulfamoyl having 1 to 4 carbon atoms, N-(β-hydroxyethyl)sulfamoyl, N,N-di(β-hydroxyethyl)sulfamoyl, N-phenylsulfamoyl, ureido, hydroxyl, carboxyl, sulfomethyl or sulfo, in particular by hydroxyl, amino, methyl, ethyl, methoxy or ethoxy groups, alkanoylamino groups having 2 to 4 C atoms, benzoylamino groups or halogen atoms; and D₁, D₂ and K together contain at least two sulfo groups, preferably three or four sulfo groups.

30. A reactive dye according to claim 24, in which D is the radical of a 1:1 copper complex azo dye of the benzene or naphthalene series and the copper atom is bound on both sides to one metallizable group each in the ortho-position relative to the azo bridge.

31. A reactive dye according to claim 23, in which D is the radical of a formazan dye of the formula 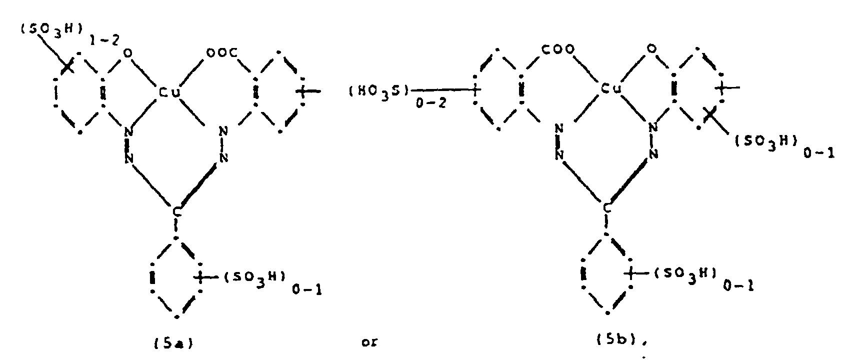 in which the benzene rings can be further substituted by alkyl having 1 to 4 C atoms, alkoxy having 1 to 4 C atoms, alkylsulfonyl having 1 to 4 C atoms, halogen or carboxyl.

32. A reactive dye according to claim 25, in which D is the radical of an anthraquinone dye of the formula 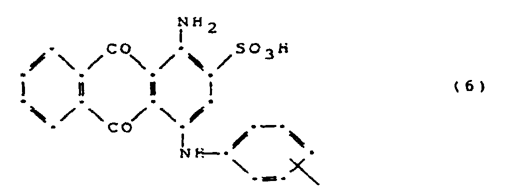 it being possible for the anthraquinone ring to be substituted by a further sulfo group and the phenyl radical to be substituted by alkyl having 1 to 4 C atoms, alkoxy having 1 to 4 C atoms, halogen, carboxyl or sulfo, and the dye preferably containing at least two strongly water-solubilizing groups.

33. A reactive dye according to claim 26, in which D is the radical of a phthalocyanine dye of the formula 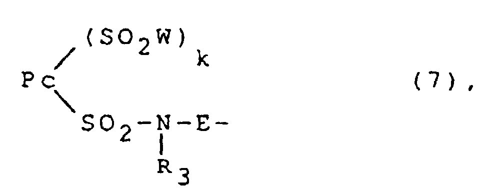 Pc is the radical of a copper or nickel phthalocyanine; W is -OH and/or -NR₁R₂; R₁ and R₂, independently of one another, are hydrogen or alkyl having 1 to 4 carbon atoms, which can be substituted by hydroxyl or sulfo; R₃ is hydrogen or alkyl having 1 to 4 carbon atoms; E is a phenylene radical which can be substituted by alkyl having 1 to 4 C atoms, halogen, carboxyl or sulfo; or is an alkylene radical having 2 to 6 C atoms, preferably a sulfophenylene or ethylene radical; and k is 1 to 3.

34. A reactive dye according to claim 27, in which D is the radical of a dioxazine dye of the formula 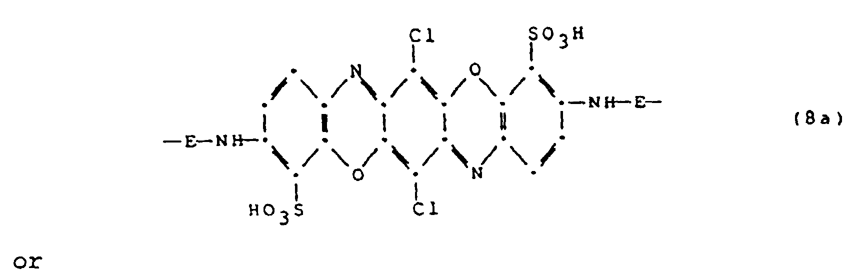 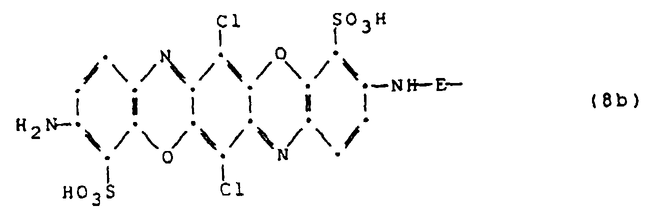 in which E is a phenylene radical which can be substituted by alkyl having 1 to 4 C atoms, halogen, carboxyl or sulfo; or is an alkylene radical having 2 to 6 C atoms; and the outer benzene rings in formulae (8a) and (8b) can be further substituted by alkyl having 1 to 4 C atoms, alkoxy having 1 to 4 C atoms, acetylamino, nitro, halogen, carboxyl or sulfo.

35. A reactive dye according to claim 28, of the formula 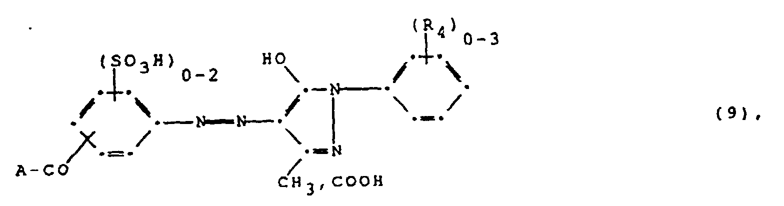 in which R₄ is 0 to 3 substituents from the group consisting of C₁-C₄alkyl, C₁-C₄alkoxy, halogen, carboxyl and sulfo, independently of one another; and A is a radical of the formula (1a);
or of the formula 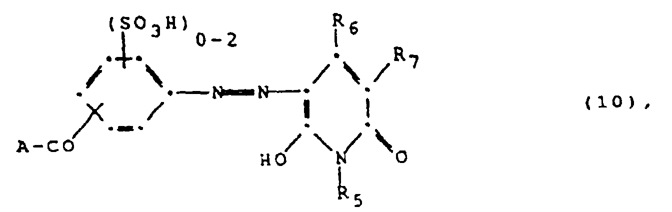 in which R₅ and R₆, independently of one another, are hydrogen, C₁-C₄alkyl or phenyl, and R₇ is hydrogen, cyano, carbamoyl or sulfomethyl; and
A is a radical of the formula (1a);
or of the formula 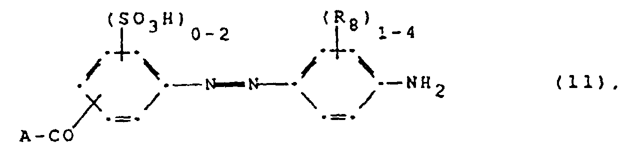 in which R₈ is 1 to 4 substituents from the group consisting of hydrogen, halogen, nitro, cyano, trifluoromethyl, sulfamoyl, carbamoyl, C₁-C₄alkyl, C₁-C₄alkoxy, amino, acetylamino, ureido, hydroxyl, carboxyl, sulfomethyl and sulfo, independently of one another; and A is a radical of the formula (1a);
or of the formula 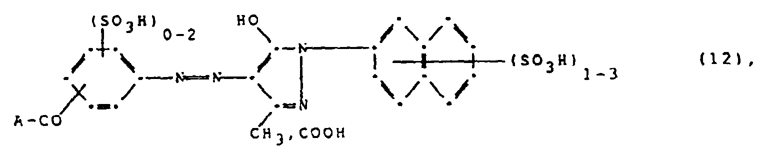 in which A is a radical of the formula (1a);
or of the formula 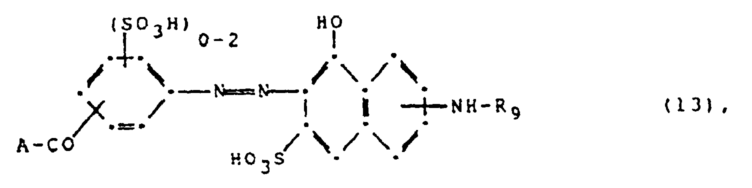 in which R₉ is C₁-C₄alkanoyl, carboxy-C₁-C₄alkanoyl, benzoyl, carboxybenzoyl or sulfobenzoyl; and A is a radical of the formula (1a);
or of the formula 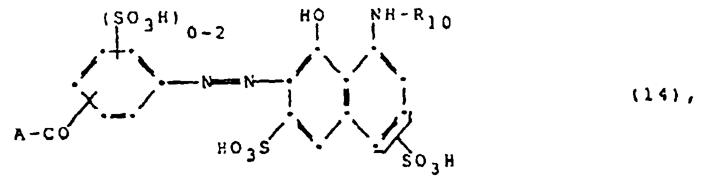 in which R₁₀ is C₁-C₄alkanoyl or benzoyl; and A is a radical of the formula (1a).

36. A reactive dye according to claim 29, of the formula 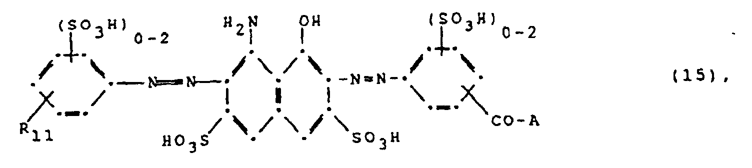 in which R₁₁ is hydrogen, β-sulfatoethylsulfonyl or vinylsulfonyl; and A is a radical of the formula (1a).

37. A reactive dye according to claim 28, of the formula 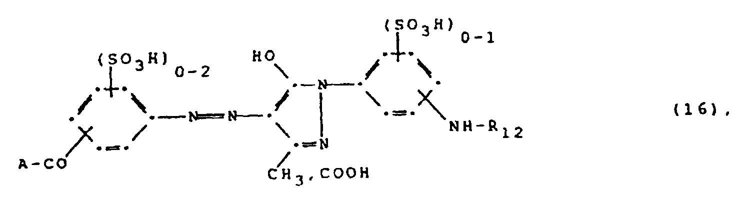 in which R₁₂ is a halotriazine or halopyrimidine radical; and A is a radical of the formula (1a);
or of the formula 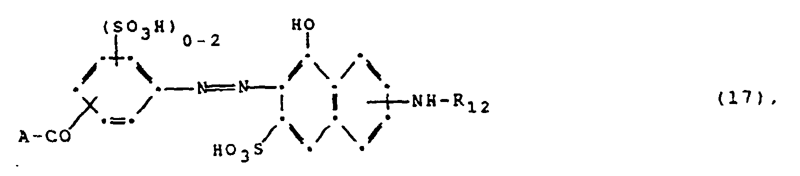 in which R₁₂ is a halotriazine or halopyrimidine radical; and A is a radical of the formula (1a);
or of the formula 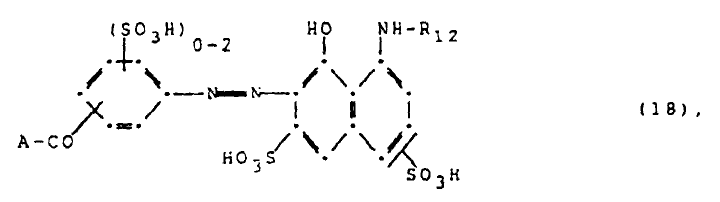 in which R₁₂ is a halotriazine or halopyrimidine radical; and A is a radical of the formula (1a);
or of the formula 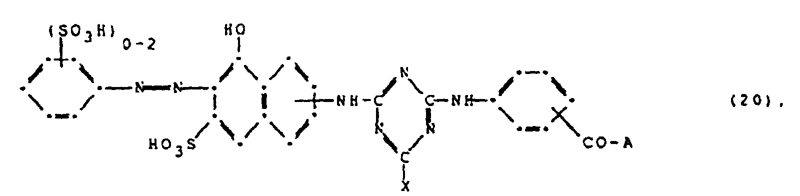 in which X is fluoro or chloro and A is a radical of the formula (1a);
or of the formula 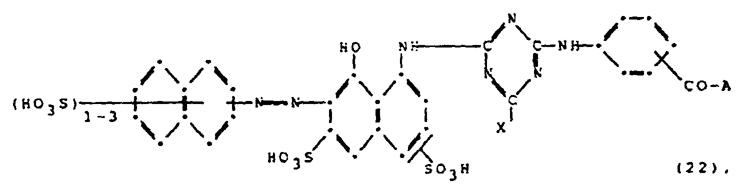 in which X is fluoro or chloro and A is a radical of the formula (1a).

38. A process for the preparation of reactive dyes of the formula (1) according to claim 20, wherein one radical or two radicals of the formula
-U-A (1c)
are introduced into an organic dye having the radical D or into a dye precursor, D, U and A being as defined under formula (1), or, in the case where dye precursors are used, the intermediates obtained are converted to the desired final dyes and a further conversion reaction is carried out if desired.

39. A compound of the formula

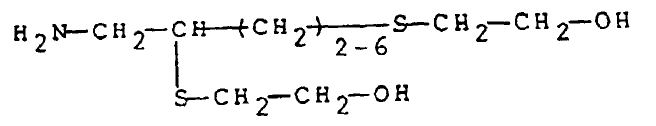

40. The compound according to claim 39 of the formula

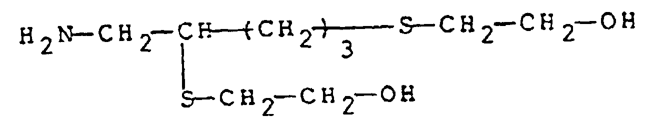

41. A compound of the formula 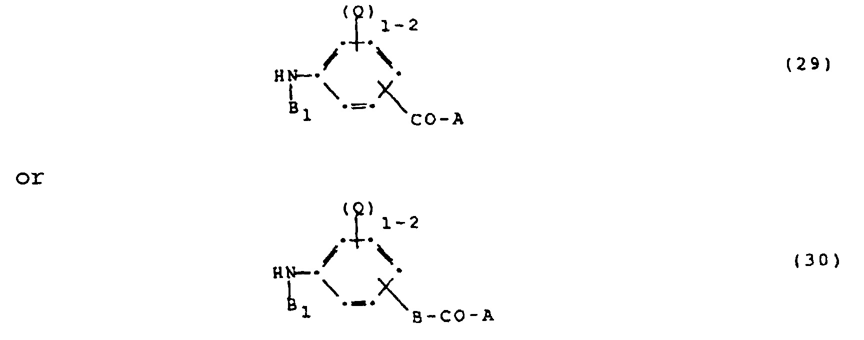 in which B is a (̵CH₂)̵ₙ or -O(̵CH₂)̵ₙ radical, where n is 1 to 6; B₁ is hydrogen or alkyl having 1 to 4 carbon atoms, which can be substituted by halogen, hydroxyl, cyano, C₁-C₄alkoxy, C₁-C₄alkoxycarbonyl, carboxyl, sulfamoyl, sulfo or sulfato; Q is 1 to 2 substituents from the group consisting of hydrogen, C₁-C₄alkyl, C₁-C₄alkoxy, halogen, carboxyl or sulfo; and A is as defined in claim 1.

42. A compound according to claim 41, of the formula 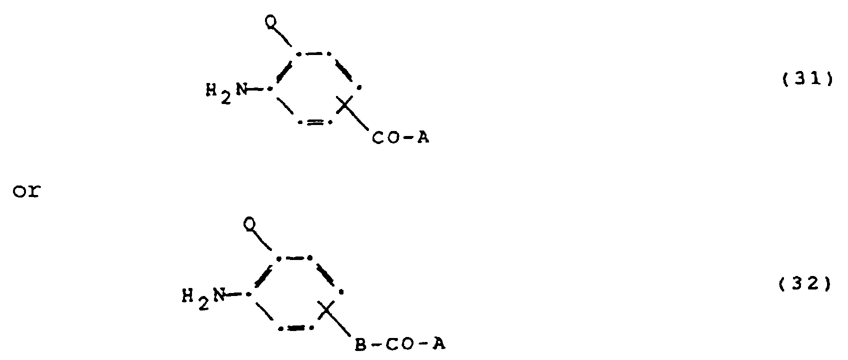 in which B, Q and A are as defined in claim 41.

43. A compound of the formula

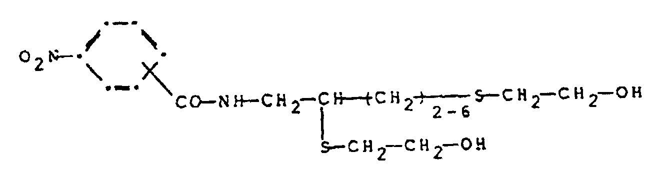

44. The compound according to claim 43 of the formula

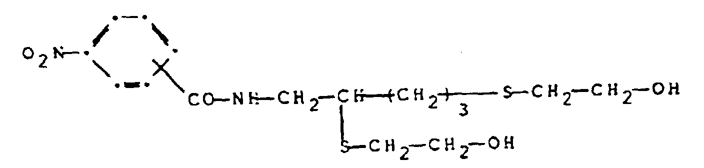

45. A process for the preparation of compounds according to claim 41, wherein a corresponding nitrophenylcarbonyl chloride or nitrophenylalkanoyl or nitrophenoxyalkanoyl chloride is condensed with an amine of the formula H-A and the nitro group is reduced to the amino group.

46. A process for the preparation of compounds according to claim 43, wherein a corresponding nitrophenylcarbonyl chloride or nitrophenylalkanoyl or nitrophenoxyalkanoyl chloride is condensed with a suitable dihaloalkylamine and the condensation product is reacted with mercaptoethanol.

47. A process for the preparation of compounds according to claim 43, wherein a corresponding nitrophenylcarbonyl chloride or nitrophenylalkanoyl or nitrophenoxyalkanoyl chloride is condensed with a bis(β-hydroxyethylthio)aminoalkane.

48. A process according to claim 47, wherein m- or p- nitrobenzoyl chloride is condensed with 2,5-bis(β-hydroxyethylthio)-1-aminopentane.

## Revendications

1. Emploi, pour la teinture ou l'impression de matières fibreuses cellulosiques, de colorants réactifs répondant à la formule
D-(U-A)₁₋₂ (1),
dans laquelle D désigne le radical d'un colorant monoazoïque, polyazoïque, complexe métal-azoïque, anthraquinonique, phtalocyanine, formazan, azométhine, dioxazinique, phénazinique, du stilbène, du triphénylméthane, du xanthène, de la thioxanthone, nitroarylique, naphtoquinonique, pyrènequinonique ou du pérylènetétracarbimide ; -U-A désigne un radical répondant à l'une des formules
-CO-A (2a),
-B-CO-A (2b), 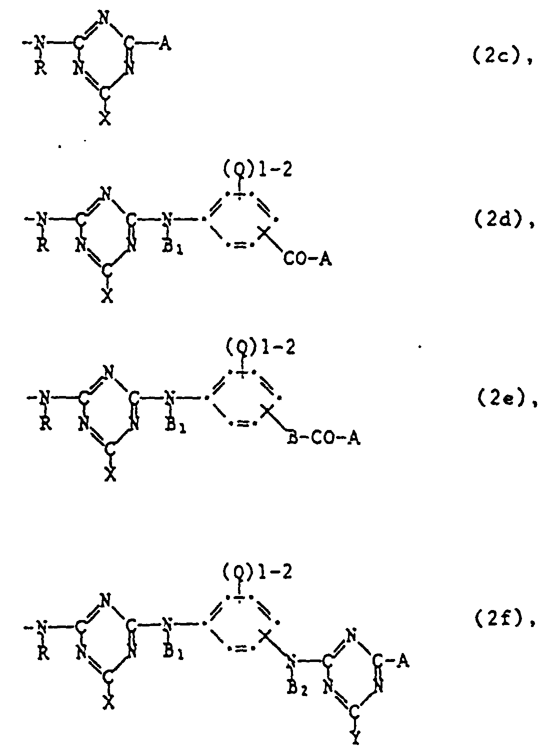
dans lesquelles B désigne un radical -(CH₂)ₙ- ou -O-(CH₂)ₙ-, n valant 1 à 6 ; R, B₁ et B₂ sont indépendamment l'un de l'autre un atome d'hydrogène ou un groupe alkyle en C₁ à C₄, qui peut être substitué par un atome d'halogène, un groupe hydroxy, cyano, alcoxy en C₁ à C₄, (alcoxy en C₁ à C₄)carbonyle, carboxy, sulfamoyle, sulfo ou sulfato ; et X et Y sont indépendamment l'un de l'autre un atome de fluor ou de chlore ; Q désigne 1 à 2 substituants choisis parmi l'atome d'hydrogène, un groupe alkyle en C₁ à C₄, alcoxy en C₁ à C₄, un atome d'halogène, un groupe carboxy ou sulfo ; et A est un substituant aminé répondant à la formule 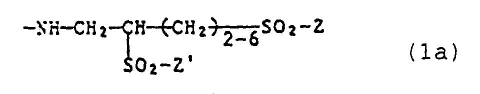 et Z et Z' sont indépendamment l'un de l'autre un groupe β-sulfatoéthyle, β-thiosulfatoéthyle, β-phosphatoéthyle, β-acyloxyéthyle, β-halogénoéthyle ou vinyle.

2. Emploi de colorants réactifs selon la revendication 1, dans lesquels A désigne un radical répondant à la formule 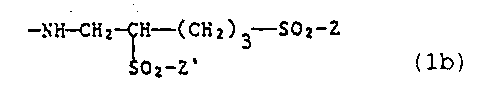 et Z est identique à Z', Z ou Z' ayant la signification indiquée à propos de la revendication 1.

3. Emploi de colorants réactifs selon la revendication 1, dans lesquels -U-A est un des radicaux répondant aux formules (2c) à (2f), R est un atome d'hydrogène, un groupe méthyle ou éthyle ; B₁ et B₂ sont des atomes d'hydrogène ; Q est un groupe sulfo ; X et Y sont des atomes de fluor ou de chlore.

4. Emploi de colorants réactifs selon la revendication 1, dans lesquels D est le radical d'un colorant mono- ou disazoïque.

5. Emploi de colorants réactifs selon la revendication 1, dans lesquels D est le radical d'un colorant complexe métal-azoïque ou d'un colorant formazan.

6. Emploi de colorants réactifs selon la revendication 1, dans lesquels D est le radical d'un colorant anthraquinonique.

7. Emploi de colorants réactifs selon la revendication 1, dans lesquels D est le radical d'un colorant phtalocyanine.

8. Emploi de colorants réactifs selon la revendication 1, dans lesquels D est le radical d'un colorant dioxazinique.

9. Emploi de colorants réactifs selon la revendication 1, dans lesquels D est un radical de colorant monoou disazoïque répondant à l'une des formules
D₁-N=N-(M-N=N)ₛ-K- (3a),
-D₁-N=N-(M-N=N)ₛ-K (3b),
ou
-D₁-N=N-(M-N=N)ₛ-K- (3c),
ou d'un complexe métallique dérivé de celles-ci ; D₁ est le radical d'un constituant diazo de la série du benzène ou du naphtalène, M est le radical d'un constituant central de la série du benzène ou du naphtalène et K est le radical d'un copulant de la série du benzène, du naphtalène, de la pyrazolone, de la 6-hydroxy-pyridone-(2) ou d'un acétoacétarylamide, D₁, M et K pouvant être substitués par des groupes alkyle en C₁ à C₄, des groupes alcoxy en C₁ à C₄, des groupes acylamino en C₁ à C₈, des groupes amino, alkylamino en C₁ à C₄, phénylamino, N,N-di-β-hydroxyéthylamino, N,N-di-β-sulfatoéthylamino, sulfobenzylamino, N,N-disulfobenzylamino, alcoxycarbonyle ayant 1 à 4 atomes de carbone dans le radical alcoxy, alkylsulfonyle en C₁ à C₄, trifluorométhyle, nitro, cyano, des atomes d'halogène, des groupes carbamoyle, N-alkylcarbamoyle ayant 1 à 4 atomes de carbone dans le radical alkyle, sulfamoyle, N-alkylsulfamoyle en C₁ à C₄, N-(β-hydroxyéthyl)-sulfamoyle, N-N-di-(β-hydroxyéthyl)-sulfamoyle, N-phénylsulfamoyle, uréido, hydroxy, carboxy, sulfométhyle ou sulfo, en particulier par des groupes hydroxy, amino, méthyle, éthyle, méthoxy ou éthoxy, des groupes alcancylamino en C₂ à C₄, des groupes benzoylamino ou des atomes d'halogène ; S est 0 ou 1 ; et D₁, M et K contiennent ensemble au moins deux groupes sulfo, de préférence trois ou quatre groupes sulfo.

10. Emploi de colorants réactifs selon la revendication 4, dans lesquels D désigne un radical de colorant disazoïque répondant à l'une des formules
D₁-N=N-K-N=N-D₂- (4a),
ou
-D₁-N=N-K-N=N-D₂- (4b),
où D₁ et D₂ sont indépendamment l'un de l'autre le radical d'un constituant diazo de la série du benzène ou du naphtalène et K est le radical d'un copulant de la série du naphtalène ; D₁, D₂ et K pouvant être substitués par des groupes alkyle en C₁ à C₄, des groupes alcoxy en C₁ à C₄, acylamino en C₁ à C₉, amino, alkylamino en C₁ à C₄, phénylamino, N,N-di-β-hydroxyéthylamino, N,N-di-β-sulfatoéthylamino, sulfobenzylamino, N,N-disulfobenzylamino, alcoxycarbonyle ayant 1 à 4 atomes de carbone dans le radical alcoxy, alkylsulfonyle en C₁ à C₄, trifluorométhyle, nitro, cyano, par des atomes d'halogène, des groupes carbamoyle, N-alkylcarbamoyle ayant 1 à 4 atomes de carbone dans le radical alkyle, sulfamoyle, N-alkylsulfamoyle en C₁ à C₄, N-(β-hydroxyéthyl)-sulfamoyle, N,N-di-(β-hydroxyéthyl)-sulfamoyle, N-phénylsulfamoyle, uréido, hydroxy, carboxy, sulfométhyle ou sulfo, en particulier par des groupes hydroxy, amino, méthyle, éthyle, méthoxy ou éthoxy, des groupes alcanoylamino en C₂ à C₄, des groupes benzoylamino ou des atomes d'halogène ; et D₁, M et K contiennent ensemble au moins deux groupes sulfo, de préférence trois ou quatre groupes sulfo.

11. Emploi de colorants réactifs selon la revendication 5, dans lesquels Dest le radical d'un complexe de cuivre 1:1 de colorant azoïque de la série du benzène ou du naphtalène, et l'atome de cuivre est lié des deux côtés à un groupe métallable en position ortho par rapport au pont azo.

12. Emploi de colorants réactifs selon la revendication 4, dans lesquels D est le radical d'un colorant formazan répondant à la formule 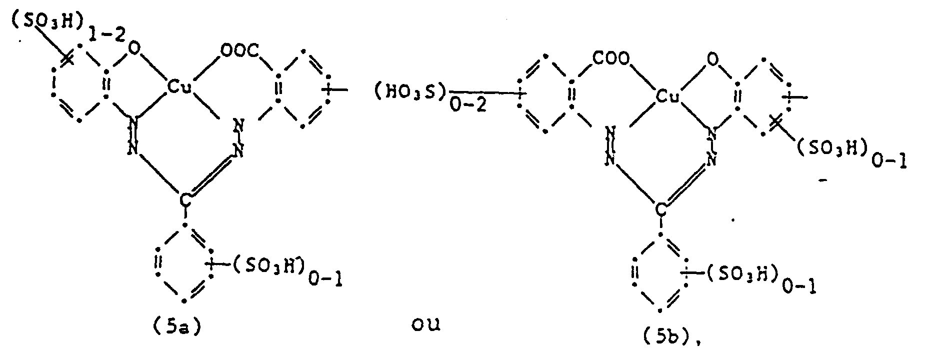 dans laquelle les noyaux benzéniques peuvent être substitués en outre par un groupe alkyle en C₁ à C₄, alcoxy en C₁ à C₄, alkylsulfonyle en C₁ à C₄, par un atome d'halogène ou un groupe carboxy.

13. Emploi de colorants réactifs selon la revendication 6, dans lesquels D est le radical d'un colorant anthraquinonique répondant à la formule 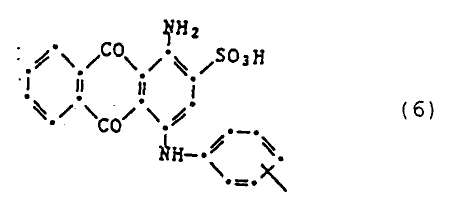 le noyau anthraquinonique pouvant être substitué par un groupe sulfo supplémentaire, et le radical phényle par un groupe alkyle en C₁ à C₄, alcoxy en C₁ à C₄, par un atome d'halogène, un groupe carboxy ou sulfo, et le colorant contenant de préférence au moins deux groupes fortement hydrosolubilisants.

14. Emploi de colorants réactifs selon la revendication 7, dans lesquels D est le radical d'un colorant phtalocyanine répondant à la formule 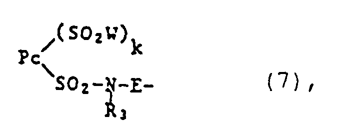 dans laquelle Pc est le radical d'une phtalocyanine de cuivre ou de nickel ; W est -OH et/ou -NR₁R₂ ; R₁ et R₂ sont indépendamment l'un de l'autre un atome d'hydrogène ou un groupe alkyle en C₁ à C₄, qui peut être substitué par un groupe hydroxy ou sulfo ; R₃ est un atome d'hydrogène ou un groupe alkyle en C₁ à C₄ ; E est un radical phénylène qui peut être substitué par un groupe alkyle en C₁ à C₄, un atome d'halogène, un groupe carboxy ou sulfo ; ou un radical alkylène en C₂ à C₆, de préférence un radical sulfophénylène ou éthylène ; et K vaut 1 à 3.

15. Emploi de colorants réactifs selon la revendication 8, dans lesquels D est le radical d'un colorant dioxazinique répondant à l'une des formules 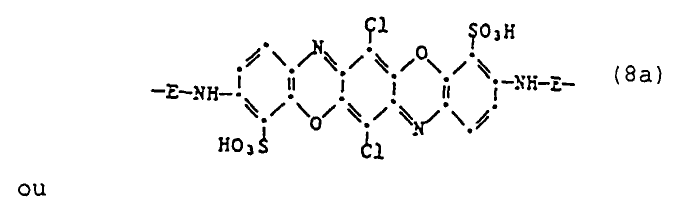 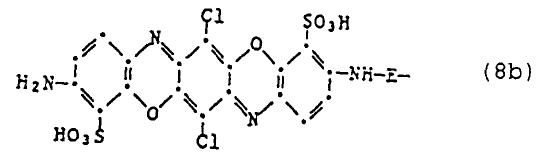 dans lesquelles E est un radical phénylène qui peut être substitué par un groupe alkyle en C₁ à C₄, un atome d'halogène, un groupe carboxy ou sulfo ; ou E est un radical alkylène en C₂ à C₆ ; et les noyaux benzéniques extérieurs des formules (8a) et (8b) peuvent encore être substitués par un groupe alkyle en C₁ à C₄, alcoxy en C₁ à C₄, acétylamino, nitro, par un atome d'halogène, un groupe carboxy ou sulfo.

16. Emploi de colorants réactifs selon la revendication 9, répondant à la formule 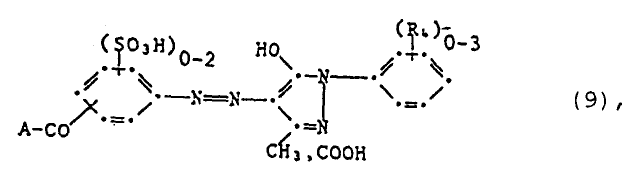 dans laquelle R₄ représente 0 à 3 substituants choisis parmi les groupes alkyle en C₁ à C₄, alcoxy en C₁ à C₄, les atomes d'halogène, les groupes carboxy et sulfo, indépendamment les uns des autres ; et A est un radical répondant à la formule (1a) ;
ou à la formule 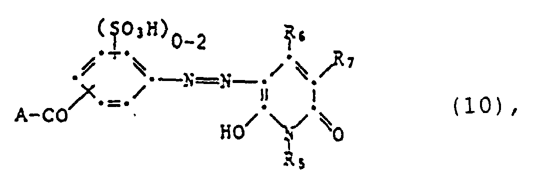 dans laquelle R₅ et R₆ sont indépendamment l'un de l'autre un atome d'hydrogène, un groupe alkyle en C₁ a C₄ ou phényle, et R₇ est un atome d'hydrogène ou un groupe cyano, carbamoyle ou sulfométhyle ; et A est un radical répondant à la formule (1a) ;
ou à la formule 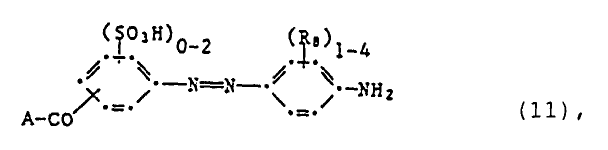 dans laquelle R₈ désigne 1 à 4 substituants choisis parmi les atomes d'hydrogène, un atome d'halogène, un groupe nitro, cyano, trifluorométhyle, sulfamoyle, carbamoyle, alkyle en C₁ à C₄, alcoxy en C₁ à C₄, amino, acétylamino, uréido, hydroxy, carboxy, sulfométhyle et sulfo, indépendamment les uns des autres ; et A est un radical répondant à la formule (1a) ;
ou à la formule 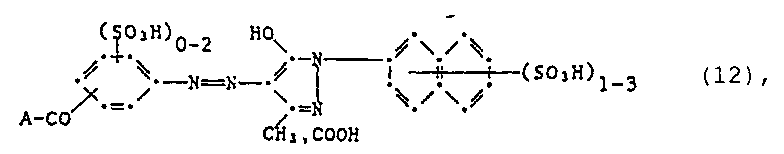 dans laquelle A est un radical répondant à la formule (1a) ;
ou à la formule 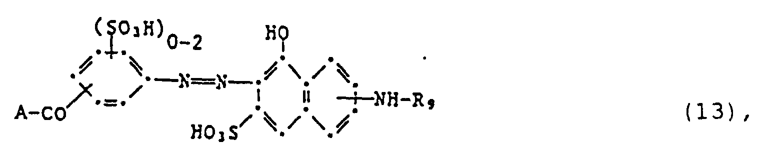 dans laquelle R₉ désigne un groupe alcanoyle en C₁ à C₄, carboxy(alcanoyle en C₁ à C₄), benzoyle, carboxybenzoyle ou sulfobenzoyle ; et A est un radical répondant à la formule (1a) ;
ou à la formule 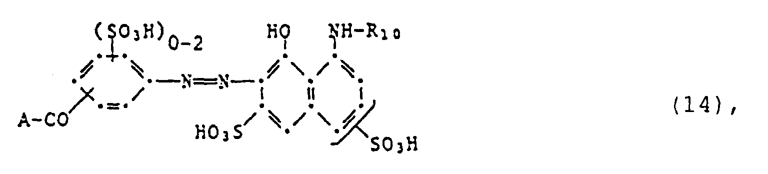 dans laquelle R₁₀ est un groupe alcanoyle en C₁ à C₄ ou benzoyle ; et A est un radical répondant à la formule (1a).

17. Emploi de colorants réactifs selon la revendication 11, répondant à la formule 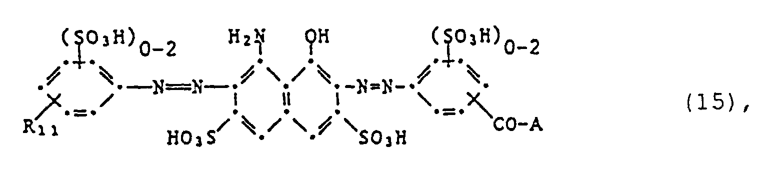 dans laquelle R₁₁ est un atome d'hydrogène, ou un groupe β-sulfatoéthylsulfonyle ou vinylsulfonyle ; et A est un radical répondant à la formule (1a).

18. Emploi de colorants réactifs selon la revendication 9, répondant à la formule 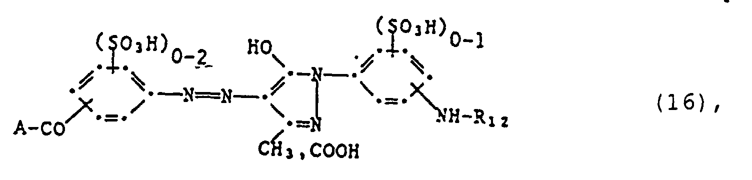 dans laquelle R₁₂ est un radical halogénotriazine ou halogénopyrimidine ; et A est un radical répondant à la formule (1a) ;
ou à la formule 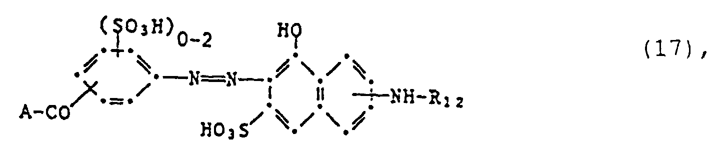 dans laquelle R₁₂ est un radical halogénotriazine ou halogénopyrimidine ; et A est un radical répondant à la formule (1a) ;
ou à la formule 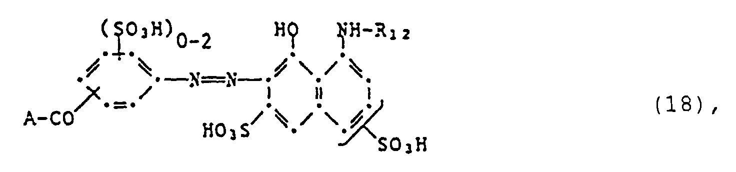 dans laquelle R₁₂ est un radical halogénotriazine ou halogénopyrimidine ; et A est un radical répondant à la formule (1a) ;
ou à la formule 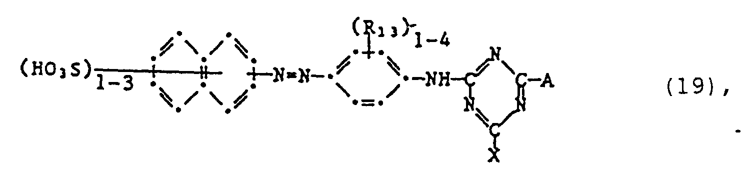 dans laquelle R₁₃ représente 1 à 4 substituants choisis parmi un atome d'hydrogène, un atome d'halogène, un groupe nitro, cyano, trifluorométhyle, sulfamoyle, carbamoyle, alkyle en C₁ à C₄, alcoxy en C₁ à C₄, amino, acétylamino, uréido, hydroxy, carboxy, sulfométhyle et sulfo, indépendamment les uns des autres ; X est un atome de fluor ou de chlore et A est un radical répondant à la formule (1a) ;
ou à la formule 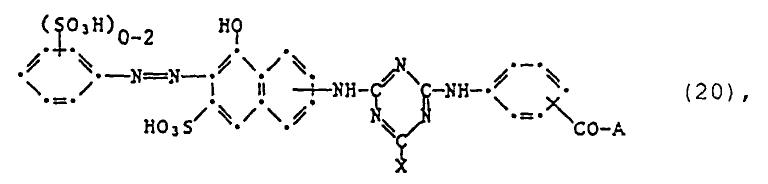 dans laquelle X désigne un atome de fluor ou de chlore et A un radical répondant à la formule (1a) ;
ou à la formule 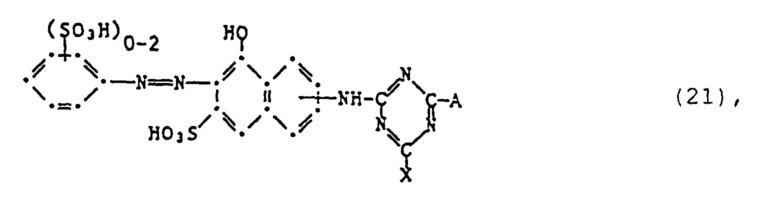 dans laquelle X représente un atome de fluor ou de chlore et A un radical répondant à la formule (1a) ;
ou à la formule 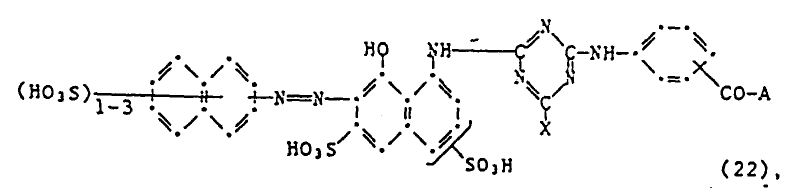 dans laquelle X est un atome de fluor ou de chlore et A est un radical répondant à la formule (1a) ;
ou à la formule 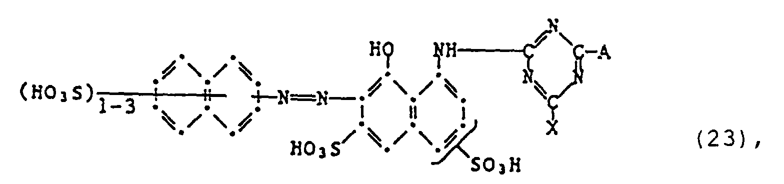 dans laquelle X représente un atome de fluor ou de chlore et A un radical répondant à la formule (1a) ;
ou à la formule 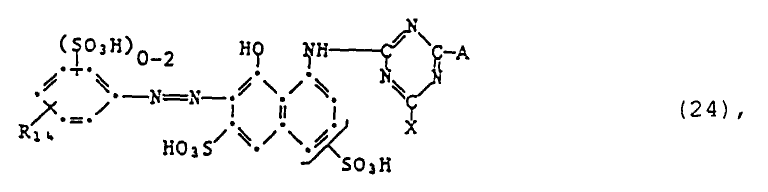 dans laquelle R₁₄ désigne un atome d'hydrogène, un groupe β-sulfatoéthylsulfonyle ou vinylsulfonyle ; X est un atome de fluor ou de chlore et A un radical répondant à la formule (1a) ;
ou à la formule 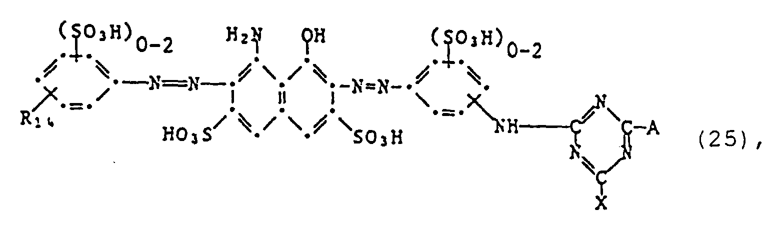 dans laquelle R₁₄ désigne un atome d'hydrogène, un groupe β-sulfatoéthylsulfonyle ou vinylsulfonyle ; X est un atome de fluor ou de chlore et A un radical répondant à la formule (1a) ;

19. Emploi selon l'une des revendications 1 à 18, pour la teinture ou l'impression du coton.

20. Colorants réactifs répondant à la formule
D(̵U-A)₁₋₂ (1),
dans laquelle D désigne le radical d'un colorant monoazoïque, polyazoïque, complexe métal-azoïque, anthraquinonique, phtalocyanine, formazan, azométhine, dioxazinique, phénazinique, du stilbène, du triphénylméthane, du xanthèse, de la thioxanthone, nitroarylique, naphtoquinonique, pyrènequinonique ou du pérylènetétracarbimide ;-U-A désigne un radical répondant à l'une des formules
-CO-A (2a),
-B-CO-A (2b), 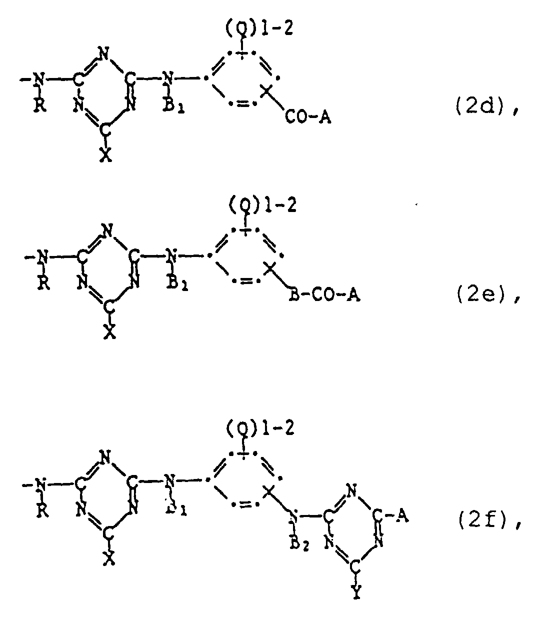
dans lesquelles B désigne un radical -(CH₂)ₙ- ou -O-(CH₂)ₙ-, n valant 1 à 6 ; R, B₁ et B₂ sont indépendamment l'un de l'autre un atome d'hydrogène ou un groupe alkyle en C₁ à C₄, qui peut être substitué par un atome d'halogène, un groupe hydroxy, cyano, alcoxy en C₁ à C₄, (alcoxy en C₁ à C₄)carbonyle, carboxy, sulfamoyle, sulfo ou sulfato ; et X et Y sont indépendamment l'un de l'autre un atome de fluor ou de chlore ; Q désigne 1 à 2 substituants choisis parmi un atome d'hydrogène, un groupe alkyle en C₁ à C₄, alcoxy en C₁ à C₄, un atome d'halogène, un groupe carboxy ou sulfo ; et A est un substituant aminé répondant à la formule 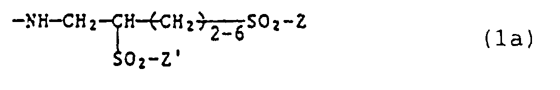 et Z et Z' sont indépendamment l'un de l'autre un groupe β-sulfatoéthyle, β-thiosulfatoéthyle, β-phosphatoéthyle, β-acyloxyéthyle, β-halogénoéthyle ou vinyle.

21. Colorants réactifs selon la revendication 20, dans lesquels A désigne un radical répondant à la formule 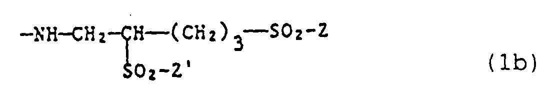 et Z est identique à Z', Z ou Z' ayant la signification indiquée dans la revendication 20.

22. Colorants réactifs selon la revendication 20, dans lesquels -U-A est un des radicaux répondant aux formules (2d) à (2f), R est un atome d'hydrogène, un groupe méthyle ou éthyle ; B₁ et B₂ sont des atomes d'hydrogène ; Q est un groupe sulfo ; X et Y sont des atomes de fluor ou de chlore.

23. Colorants réactifs selon la revendication 20, dans lesquels D est le radical d'un colorant mono- ou diazoïque.

24. Colorants réactifs selon la revendication 20, dans lesquels D est le radical d'un colorant complexe métal-azoïque ou d'un colorant formazan.

25. Colorants réactifs selon la revendication 20, dans lesquels D est le radical d'un colorant anthraquinonique.

26. Colorants réactifs selon la revendication 20, dans lesquels D est le radical d'un colorant phtalocyanine.

27. Colorants réactifs selon la revendication 20, dans lesquels D est le radical d'un colorant dioxazinique.

28. Colorants réactifs selon la revendication 20, dans lesquels D est le radical de colorant mono- ou disazoïque répondant à l'une des formules
D₁-N=N-(M-N=N)ₛ-K- (3a),
-D₁-N=N-(M-N=N)ₛ-K (3b),
ou
-D₁-N=N-(M-N=N)ₛ-K- (3c),
ou d'un complexe métallique dérivé de celles-ci ; D₁ est le radical d'un constituant diazo de la série du benzène ou du naphtalène, M est le radical d'un constituant central de la série du benzène ou du naphtalène et K est le radical d'un copulant de la série du benzène, du naphtalène, de la pyrazolone, de la 6-hydroxy-pyridone-(2) ou d'un acétoacétarylamide, D₁, M et K pouvant être substitués par des groupes alkyle en C₁ à C₄, des groupes alcoxy en C₁ à C₄, des groupes acylamino en C₁ à C₈, des groupes amino, alkylamino en C₁ à C₄, phénylamino, N,N-di-β-hydroxyéthylamino, N,N-di-β-sulfatoéthylamino, sulfobenzylamino, N,N-disulfobenzylamino, alcoxycarbonyle ayant 1 à 4 atomes de carbone dans le radical alcoxy, alkylsulfonyle en C₁ à C₄, trifluorométhyle, nitro, cyano, des atomes d'halogène, des groupes carbamoyle, N-alkylcarbamoyle ayant 1 à 4 atomes de carbone dans le radical alkyle, sulfamoyle, N-alkylsulfamoyle en C₁ à C₄, N-(β-hydroxyéthyl)-sulfamoyle, N-N-di-(β-hydroxyéthyl)-sulfamoyle, N-phénylsulfamoyle, uréido, hydroxy, carboxy, sulfométhyle ou sulfo, en particulier par des groupes hydroxy, amino, méthyle, éthyle, méthoxy ou éthoxy, des groupes alcanoylamino en C₂ à C₄, des groupes benzoylamino ou des atomes d'halogène ; S est 0 ou 1 ; et D₁, M et K contiennent ensemble au moins deux groupes sulfo, de préférence trois ou quatre groupes sulfo.

29. Colorants réactifs selon la revendication 23, dans lesquels D est le radical de colorant disazoïque répondant à l'une des formules
D₁-N=N-K-N=N-D₂- (4a),
ou
-D₁-N=N-K-N=N-D₂- (4b),
où D₁ et D₂ sont indépendamment l'un de l'autre le radical d'un constituant diazo de la série du benzène ou du naphtalène et K est le radical d'un copulant de la série du naphtalène ; D₁, D₂ et K pouvant être substitués par des groupes alkyle en C₁ à C₄, des groupes alcoxy en C₁ à C₄, acylamino en C₁ à C₈, amino, alkylamino en C₁ à C₄, phénylamino, N,N-di-β-hydroxyéthylamino, N,N-di-β-sulfatoéthylamino, sulfobenzylamino, N,N-disulfobenzylamino, alcoxycarbonyle ayant 1 à 4 atomes de carbone dans le radical alcoxy, alkylsulfonyle en C₁ à C₄, trifluorométhyle, nitro, cyano, par des atomes d'halogène, des groupes carbamoyle, N-alkylcarbamoyle ayant 1 à 4 atomes de carbone dans le radical alkyle, sulfamoyle, N-alkylsulfamoyle en C₁ à C₄, N-(β-hydroxyéthyl)-sulfamoyle, N,N-di-(β-hydroxyéthyl)-sulfamoyle, N-phénylsulfamoyle, uréido, hydroxy, carboxy, sulfométhyle ou sulfo, en particulier par des groupes hydroxy, amino, méthyle, éthyle, méthoxy ou éthoxy, des groupes alcanoylamino en C₂ à C₄, des groupes benzoylamino ou des atomes d'halogène ; et D₁, M et K contiennent ensemble au moins deux groupes sulfo, de préférence trois ou quatre groupes sulfo.

30. Colorants réactifs selon la revendication 24, dans lesquels D est le radical d'un complexe de cuivre 1:1 de colorant azoïque de la série du benzène ou du naphtalène, et l'atome de cuivre est lié des deux côtés à un groupe métallable en position ortho par rapport au pont azo.

31. Colorants réactifs selon la revendication 23, dans lesquels D est le radical d'un colorant formazan répondant à la formule 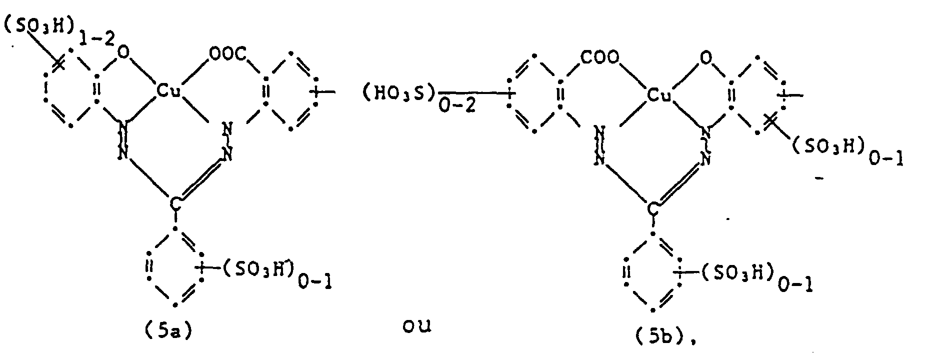 dans laquelle les noyaux benzéniques peuvent être substitués en outre par un groupe en C₁ à C₄, alcoxy en C₁ à C₄, alkylsulfonyle en C₁ à C₄, par un atome d'halogène ou un groupe carboxy.

32. Colorants réactifs selon la revendication 25, dans lesquels D est le radical d'un colorant anthraquinonique répondant à la formule 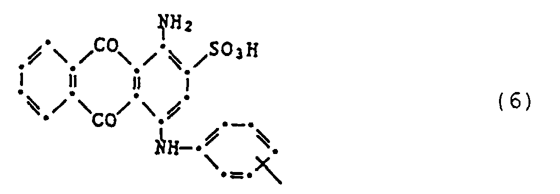 le noyau anthraquinonique pouvant être substitué par un groupe sulfo supplémentaire, et le radical phényle par un groupe alkyle en C₁ à C₄, alcoxy en C₁ à C₄, par un atome d'halogène, un groupe carboxy ou sulfo, et le colorant contenant de préférence au moins deux groupes fortement hydrosolubilisant.

33. Colorants réactifs selon la revendication 26, dans lesquels D est le radical d'un colorant phtalocyanine répondant à la formule 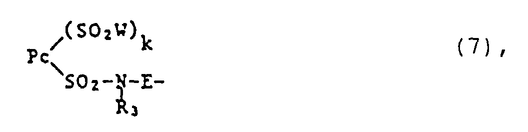 dans laquelle Pc est le radical d'une phtalocyanine de cuivre ou de nickel ; W est -OH et/ou NR₁R₂ ; R₁ et R₂ sont indépendamment l'un de l'autre un atome d'hydrogène ou un groupe alkyle en C₁ à C₄, qui peut être substitué par un groupe hydroxy ou sulfo ; R₃ est un atome d'hydrogène ou un groupe alkyle en C₁ à C₄ ; E est un radical phénylène, qui peut être substitué par un groupe alkyle en C₁ à C₄, un atome d'halogène ou un groupe carboxy ou sulfo, ou bien un radical alkylène en C₂ à C₆, et de préférence un radical sulfophénylène ou éthylène ; et K vaut 1 à 3.

34. Colorants réactifs selon la revendication 27, dans lesquels D est le radical d'un colorant dioxazinique répondant à l'une des formules 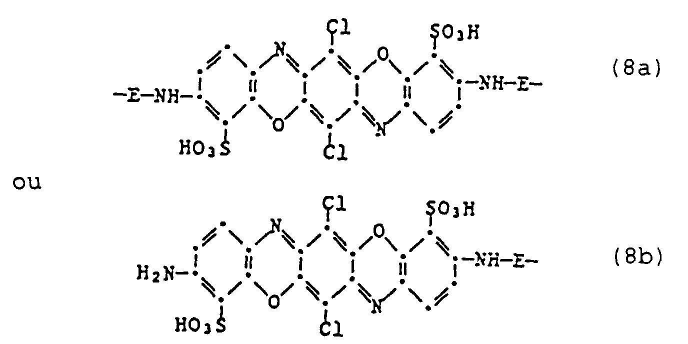 dans laquelle E est un radical phénylène qui peut être substitué par un groupe alkyle en C₁ à C₄, un atome d'halogène, un groupe carboxy ou sulfo, ou E est un radical alkylène en C₂ à C₆ ; et les noyaux benzéniques extérieurs des formules (8a) et (8b) peuvent être substitués par un groupe alkyle en C₁ à C₄, alcoxy en C₁ à C₄, acétylamino, nitro, par un atome d'halogène, un groupe carboxy ou sulfo.

35. Colorants réactifs selon la revendication 28, répondant à la formule 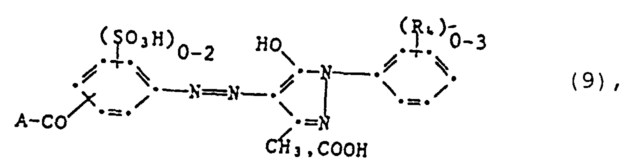 dans laquelle R₄ représente 0 à 3 substituants choisis parmi les groupes alkyle en C₁ à C₄, alcoxy en C₁ à C₄, les atomes d'halogène, un groupe carboxy et sulfo, indépendamment les uns des autres ; et A est un radical répondant à la formule (1a) ;
ou à la formule 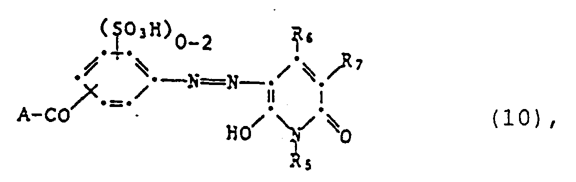 dans laquelle R₅ et R₆ sont indépendamment l'un de l'autre un atome d'hydrogène, un groupe alkyle en C₁ à C₄ ou phényle, et R₇ est un atome d'hydrogène ou un groupe cyano, carbamoyle ou sulfométhyle ; et A est un radical répondant à la formule (1a) ;
ou à la formule 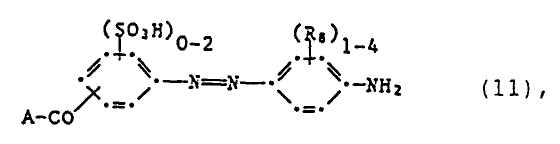 dans laquelle R₈ désigne 1 à 4 substituants choisis parmi un atome d'hydrogène, un atome d'halogène, un groupe nitro, cyano, trifluorométhyle, sulfamoyle, carbamoyle, alkyle en C₁ à C₄, alcoxy en C₁ à C₄, amino, acétylamino, uréido, hydroxy, carboxy, sulfométhyle et sulfo, indépendamment les uns des autres ; et A est un radical répandant à la formule (1a) ;
ou à la formule 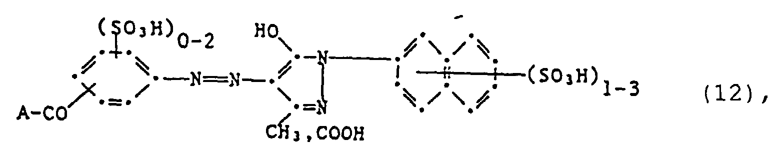 dans laquelle A est un radical répondant à la formule (1a) ;
ou à la formule 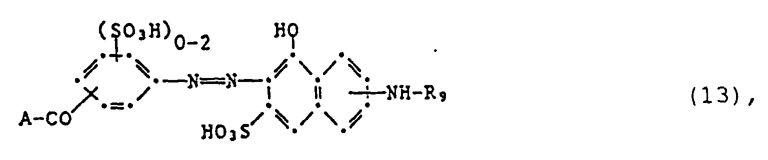 dans laquelle R₉ est un groupe alcanoyle en C₁ à C₄, carboxy(alcanoyle en C₁ à C₄), benzoyle, carboxybenzoyle ou sulfobenzoyle ; et A est un radical répondant à la formule (1a) ;
ou à la formule 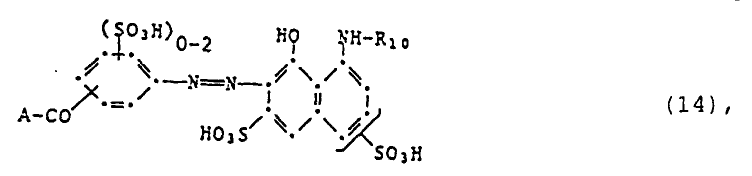 dans laquelle R₁₀ est un groupe alcanoyle en C₁ à C₄ ou benzoyle ; et A est un radical répondant à la formule (1a).

36. Colorants réactifs selon la revendication 29, répondant à la formule 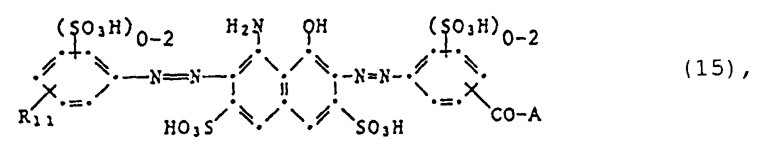 dans laquelle R₁₁ est un atome d'hydrogène, un groupe β-sulfatoéthylsulfonyle ou vinylsulfonyle ; et A est un radical répondant à la formule (1a).

37. Colorants réactifs selon la revendication 28, répondant à la formule 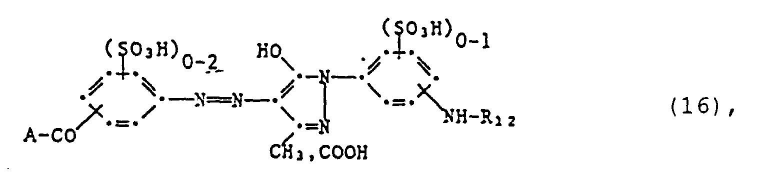 dans laquelle R₁₂ est un radical halogénotriazine ou halogénopyrimidine ; et A est un radical répondant à la formule (1a) ;
ou à la formule 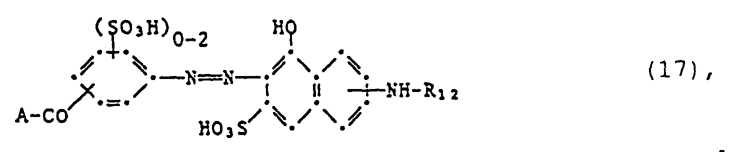 dans laquelle R₁₂ est un radical halogénotriazine ou halogénopyrimidine ; et A est un radical répondant à la formule (1a) ;
ou à la formule 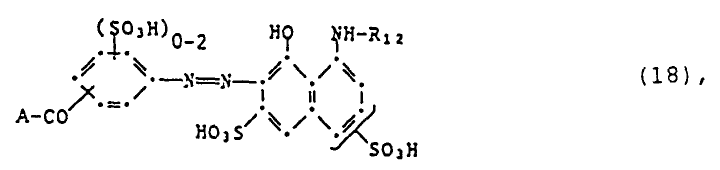 dans laquelle R₁₂ est un radical halogénotriazine ou halogénopyrimidine ; et A est un radical répondant à la formule (1a) ;
ou à la formule 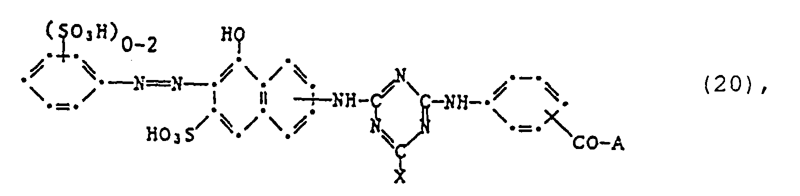 dans laquelle X désigne un atome de fluor ou de chlore, et A est un radical répondant à la formule (1a) ;
ou à la formule 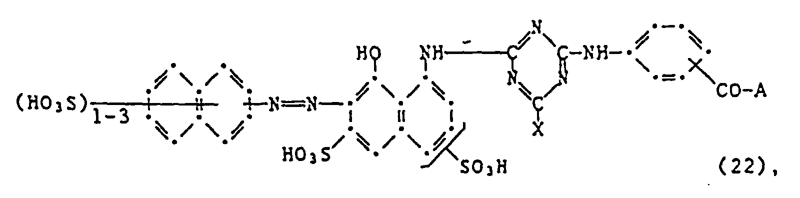 dans laquelle X désigne un atome de fluor ou de chlore, et A est un radical répondant à la formule (1a).

38. Procédé de préparation de colorants réactifs répondant à la formule (1) selon la revendication 20, caractérisé en ce qu'on introduit, dans un colorant organique portant le radical D ou dans un précurseur de colorant, un radical ou deux radicaux répondant à la formule
-U-A (1c)
D, U et A ayant les significations indiquées à propos de la formule (1), ou en ce que, dans le cas de l'utilisation de précurseurs de colorant, on transforme les produits intermédiaires obtenus en les colorants finaux souhaités, et on effectue ensuite, le cas échéant, une autre réaction de transformation.

39. Composés répondant à la formule

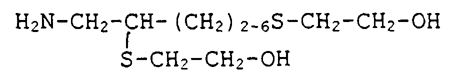

40. Composé selon la revendication 39, répondant à la formule

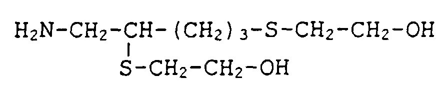

41. Composés répondant aux formule 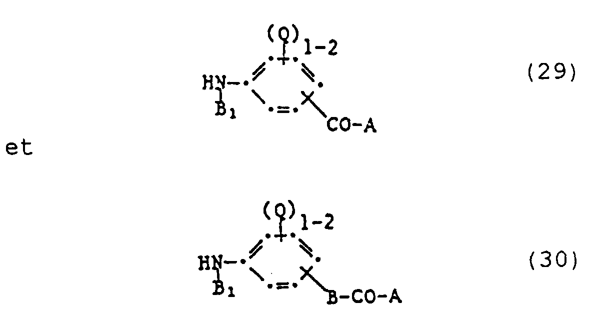 dans lesquelles B est un radical -(CH₂)ₙ- ou -O-(CH₂)ₙ-, n vaut 1 à 6 ; B₁ est un atome d'hydrogène ou un groupe alkyle en C₁ à C₄, qui peut être substitué par un atome d'halogène, un groupe hydroxy, cyano, alcoxy en C₁ à C₄, (alcoxy en C₁ à C₄)carbonyle, carboxy, sulfamoyle, sulfo ou sulfato ; Q représente 1 à 2 substituants choisis parmi un atome d'hydrogène, un groupe alkyle en C₁ à C₄, alcoxy en C₁ à C₄, un atome d'halogène, un groupe carboxy ou sulfo ; et A a la signification indiquée dans la revendication 1.

42. Composés selon la revendication 41, répondant aux formules 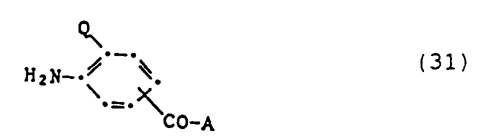 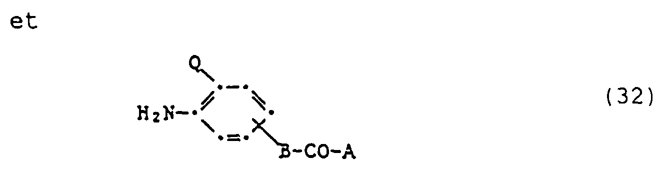 dans lesquelles B, Q et A ont les significations indiquées dans la revendication 41.

43. Composés répondant à la formule

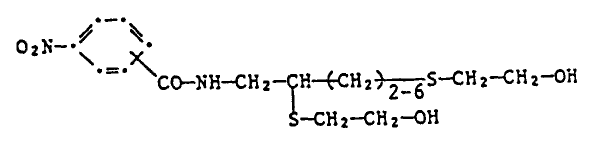

44. Composé selon la revendication 43, répondant à la formule

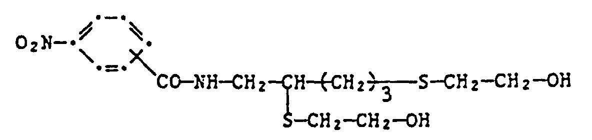

45. Procédé de préparation de composés selon la revendication 41, caractérisé en ce qu'on condense un chlorure d'acide nitrophényl-carboxylique ou un chlorure d'acide nitrophényl- ou nitrophénoxy-alcanecarboxylique approprié avec une amine répondant à la formule H-A et en ce qu'on réduit le groupe nitro en groupe amino.

46. Procédé de préparation de composés selon la revendication 43, caractérisé en ce qu'on condense un chlorure d'acide nitrophényl-carboxylique ou un chlorure d'acide nitrophényl- ou nitrophénoxy-alcanecarboxylique approprié avec une dihalogéno-alkylamine appropriée et en ce qu'on fait réagir le produit de condensation avec du mercaptoéthanol.

47. Procédé de préparation de composés selon la revendication 43, caractérisé en ce qu'on condense un chlorure d'acide nitrophényl-carboxylique ou un chlorure d'acide nitrophényl- ou nitrophénoxy-alcanecarboxylique avec un bis-β-hydroxyéthylthio-aminoalcane.

48. Procédé selon la revendication 47, caractérisé en ce qu'on condense un chlorure de m- ou p-nitrobenzoyle avec du 2,5-bis-β-hydroxyéthylthio-1-aminopentane.
